(19) **Europäisches Patentamt**

**European Patent Office**

**Office européen des brevets**

(11) **EP 1 519 383 A1**

(12) **EUROPEAN PATENT APPLICATION**

(43) Date of publication:
**30.03.2005 Bulletin 2005/13**

(51) Int Cl.⁷: **G11B 27/10, H04N 5/76, H04N 7/24**

(21) Application number: **04022331.5**

(22) Date of filing: **20.09.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **25.09.2003 JP 2003334411**

(71) Applicant: **Kabushiki Kaisha Toshiba**
**Tokyo 105-8001 (JP)**

(72) Inventors:
• **Kikuchi, Shinichi**
**Minato-ku Tokyo 105-8001 (JP)**
• **Nakashika, Masahiro**
**Minato-ku Tokyo 105-8001 (JP)**
• **Tsumagari, Yasufumi**
**Minato-ku Tokyo 105-8001 (JP)**

(74) Representative: **Henkel, Feiler & Hänzel**
**Möhlstrasse 37**
**81675 München (DE)**

(54) **Information recording medium, information recording method, information reproducing method, information recording apparatus and information reproducing apparatus**

(57)     An information recording medium comprises a data area (30, 134, 140) for recording a emergency broadcasting program, and a management area (20, 21) for recording management information of the emergency broadcasting program. A information reproducing apparatus comprises means for determining whether or not the management information of the emergency broadcasting program has been recorded in the management area, means for searching the emergency broadcasting program recorded in the data area when it is determined that the management information of the emergency broadcasting program is recorded in the management area, and means for displaying a search result of the searching means.

FIG.23

**Description**

The present invention relates to an information recording medium (or a data structure), an information recording/reproducing method, and an information recording/reproducing apparatus which are suitable for recording/reproducing digital stream signals (e.g., MPEG-TS) for use in satellite digital TV broadcasting, terrestrial digital TV broadcasting and the like.

In recent years, TV broadcasting has thrust into the age of digital broadcasting in which high vision programs are major broadcasting contents. Transport streams of MPEG (hereinafter appropriately abbreviated as the MPEG-TS) have been adopted in currently performed digital TV broadcasting. It is considered that the MPEG-TS will also be normally used from now on in fields of digital broadcasting using motion pictures.

Following start of the digital TV broadcasting, there have been rising market needs for streamers capable of recording the'contents (without being subjected to digital/analog conversion) of the digital TV broadcasting as such. As a representative streamer currently available on the market, which records digital broadcasting data (MPEG-TS, etc.) as such, there has been a video cassette recorder (D-VHS streamer) referred to as D-VHS (registered trademark).

To stream-record the digital broadcasting data, the MPEG-TS of the digital broadcasting received by a tuner system (a set top box referred to as the STB in many cases) is input into the D-VHS streamer via an IEEE 1394 cable, and recorded in a D-VHS tape. Here; the IEEE 1394 is a standard of an interface, commands are exchanged, and data is transmitted/received.

Moreover, to reproduce broadcasting data, recording data (MPEG-TS, etc.) is read from a recorded D-VHS tape by the D-VHS streamer, and the read MPEG-TS is sent to a data extended part in the STB via the IEEE 1394 cable. Reproduction is performed in this manner.

Since broadcasted bit streams are recorded as such in the tape in the D-VHS streamer, it is also possible. to multiplex and record a plurality of programs in the tape. Therefore, at the time of reproduction of the multiplexed and recorded program, even when the program is reproduced from the beginning or middle, the D-VHS streamer sends all the data as such to the STB. In this case, a user operates the STB to select and reproduce a desired program from the plurality of multiplexed and recorded programs.

Moreover, the tape is used in an information recording medium in the D-VHS streamer. Therefore, even when there is not any problem in sequential playback, the recorded contents cannot be accessed at random. Therefore, it is difficult to quickly jump to a desired position in the desired recorded program and to playback the program (difficulty in special playback).

Separately from the D-VHS, in recent years, a set top box STB utilizing a hard disk drive HDD has appeared as the streamer of the digital TV broadcasting on the market. In this streamer, stream data is stored in the HDD, and superior random accessibility is realized. However, in this apparatus, the user cannot easily replace the HDD. Therefore, this is not suitable for storing a large amount of recorded data in a library or the like for a long period.

As powerful answers to a problem (non-ease of random access/difficulty in special playback) of the D-VHS and a problem (non-ease of media replacement) of the HDD, a streamer utilizing large-volume disk media such as DVD-RAM currently available on the market is considered.

In the digital broadcasting, emergency broadcasting is performed in the case of emergencies such as earthquake in some case. In this case, information indicating that the broadcasting is emergency warning broadcasting and a broadcasting object region are sent using an emergency information descriptor. In a case where digital TV or the like is constantly turned on, and there is a function of obtaining program specific information (PSI) in an idle-time for a purpose of preparation of an electronic program guide EPG, when the emergency information descriptor is input, power supply is turned on from a standby state, so that the emergency broadcasting can be displayed. This is recommended in a standard (ARIB) of the digital broadcasting, but this is not mandatory. Further, an operation of a recorder is not defined at all. There is a conventional technique of recording the emergency broadcasting according to the recommendation (see, for example, Japanese Patent Application KOKAI Publication No. 2002-374219).

Here, it is only described that on receiving emergency information, the received emergency information is simply recorded in an internal temporary storage device such as an HDD, and any format for recording the information at the time of the recording is not described. Additionally, a built-in HDD is described as an example of recording media, and any process for recording the information in disk media to be insertably taken out, or any format for actually recording the information is not described.

An object of the present invention is to efficiently record/reproduce emergency information in a predetermined format.

Another object is to inform a user of a fact that there has been an emergency broadcasting when the user turns on a power supply (and tries to watch TV), to thereby prevent the emergency broadcasting from being missed.

According to an embodiment of the present invention, an information recording medium which records a digital stream signal of a digital broadcasting system capable of broadcasting an emergency broadcasting program, the medium comprises:

a data area for recording the emergency broadcasting program; and
a management area for recording management information of the emergency broadcasting program.

According to another embodiment of the present invention, an information recording apparatus which records information in an information recording medium in which a digital stream signal of a digital broadcasting system capable of broadcasting an emergency broadcasting program is recorded, the medium comprising a data area for recording the emergency broadcasting program, and a management area for recording management information of the emergency broadcasting program, the apparatus comprises:

means for detecting the emergency broadcasting program in the digital broadcasting; and
means for recording the emergency broadcasting program in the data area, and recording the management information indicating that the emergency broadcasting program has been recorded in the management area, when the detecting means detects the emergency broadcasting program.

According to still another embodiment.of the present invention, an information recording method which records information in an information recording medium in which a digital stream signal of a digital broadcasting system capable of broadcasting an emergency broadcasting program is recorded, the medium comprising a data area for recording the emergency broadcasting program, and a management area for recording management information of the emergency broadcasting program, the method comprises the steps of:

detecting the emergency broadcasting program in the digital broadcasting; and
recording the emergency broadcasting program in the data area, and recording the management information indicating that the emergency broadcasting program has been recorded in the management area, when the detecting step detects the emergency broadcasting program.

According to further embodiment of the present invention, an information reproducing apparatus which reproduces information from an information recording medium in which a digital stream signal of a digital broadcasting system capable of broadcasting an emergency broadcasting program is recorded, the medium comprising a data area for recording the emergency broadcasting program, and a management area for recording management information of the emergency broadcasting program, the apparatus comprises:

means for determining whether or not the management information of the emergency broadcasting program has been recorded in the management area, when a power supply of the whole apparatus is turned on;
means for searching the emergency broadcasting program recorded in the data area when it is determined that the management information of the emergency broadcasting program is recorded in the management area; and
means for displaying a search result of the searching means.

According to still another embodiment of the present invention, an information reproducing method which reproduces information from an information recording medium in which a digital stream signal of a digital broadcasting system capable of broadcasting an emergency broadcasting program is recorded, the medium comprising a data area for recording the emergency broadcasting program, and a management area for recording management information of the emergency broadcasting program, the'method comprises the steps of:

determining whether or not the management information of the emergency broadcasting program has been recorded in the management area, when a power supply of the whole apparatus is turned on;
searching the emergency broadcasting program recorded in the data area when it is determined that the management information of the emergency broadcasting program'is recorded in the management area; and
displaying a search result of the searching steps.

This summary of the invention does not necessarily describe all necessary features so that the invention may also be a sub-combination of these described features.
The invention can be more fully understood from the following detailed description when taken in conjunction with the accompanying drawings, in which:

FIGS. 1A, 1B, 1C, 1D, 1E, 1F, 1G, 1H, and 1I are explanatory views of a data structure according to one embodiment of the present invention;
FIG. 2 is an explanatory view of a relation among a presentation control information layer 10, a stream object control information layer 20, and a stream object layer 30 in a data structure according to one embodiment of the present invention;

FIG. 3 is a diagram showing a constitution of a directory DVD_HDVR of DVD specifications for a digital broadcasting;

FIG. 4 is an explanatory view of an example of constitution of HDVR_VMG which is one piece of management information recorded in an AV data management information recording area 130 shown in FIG. 1D;

FIG. 5 is an explanatory view of an example of constitution of a stream file information table (STR_FIT) 1320 of FIG. 4;

FIG. 6 is a diagram of an example of constitution of stream file information table information (STR_FITI) 1321 and stream file (STR_FI) 1322;

FIG. 7 is a diagram showing an example of constitution of stream object information (SOBI) 13223;

FIG. 8 is a diagram showing an example of constitution of stream object information general information (SOBI_GI) 132231;

FIG. 9 is a diagram showing an example of constitution of (SOB_ESI) 132232 on a video elementary stream;

FIG. 10 is a diagram showing an example of constitution of (SOB_ESI) 132232 on an audio elementary stream;

FIG. 11 is a diagram showing an example of constitution of (SOB_ESI) 132232 on another elementary stream;

FIG. 12 is a diagram showing an example of constitution of stream object time map information (SOB_TMAPI) 132236;

FIG. 13 is a diagram showing an example of constitution of stream object elementary stream grouping information (SOB_ES_GPI) 132337;

FIG. 14 is a diagram showing an example of constitution of ES grouping information (ES_GPI) 1323373;

FIGS. 15A, 15B, and 15C are diagrams showing examples of constitutions of a video attribute V_ATR, an audio attribute A_ATR, and copy control information CP_CTRL_INFO, respectively;

FIG. 16 is a diagram showing an example of constitution of stream object time map general information (SOB_TMAP_GI) 1322361;

FIG. 17 is a diagram showing an example of constitution of elementary stream time map general information (ES_TMAPI_GI) 13223621;

FIG. 18 is a diagram showing an example of constitution of a stream object unit entry (SOUB_ENT) 13223622;

FIG. 19 is a diagram showing an example of constitution of original program chain information (ORG_PGC) and user defined program chain information (UD_PGC);

FIG. 20 is a diagram showing an example of constitution of program chain general information (PGC_GI) 1331 in the program chain information;

FIG. 21 is a diagram showing a constitution of a packet group;

FIG. 22 is a diagram showing an example of constitution of an arrival time (ATS) 152 of a packet included in a packet group header;

FIG. 23 is a block diagram showing an example of an apparatus which records/plays back AV information in an information recording medium utilizing a data structure according to one embodiment of the present invention;

FIG. 24 is a flowchart showing an operation at a standby time;

FIG. 25 is a flowchart showing an operation of a usual process;

FIG. 26 is a flowchart showing an operation of an edition process;

FIG. 27 is a flowchart showing an operation of an emergency broadcasting program detection process;

FIGS. 28A and 28B are a flowchart showing an operation of a recording process;

FIG. 29 is a flowchart showing an operation of a buffer take-in process;

FIG. 30 is a diagram showing an example of a packet group;

FIGS. 31A and 31B are a flowchart showing an operation of a recording preprocess;

FIG. 32 is a flowchart showing an operation of an ESI preparation process;

FIG. 33 is a flowchart showing an operation of an STR_FI preparation process;

FIG. 34 is a flowchart showing an operation of an SOB structure setting process;

FIG. 35 is a flowchart showing a copy control information preparation process;

FIG. 36 is a flowchart showing an operation of a PGC preparation process;

FIG. 37 is a flowchart showing an operation of a playback process;

FIG. 38 is a flowchart showing an operation of a cell playback process;

FIG. 39 is a flowchart showing an operation of a buffer data decoder transfer process;

FIG. 40 is a flowchart showing an operation of a time search process;

FIG. 41 is a flowchart showing an operation of a menu process;

FIG. 42 is a diagram showing an example of a menu screen;

FIG. 43 is a flowchart showing an operation of an emergency broadcasting display process; and

FIG. 44 is a diagram showing an example of an emergency broadcasting display screen.

An embodiment of the present invention will now be described with reference to the accompanying drawings. Expression "and/or" is used in the present specification, intending to indicate a case of "A and B" or a case of "A or B". An optical disk of DVD-VR specifications will be described as an example of a storage medium. To record emergency broadcasting information in the DVD-VR specifications, it is considered that information indicating emergency broadcasting be stored in stream object management information (SOBI) which is management information.

First Embodiment

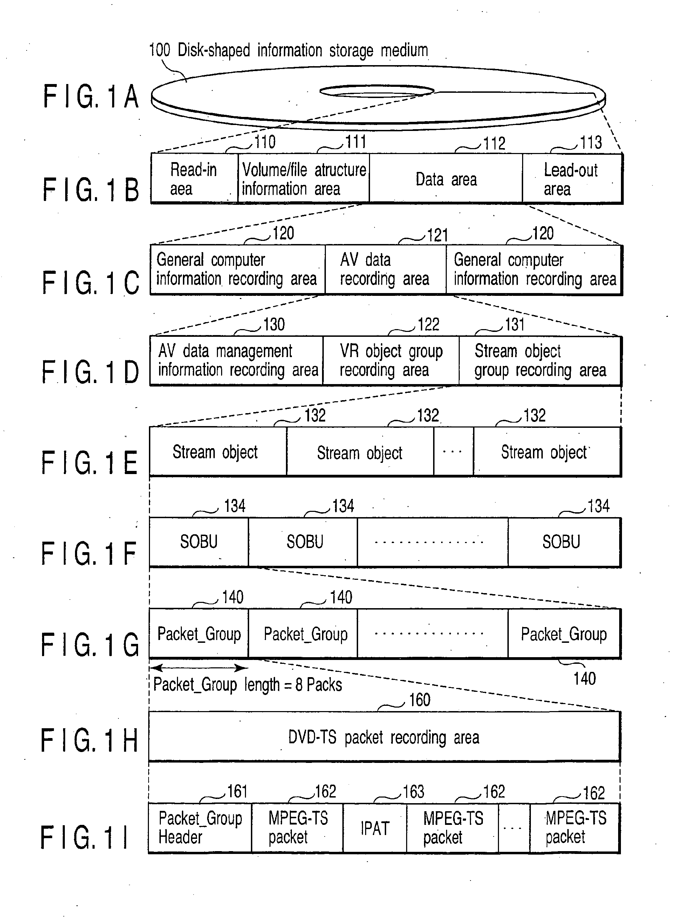

FIGS. 1A to 1I are diagrams showing constitutions of an information recording medium, an information recording method, and an information reproducing method according to a first embodiment of the present invention.

In a digital TV broadcasting, or a broadcasting using a cable such as internet, compressed motion 'pictures are broadcasted (distributed). A transport stream (TS) which is a common basic format is divided into a management data part of a packet, and payload. In the payload, data of an object to be played back is included in a scrambled state. On the other hand, according to Association of Radio Industries and Businesses (ARIB) which is one of digital broadcasting systems, a program association table PAT, a program map table PMT, or service information SI is not scrambled. Here, various management information can be prepared utilizing contents of the PMT and SI (SDT: service description table, EIT: event information table, BAT: bouquet association table).

Examples of a playback object of digitally broadcasted contents include MPEG video data, Dolby AC3(R) audio data, MPEG audio data, data broadcasting data and the like. The digital broadcasted contents also include information (program information, etc.) required for the playback, such as PAT, PMT, and SI, although they are not related to any direct playback object. The PAT includes packet identification information PID of the PMT for each program. Furthermore, the PID of the video or audio data is recorded in the PMT.

For example, there is the following usual playback procedure in a set top box STB or the like. That is, for example, when the user determines a program by electronic program guide EPG information, the PAT is read at a start time of the target program, the PID of the PMT belonging to.the desired program is determined based on the data, and the target PMT is read in accordance with the PID to determine the PID of a video or audio packet to be received, which is included in the PMT. Moreover, attributes of video and/or audio is read by the PMT or SI, and set into each decoder, and the video and/or audio data is cut out in accordance with the PID to perform the playback. Here, the PAT, PMT, SI and the like are transmitted every several hundreds of milliseconds for use also during playback.

With regard to these data, it is more advantageous to record the broadcasted data as such as digital data in recording the data in disk media such as DVD-RAM and the like. In the present embodiment, stream recording (SR) has been proposed as a format for recording the stream as such, which is different from the existing video recording (VR) format. In the SR proposed in the present embodiment, the existing stream recording (SR) is merged with video recording (VR). The SR is adapted for the stream recording of the digital broadcasting, while utilizing the existing VR resource.

An embodiment of the present invention based on the above-described stream recording will be described hereinafter in detail with reference to the drawings,

FIGS. 1A to 1I are explanatory views of a data structure according to one embodiment of the present invention. Examples of a disc-shaped information storage medium 100 (FIG. 1A) include recordable optical disks such as DVD-RAM, DVD-RW, and DVD-R, and recordable magnetic disks such as a hard disk and the like. Optical disks such as DVD-RAM and the like will be described as the examples.

The optical disk 100 has a lead-in area 110, a volume/file structure information area 111, a data area 112, and a lead-out area 113 from an inner peripheral side toward an outer peripheral side thereof (FIG. 1B). A file system is stored in the volume/file structure information area 111. The file system comprises information indicating a file and a place where the file is recorded. Recorded contents are stored in the data area 112 (FIG. 1C).

The data area 112 is divided into a general computer information recording area 120 and an AV data recording area 121. The AV data recording area 121 comprises an AV data management information recording area 130 in which a file (VMG/ESMG file) for managing AV data is recorded, a VR object group recording area 122 in which an object data (VOBS) file (VRO file) of video recording specifications is recorded, and a stream object group recording area 131 in which a stream object set (SOBS) corresponding to the digital broadcasting is recorded (FIG. 1D). That is, in the embodiment, stream objects of the digital broadcasting are recorded as the stream object,set SOBS which is a file separate from a VR object (FIG. 1E).

The SOBS comprises one or more stream objects (SOBs) 132. Each stream object (SOB) 132 comprises a set of one or more stream object units (SOBUs) 134 which are data units constituting access units to the disk 100. Each stream object unit (SOBU) 134 comprises a set of one or more packet groups (Packet_Groups) 140 comprising a set of a plurality of TS packets (FIG. 1G).

In the embodiment, each packet group 140 comprises a set of eight logical blocks (LBs). When one LB has a size of 2 Kbytes, a size of each packet group 140 is 16 Kbytes, and the group is recorded in the disk by this unit.

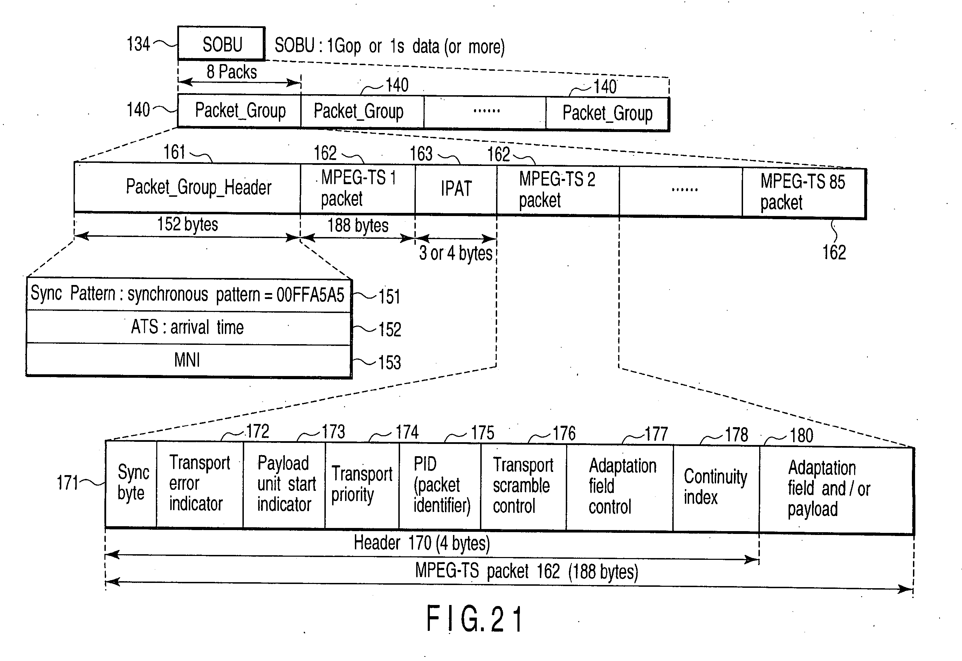

Each packet group 140 constitutes a packet recording area (DVD-TS packet recording area) 160 in extended stream recording (ESR) provided by the present embodiment (FIG. 1H). The DVD-TS packet recording area 160 can comprise a packet group header 161, a plurality of (e.g., 85) MPEG-TS packets 162, and a plurality of (e.g., 84 pieces of) incremental packet arrival time information (IPAT) 163 (FIG. 1I). The contents of the packet group 140 will be described later with reference to FIG. 21.

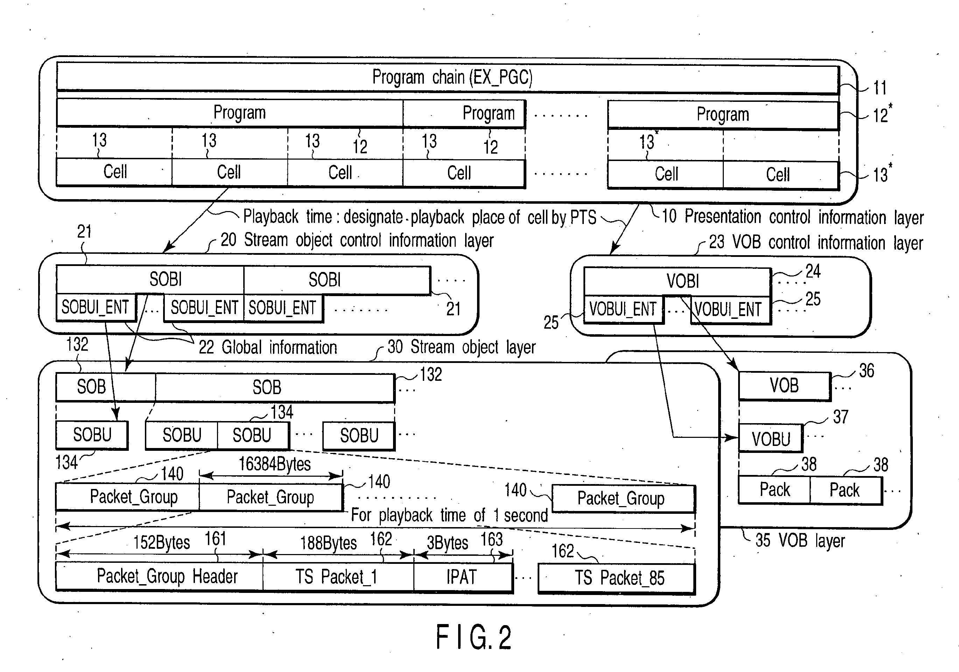

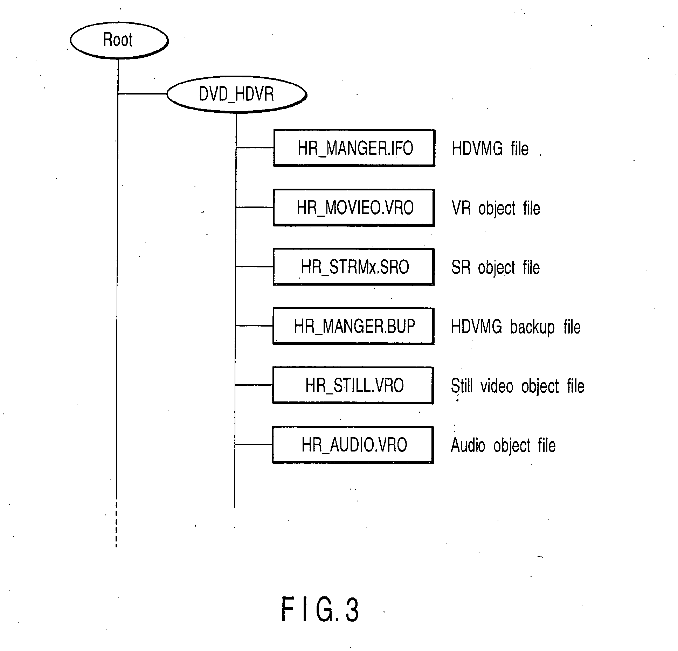

Here, DVD-Video (ROM Video) has a directory VIDEO-TS, DVD-RTR (recording/reproducing DVD) has a directory DVD-RTAV, and the directories are separated for each format in this manner. In the DVD specifications for the present digital broadcasting, for example, information is recorded in a directory referred to as DVD_HDVR. That is, as shown in FIG. 3, in the directory referred to as the DVD_HDVR, a video manager (VMG) file (HDVMG) for managing the data, a video recording object file (VRO) which is an object file for analog recording such as analog broadcasting and line-in, and a stream recording object file (SRO) which is an object of the digital broadcasting are recorded. The SRO file is configured as a stream object set (SOBS). As shown in FIG. 2, management data is recorded a VMG file common to the VR, the data is controlled in common with the VR, and linked by a cell unit, and a playback place is designated by a playback time unit.

FIG. 2 is an explanatory view of a relation among a presentation control information layer 10, a stream object control information layer 20, and a stream object layer 30 in a data structure according to one embodiment of the present invention. The management information (VMG/ESMG file) recorded on the AV data management information recording area 130 of FIG. 1D has the presentation control information layer 10 to manage playback procedures of both recording contents based on video recording specifications and stream recording contents based on the present embodiment.

That is, one or more cells 13 which are playback units of a stream-recorded object constitute a program 12 together, one or more cells 13* which are playback units of a video-recorded object constitute a program 12* together, and arrangement (playback procedure) of these programs 12, 12* is managed by management information (EX_PGCI) of a program chain (EX_PGC) 11.

Here, even when the playback is started halfway from the cell 13 on a stream recording, or halfway from the cell 13* on a video recording, a user can designate a playback place by a playback time (PTS).

That is, when the playback is started halfway from the cell 13 on the stream recording at the playback time (PTS), the stream object (SOB) 132 in the stream object layer 30 is designated via stream object information (SOBI) 21 in the stream object control information layer 20. The stream object unit (SOBU) 134 in the stream object layer 30 is designated via stream object unit entry information (SOBUI_ENT) 22 in the stream object control information layer 20. When the stream object (SOB) 132 and the stream object unit (SOBU) 134 are designated, the playback start place is specified. The stream object unit entry information (SOBU_ENT) 22 may be referred to as global information 22.

The stream object unit (SOBU) 134 comprises one or more packet groups 140. The stream object unit (SOBU) 134 corresponds to, for example, one or two GOPs, or is a unit from a head of an i-th I picture to a head of an (i+n)-th I picture (n is an integer). Additionally, when a breakpoint of the GOP is not found, the stream object unit (SOBU) 134 is divided by a unit corresponding to a data amount for one second (playback time) at maximum. Accordingly, overflow of each information field is prevented.

Each packet group 140 comprises 8 LBs (16,384 bytes), the head thereof has a packet group header 161, and thereafter a plurality of transport stream packets (TS_Packets) 162, and a plurality of pieces of incremental packet arrival time information (IPATs) 163. The recording contents of the stream recording are stored in these TS_Packets 162.

On the other hand, when the playback is started halfway from the cell 13* on the video recording at the playback time (PTS), a video object (VOB) 36 in a video object layer 35 is designated via video object information (VOBI) 24 in a video object (VOB) management information layer 23. A video object unit (VOBU) 37 in the video object layer 35 is designated via video object unit entry information (VOBUI_ENT) 25 in the video object management information layer 23. When the video object (VOB) 36 and the video object unit (VOBU) 37 are designated, the playback start place is specified. The video object unit (VOBU) 37 comprises a plurality of packs 38, and the recording contents of the video recording are stored in these packs.

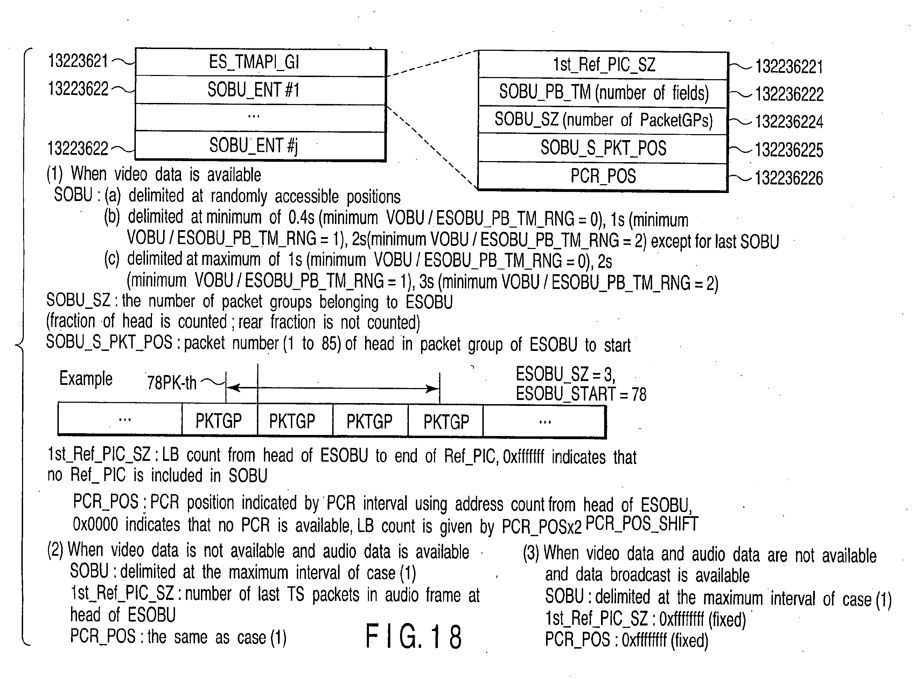

Although details will be described later, to start the playback halfway from the cell 13 on the stream recording, the playback start place can be designated at the time of a field number unit by SOBU_PB_TM (FIG. 18). To start the playback halfway from the cell 13* on the video recording, the playback start place can be designated by VOBU_PB_TM (not shown) in time map information (TMAPI) defined by the video recording. standard.

The description with reference to FIG. 2 will be summarized as follows. That is, the management data (EX_PGCI) of the stream recording can be recorded in the file common to that of the video recording, the stream recording and the video recording can be controlled in common, the stream recording can be linked with the video recording by the cell unit, and the playback place in the stream recording or the video recording can be designated by the playback time unit.

Whether a recording method is the stream recording or the video recording (VR), after recording a certain broadcasting program in the optical disk 100, demands for special playback, that the playback be started at a desired time (time search) and that fast feed (FF)/fast reverse (FR) be performed are frequently generated in the program desired by the user. To satisfy the demands, special management information for managing the recorded data is required.

That is, the object of the digital broadcasting is recorded as the stream of the stream object set (SOBS) 132 of the file which is separate from that of the VR object. Moreover, as shown in FIG. 2, management data of the stream object set (SOBS) is recorded in a VMG file common to a VR file, controlled in common with the VR, and linked by the cell unit, and the playback place is designated by the playback time unit.

The structure of the stream object set (SOBS). comprises one or more stream objects (SOBS) 132, and the stream object (SOB) 132 corresponds, for example, to one program. The stream object (SOB) 132 comprises one or more stream object units (SOBUs) 134, and the stream object unit (SOBU) 134 corresponds to object data for one second, one or two Gap data, or one or more I pictures. Additionally, when a transfer rate is low, a case where one GOP is not sent within 1 second is considered (in the video recording VR, since internal encoding is performed, the stream object unit can be freely set, but the encoding is performed by a broadcasting station in the digital broadcasting, and therefore there is a possibility that the data is not known).

On the other hand, a case where a transfer rate is high and the I pictures are frequently sent is also considered. In a case where the recording is performed for a long time or a recording rate is low, the stream object unit (SOBU) 134 is frequently divided, accordingly the management information of the stream object unit (SOBU) 134 increases, and there is a possibility that the whole management information is enlarged. To solve the problem, the stream object unit (SOBU) 134 is appropriately set apart, for example, by 0.4 seconds to 1 second (minimum limit of 0.4 seconds is applied to a unit opposite to the last stream object unit (SOBU) 134 of the stream object (SOB) 132), one GOP, or one or more I pictures.

One stream object unit (SOBU) 134 comprises one or more packet groups 140, and the packet group 140 comprises 8 LBs (1 LB = 1 logical sector: 2,048 bytes). The packet group 140 comprises the packet group header 161, (85) TS packets 162, and (84) incremental packet arrival times (IPAT) 163.

As shown in FIG. 21, the arrival time of each TS packet is represented by an arrival time stamp (ATS) 152 in a packet group header, and the incremental packet arrival time IPAT (three or four bytes) 163. arranged before each TS packet 162, and the arrival time of the first TS packet in the packet group is represented by the arrival time stamp (ATS) 152 in the packet group. The arrival time of the next TS packet is represented by a value obtained by adding up the ATS 152 and the incremental packet arrival time (IPAT) 163 of the next TS packet. Furthermore, each of the arrival times of the next packets is represented by a value obtained by adding the incremental packet arrival time information (IPAT) 163 of each TS packet to the previous arrival time (ATS) 152. In this manner, the arrival times of second and subsequent TS packets are represented by accumulation of the incremental packet arrival times (IPAT) 163 of the respective TS packets, which are one type of difference information. Accordingly, the incremental arrival time (IPAT) 163 of each TS packet is represented by a comparatively small data amount (three or four bytes), and a total data amount can be saved (as compared with a case where the arrival times of all the TS packets are represented by the arrival time (ATS) 152.

Here, in this structure, a maximum transfer rate (described in a digital copy descriptor in the program map table PMT) of the digital broadcasting is checked, the rate needs to be set for each stream object SOB in accordance with the value, but a minimum rate cannot be determined. Therefore, the data comes late, and the rate cannot be represented by the I program association table (IPAT) 163 in some case. In this case, the packet group is ended (dummy data is input into vacancy), and the group shifts to the next packet group. Furthermore, as shown in FIG. 21, a packet group header 161 comprises a synchronous pattern 151 set to the head of the pattern group, the arrival time information (ATS) 152 of the TS packet, and manufacturer's information (MNI) 153.

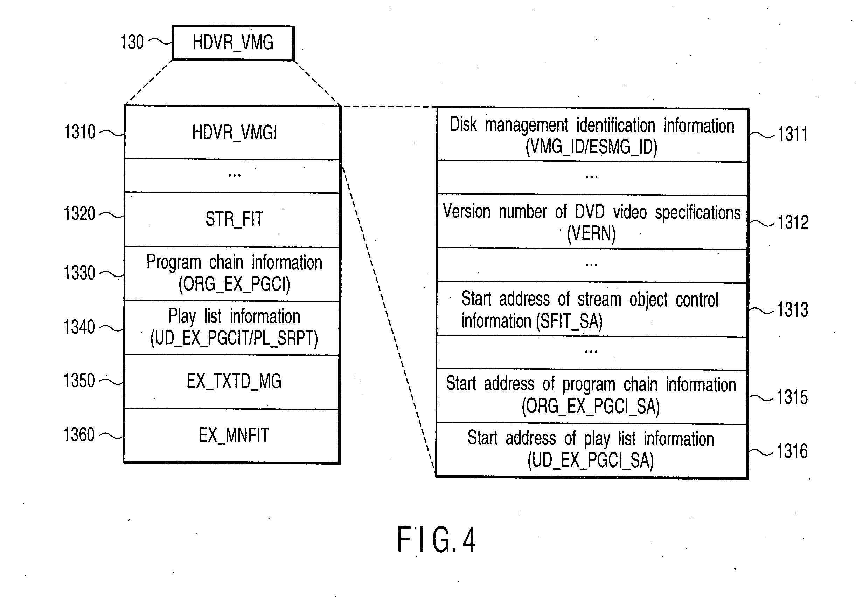

Here, the management information will be described hereinafter with reference to FIGS. 4 to 22.

FIG. 4 is an explanatory view of an example of constitution of HDVR_VMG which is one piece of the management information recorded in the AV data management information recording area 130 shown in FIG. 1D.

Here, in the present embodiment, the stream recording is abbreviated as the SR, and the video recording is abbreviated as the VR. Then, as shown in FIG. 4, the management information of the data of the SR is stored in the HDVR_VMG 130, and managed as the same rank as that of the VR data.

The HDVR_VMG 130 comprises video manager information (HDVR_VMGI) 1310, a stream file information table (STR_FIT) 1320, (original) program chain information (ORG_EX_PGCI) 1330, play list information (PL_SRPT; or user defined program chain information table: UO_EX_PGCIT) 1340, a text manager (EX_TXTD_MG) 1350, and a manufacturer's information table (EX_MNFIT) 1360.

It is to be noted that the play list and the user defined program chain have different names, but have substantially equivalent meaning, and are synonymous with the play list and the user defined program chain used in the video recording specifications. Therefore, in the following description, both information (PL_SRP, etc.) associated with the play list and information (UD_EX_PGCIT_SRP, etc.) associated with the user defined program chain are appropriately described.

The HDVR_VMGI 1310 comprises disk management identification information (VMG_ID/ESMG_ID) 1311, version number of DVD video specifications (VERN) 1312, a start address of stream object control information (SFIT_SA) 1313, a start address of program chain information (ORG_EX_PGCI_SA) 1315, and a start address of play list information (UD_EX_PGCIT_SA) 1316. The management information of the stream is stored in a stream file information table (STR_FIT) 1320.

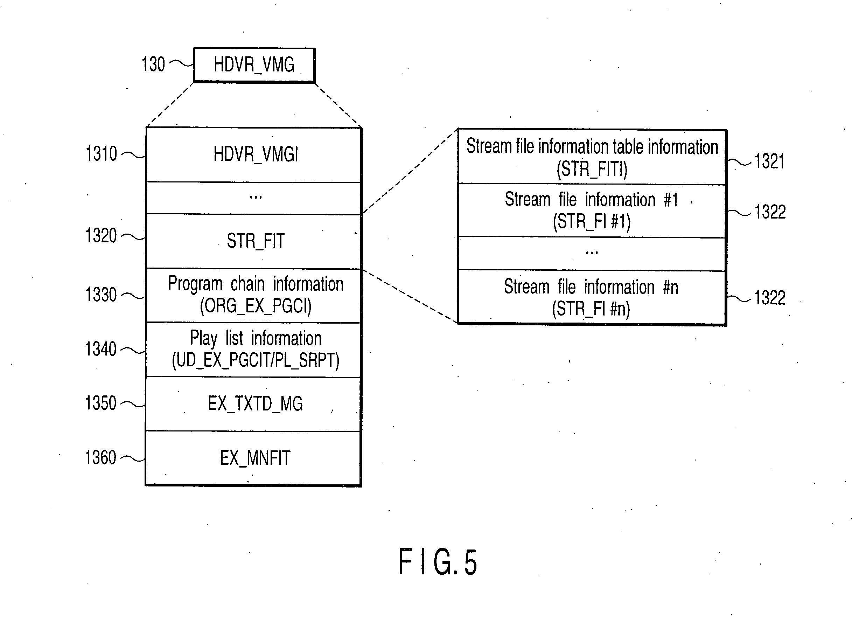

FIG. 5 is an explanatory view of an example of constitution of the stream file information table (STR_FIT) 1320 of FIG. 4. The stream file information table (STR_FIT) 1320 comprises stream file information table information (STR_FITI) 1321, and one or more pieces of stream file information (STR_FI #1 to STR_FI #n) 1322.

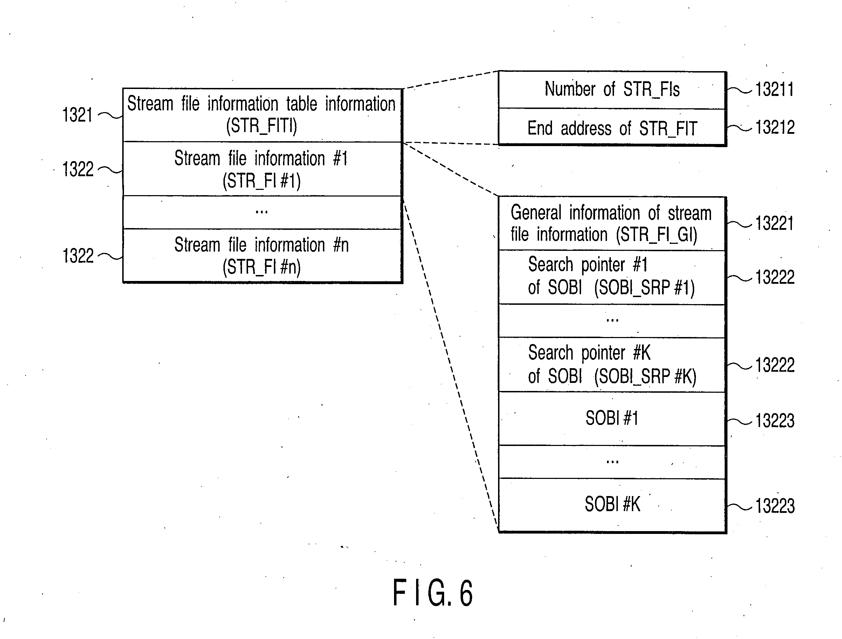

As shown in FIG. 6, the stream file information table information (STR_FITI) 1321 comprises the total number of stream file information (STR_FI) 13211 and an end address of the present table (STR_FIT) 13212. The stream file information (STR_FI) 1322 comprises stream file information general information (STR_FI_GI) 13221, one or more stream object information search pointers (SOBI_SRP) 13222, and stream object information (SOB information: SOBI) 13223 arranged as many as the search pointers SRPs and indicated by a value indicating the number of the pointers.

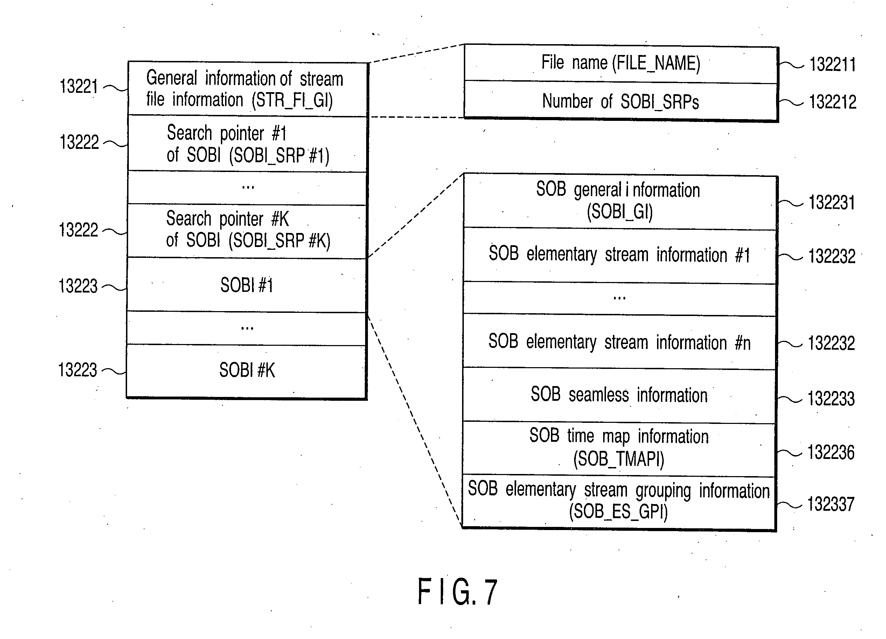

As shown in FIG. 7, the general information (STR_FI_GI) of stream file information 13221 comprises a file name 13221 of an object file in which the SR object is stored, and the number 132212 of SOBI_SRP. The stream object information (SOBI) 13223 comprises stream object information general information (SOBI_GI) 132231, stream object elementary stream information 132232, stream object seamless information 132233, stream object time map information (SOB_TMAPI) 132236, and stream object elementary stream grouping information 132337.

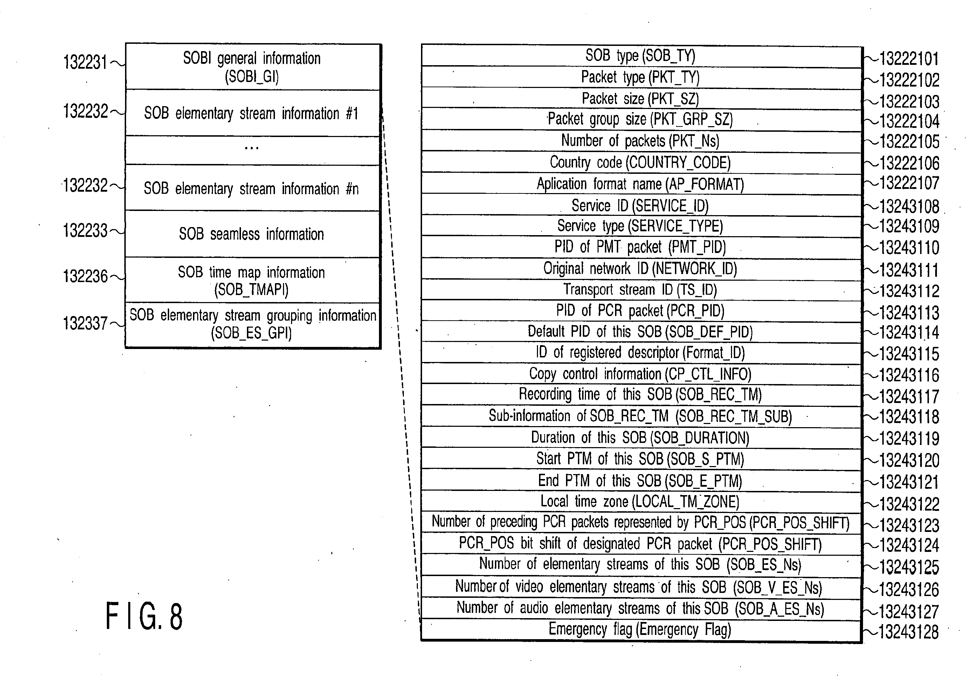

As shown in FIG. 8, the stream object information general information (SOBI_GI) 132231 comprises a stream object type (SOB_TY) 13222101, a packet type (PKT_TY) 13222102, a packet size (PKT_SZ) 13222103, a packet group size (PKT_GRP_SZ) 13222104, the number (PKT_Ns) 13222105 of packets of a packet group, a country code (COUNTRY_CODE) 13222106, an application format name (AP_FORMAT) 13222107, a service ID (SERVICE_ID) 13243108, a service type (SERVICE_TYPE) 13243109, PID (PMT-PID) 13243110 of PMT packet, an original network ID (NETWORK_ID) 13243111, a transport stream ID (TS_ID) 13243112, PID of PCR packet (PCR_PID) 13243113, default PID (SOB_DEF_PID) 13243114 of the present stream object, an ID (FORMAT_ID) 13243115 of a registered descriptor, copy control information (CP_CTRL_INFO) 13243116, a recording time (SOB_REC_TM) 13243117 of the present stream object, a sub-second time (SOB_REC_TM_SUB) 13243118 of SOB_REC_TM, a playback time (SOB_DURATION) 13243119 of the present stream object (total of playback times of SOBU_ENT), a start PTM (SOB_S_PTM) 13243120 of the present stream object, an end PTM (SOB_E_PTM) 13243121 of the present stream object, a local time zone (LOCAL_TM_ZONE) 13243122, the number (PCR_POS_COUNT) 13243123 of preceding PCR packets represented by PCR_POS (indicating the number of PCR from the head of the packet group), a PCR_POS bit shift (PCR_POS_SHIFT) 13243124 of a designated PCR packet (index portion of 2 of LB, indicating the position of the PCR packet), the number (SOB_ES_Ns) 13243125 of elementary streams recorded in the present stream object, the number (SOB_V_ES_Ns) 13243126 of video elementary streams recorded in the present stream object, the number (SOB_A_ES_Ns) 13243127 of audio elementary streams recorded in the present stream object, and an emergency flag (emergency flag) 13243128.

It is to be noted that it is determined whether or not it is possible to analyze the SOB. When it is impossible, 0xff is set to the packet type PKT_TY, and 1 is set in the case of MPEG-TS. When 1 is set, TMAPI introduced in the present embodiment is prepared, and playback or the like is performed. However, when 0xff is set, original management information inherent in a manufacture is held, and the contents are managed. The packet group size PKT_GRP_SZ is fixed at eight logical blocks (LB). The number PKT_Ns of the packets of the packet group is the number of the packets of 1PKT_GPP, and is fixed at 0x55:85TS packets. The country code is a code of a country where the recording is performed, and is, for example, JPN = Japan. With regard to the application format name AP_FORMAT, 1 indicates ISDB-S: BS/CS broadcasting, and 2 denotes ISDB-T: terrestrial digital broadcasting. Based on the information of recorded PSI, SI, the service ID (SERVICE_ID), the PID of the PMT packet (PMT_ID), the network ID (NETWORK_ID), the transport stream ID (TS_ID), the ID of the registered descriptor (FORMAT_ID), and the service type (SERVICE_TYPE) are recorded. Based on the data to record, SOB_ES_Ns (the number of ESs selected for the recording), SOB_V_ES_Ns (the total number of the recorded video ESs), SOB_A_ES_Ns (the total number of the recorded audio ESs), PCR_POS_COUNT (the number of the PCR to be referred to, indicating the number of PCRs before the head of the packet group), PCR_POS_SHIFT (index part of 2 of LB indicating the position of the PCR packet), CP_CTRL_INFO, and the emergency flag (0: usual broadcasting, 1: emergency broadcasting) are recorded.

The SOB_DEF_PID is the PID of default. In the ARIB system, a small value of a component tag is selected. Additionally, the value of the component group descriptor is given priority.

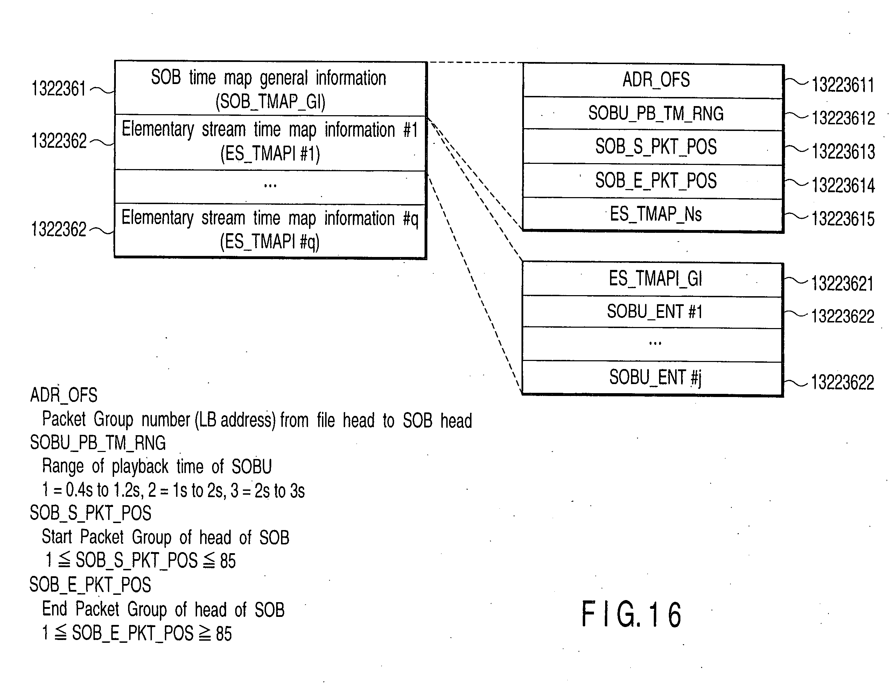

Here, relations between the SOB_ES_Ns and SOB_V_ES_Ns, and between SOB_A_Es_Ns and ES_TMAP_Ns (13223615 of FIG. 16) are represented by the following equations.

$$SOB\_V\_ES\_Ns + SOB\_A\_Es\_Ns \leq SOB\_ES\_Ns$$

$$SOB\_ES\_Ns = SOB\_ESI\_Ns \text{ (the total number of the SOB\_ESIs)}$$

$$SOB\_ES\_Ns \geq ES\_TMAP\_Ns$$

$$SOB\_V\_ES\_Ns + SOB\_A\_Es\_Ns + ES\_TY \text{ indicates the total number of the other ESIs} = SOB\_ES\_Ns$$

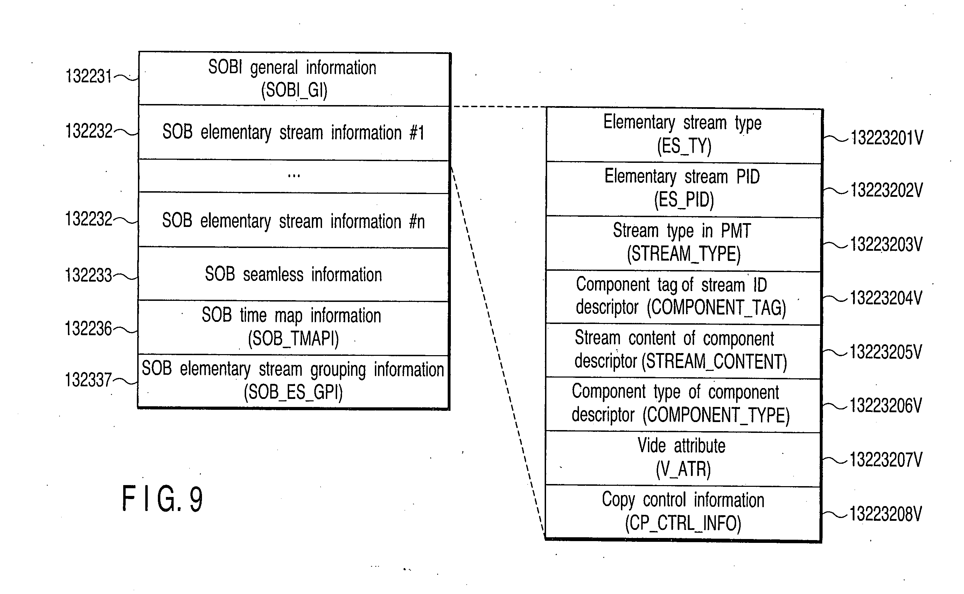

As shown in FIG. 9, by the service information SI in the broadcastedobject, the SOB_ESI 132232 on the video elementary stream comprises an elementary stream type (ES_TY) 13223201V, an elementary stream PID (ES_PID) 13223202V, a stream type (STREAM_TYPE) 13223203V indicated in the PMT, a value (COMPONENT_TAG) 13223204V of the component tag indicated by a stream identification descriptor, a stream contents value (STREAM_CONTENT) 13223205V indicated by the component descriptor, a component type value (COMPONENT_TYPE) 13223206V indicated by the component descriptor, a video elementary stream attribute (V_ATR) 13223207V, . and copy control information (CP_CTRL_INFO) 13223208V.

The elementary stream type (ES_TY) is of one byte, and ST_TY is stored in b7, b6. b5 to b0 are reserved and ST_TY = 00b in the case of the video elementary stream.

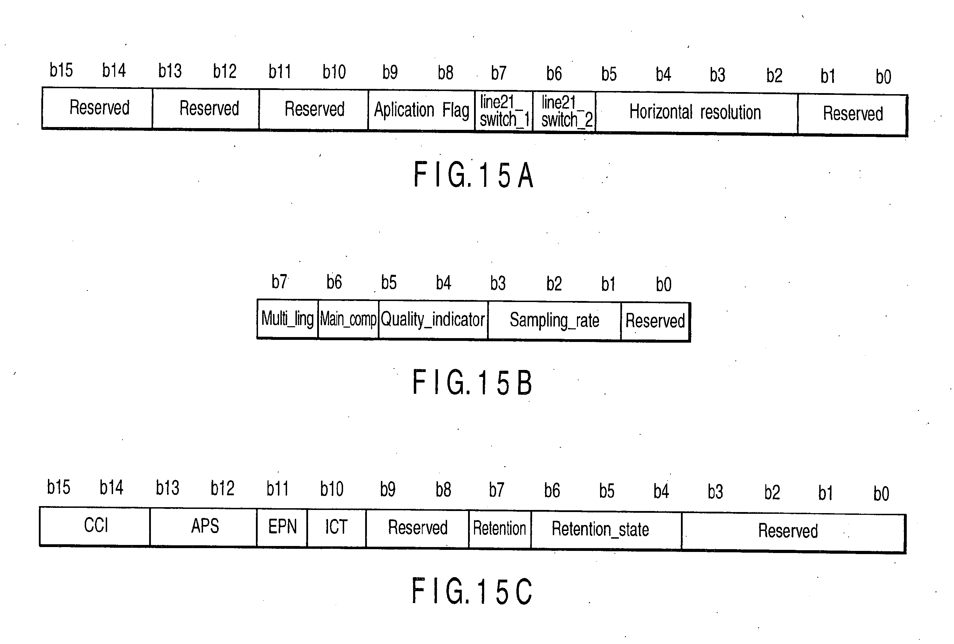

As shown in FIG. 15A, the video attribute V_ATR is of two bytes, and b9, b8 are an application flag (00b: the present video stream is coded at an aspect ratio designated by the present V_ATR, 01b: the present video stream is coded at an aspect ratio designated by the present V_ATR, an actual aspect ratio is not recorded in the stream, and the others are reserved). b7 indicates a line-21 switch (1b: user data with respect to data of Line 21 of Field 1 is recorded in the GOP layer, 0b: user data with respect to the data of Line 21 of Field 1 is not recorded in the GOP layer). b6 indicates a second line-21 switch (1b: the user data with respect to the data of Line 21 of Field 1 is recorded in the GOP layer, 0b: the user data with respect to the data of Line 21 of Field 1 is not recorded in the GOP layer). b5 to b2 indicate a horizontal resolution (0000b: 1,920 lines, 0001b: 1,440 lines, 0010b: 1,280 lines, 0011b: 720 lines, 0100b: 544 lines, 0101b: 480 lines), and the others are reserved.

As shown in FIG. 15C, the copy control information (CP_CTRL_INFO) 13223208V is of two bytes, b15 and b14 indicate CCI (00b: copy free, 10b: no more copy, 10b: copy one generation, 11b: copy never), and b13 and b12 indicate APS (00b: copy free, 01b: APS of Type 1 (AGC) is on, 10b: APS of Type 2 (AGC + 2L color stripe) is on, 11b: APS of Type 3 (AGC + 4L color stripe) is on). b10 indicates an image construction token (ICT) (0b: HD image (high definition image) is converted into SD image (standard definition image), and analog output results, 1b: analog output of HD image as such). b7 indicates retention (01 and CCI = '10b' indicates move mode (movement is permitted, not temporarily stored: not erased even when time is up), 0b and CCI = '11b' indicates temporary storage (retention) mode (movement is prohibited, erased when time is up), 0b and CCI = '00b' or '01b' indicates non-move mode and non-retention mode (copy enabled: 01 indicates that one copy is possible, not temporarily stored: not erased even when time is up), 1b: (non-move) mode/(non-retention) mode). b6 to b4 indicate Retention_State (000b: non limitation, 001b: one week, 010b: two days, 011b: one day, 100b: 12 hours, 101b: six hours, 110b: three hours, 111b: 90 minutes), and the others are reserved.

Here, the APS indicates an analog protection system, and a macro vision is assumed in the present embodiment.

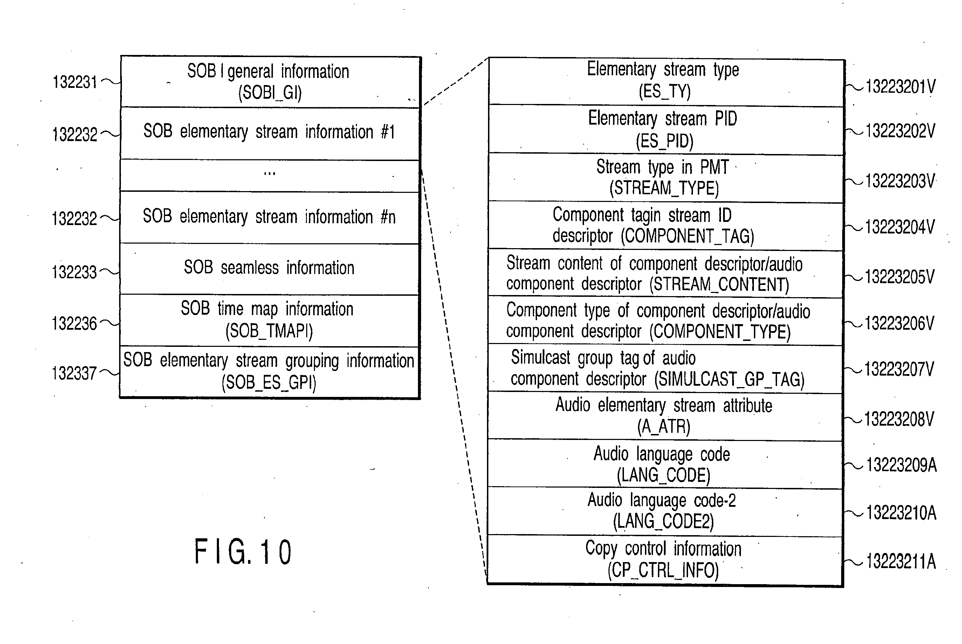

As shown in FIG. 10, by the service information SI in the broadcasted object, the SOB_ESI 132232 on the audio elementary stream comprises an elementary stream type (ES_TY) 13223201A, a PID (ES_PID) 13223202A of the elementary stream, a stream type (STREAM_TYPE) 13223203A indicated in the PMT, a value (COMPONENT_TAG) 13223204A of the component tag indicated by a stream ID descriptor, a stream contents value (STREAM_CONTENT) 13223205A indicated by the component descriptor/audio component descriptor, a component type value (COMPONENT_TYPE) 13223206A indicated by the component descriptor/audio component descriptor, a simultaneous cast group tag (SIMULCAST_GP_TAG) (simultaneous cast group identification) 13223207A, an audio elementary stream attribute (A_ATR) 13223208A, a language code (LANG_CODE) 13223209A of a first sound, a language code (LANG_CODE2) 13223212A of a second sound, and copy control information (CP_CTRL_INFO) 13223211A.

The elementary stream type (ES_TY) is of one byte and ST_TY is stored in b7, b6. b5 to b0 are reserved and ST_TY = 00b in the case of the video elementary stream.

As shown in FIG. 15B, the audio attribute A_ATR is of one byte, b7 indicates a multilingual flag (0b: non-multilingual stream, 1b: bilingual stream in a case where the stream is dual/mono), b6 indicates a main component flag (0b: not main, 1b: main audio), b5, b4 indicate.a quality indicator (00b: reserved, 01b: Mode 1, 10b: Mode 2, 11b: Mode 3), b3 to b1 store a sampling rate (011b: 24 kHz, 101b: 32 kHz, 111b: 48 kHz, the others are reserved), and b0 is reserved:

The LANG_CODE describes the language code of the first sound of the present stream, and the LANG_CODE2 describes the language code of the second sound in a case where the present stream is a multilingual stream.

The copy control information CP_CTRL_INFO is of two bytes, and is the same as that shown in FIG. 15C.

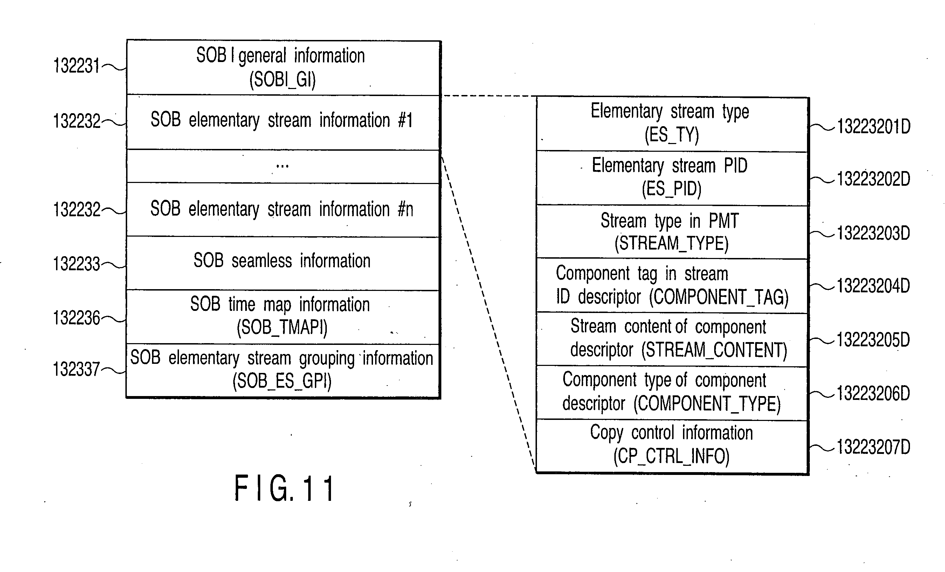

As shown in FIG. 11, by the service information SI in the broadcasted object, the SOB_ESI 132232 on the other elementary streams comprises an elementary stream type (ES_TY) 13223201D, an elementary stream PID (ES_PID) 13223202D, a stream type indicated in the PMT (STREAM_TYPE) 13223203D, a value of the component type indicated by a stream ID descriptor (COMPONENT_TAG) 13223204D, a stream contents value indicated by the component descriptor (STREAM_CONTENT) 13223205D, a component type value (COMPONENT_TYPE) 13223206D indicated by the component descriptor, and copy control information (CP_CTRL_INFO) 13223207D.

The elementary stream type (ES_TY) is of one byte and ST_TY is stored in b7, b6. b5 to b0 are reserved and ST_TY = 00b in the case of the other elementary streams.

The copy control in formation CP_CTRL_INFO is of two bytes, and is the same as that shown in FIG. 15C.

It is to be noted that in a relation between the copy control information CP_CTRL_INFO in the SOBI_GI as shown in FIG. 8, and the copy control information CP_CTRL_INFO in the SOB elementary stream information as shown in FIGS. 9, 10, 11, the former: the copy control information CP_CTRL_INFO in SOBI_GI performs the copy control concerning the whole SOB, the latter: the copy control information CP_CTRL_INFO in the SOB elementary stream information performs the copy control of each elementary stream, and the latter is given preferential. This value is set by a digital copy control descriptor, and contents use descriptor. Both formats are the same.

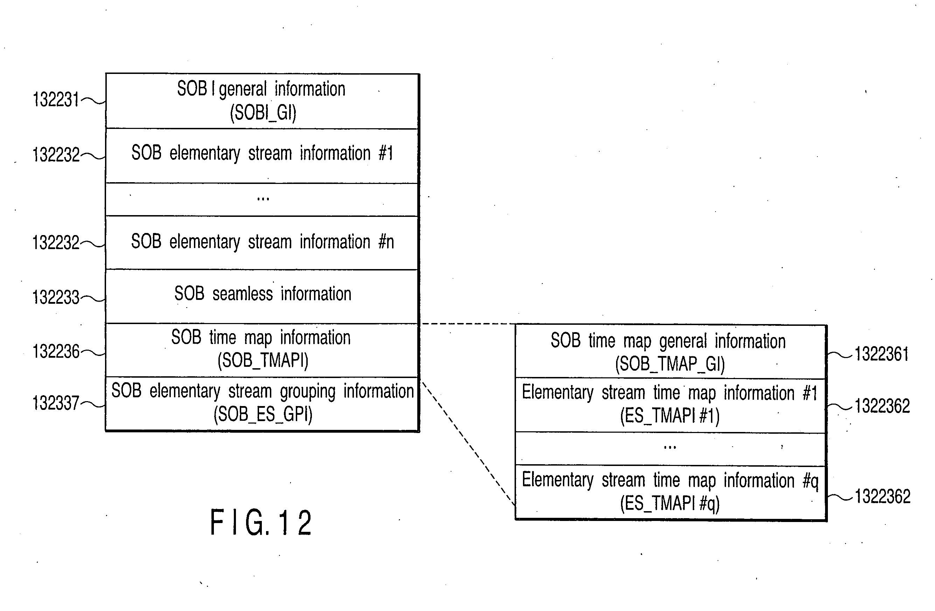

As shown in FIG. 12, the stream object time map information (SOB_TMAPI) 132236 comprises the stream object time map general information (SOB_TMAP_GI) 1322361, and elementary stream time map information (ES_TMAPI) 1322362.

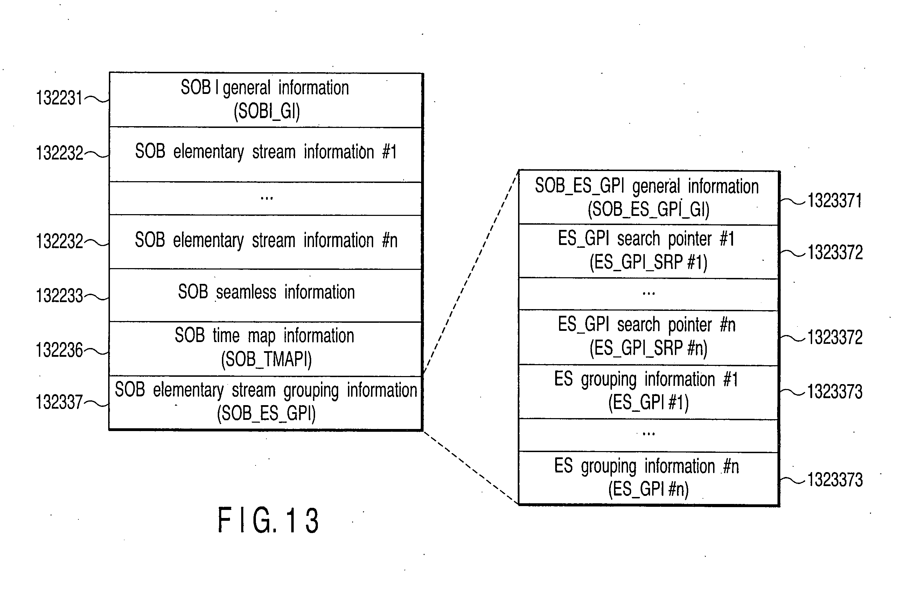

As shown in FIG. 13, the stream object elementary stream grouping information (SOB_ES_GPI) 132337 comprises SOB_ES_GPI general information (SOB_ES_GPI_GI) 1323371, one or more ES_GPI search pointers (ES_GPI_SRP) 1323372, and one or more pieces of ES grouping information (ES_GPI) 1323372 indicated by the search pointer.

The SOB_ES_GPI 132337 corresponds to a multi-view broadcasting, and indicates a video and audio constituting a group and constituting a set at the time of the playback. Here, GPI1 (first GPI) is a main group. This main group is played back unless especially designated at the playback time. A packet identifier PID of the ES to be played back is set by a component group descriptor and a stream descriptor in the GPI.

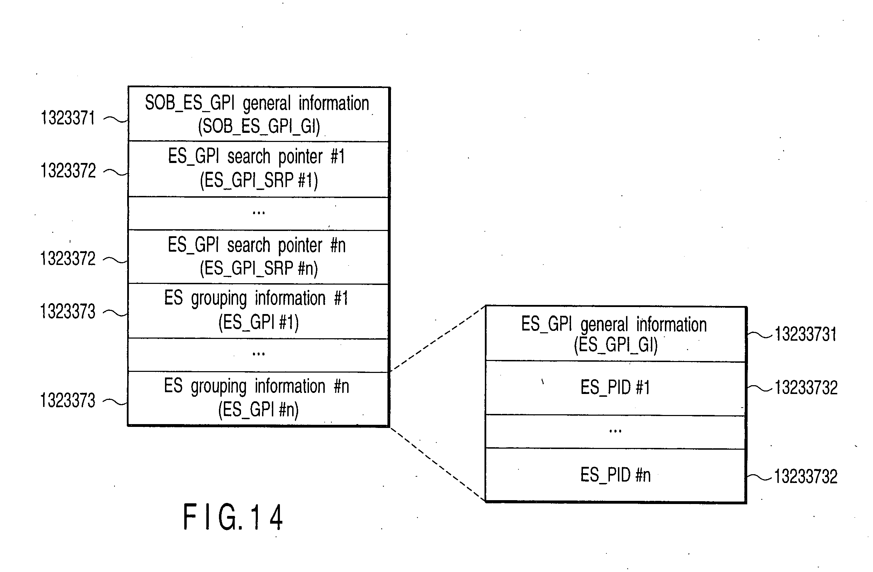

As shown in FIG. 14, the ES grouping information (ES_GPI) 1323373 comprises ES grouping general information (ES_GPI_GI) 13233731, and ES_PID 13233732.

As shown in FIG. 16, the stream object time map general information (SOB_TMAP_GI) 1322361 comprises an address offset ADR_OFS (packet group number (LB address) from file head to SOB head) 13223611, SOBU_PB_TM_RNG (range of the playback time.of SOBU: 1: 0.4 to 1.2 seconds, 2: 1 to 2 seconds, 3: 2 to 3 seconds) 13223612, SOB_S_PKT_POS (start in the packet group of the head of the SOB: $1 \leq SOB\_S\_PKT\_POS \leq 85$) 13223613, SOB_E_PKT_POS (end in the packet group of the head of the SOB: $1 \leq SOB\_E\_PKT\_POS \leq 85$) 13223614, and ES_TMAP_Ns (the number of the time maps of the elementary stream) 13223615.

Here, even when the recording time increases by setting the SOBU_PB_TM_RNG, the SOB_TMAPI can be prevented from being excessively enlarged. Additionally, since a time interval of each entry extends, a possibility that the playback at a double speed cannot be smoothly performed increases.

The elementary stream time map information (ES_TMAPI) 1322362 comprises elementary stream time map information general information (ES_TMAPI_GI) 13223621 and one or more stream object entries (SOBU_ENT) 13223622.

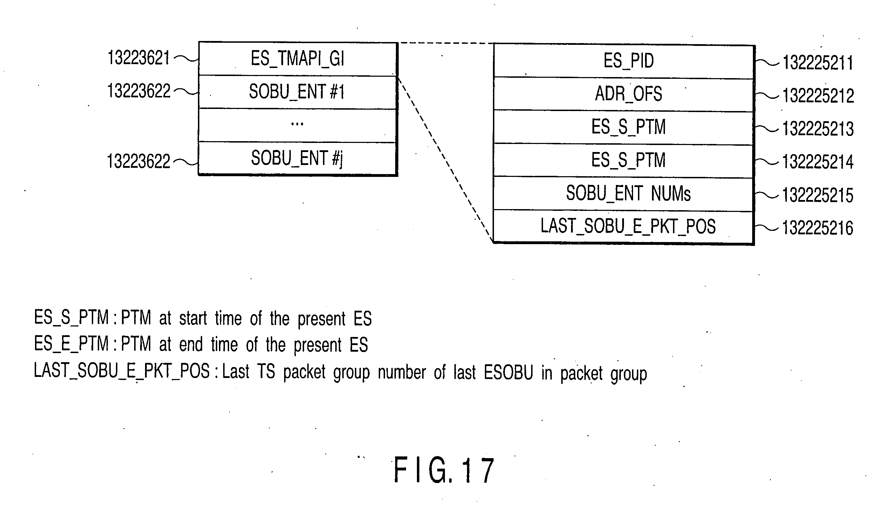

As shown in FIG. 17, the elementary stream time map information general information (ES_TMAPI_GI) 13223621 comprises an ES_packet identifier (ES_PID) 132225211, an address offset (ADR_OFS) 132225212, ES_S_PTM (PTM at the start time of the present elementary stream) 132225213, ES_E_PTM (PTM at the end time of the present ES) 132225214, the number (SOBU_ENT_NUMs) 132225215 of SOBU entries, and LAST_SOBU_E_PKT_POS (last TS packet group number of the last ESOBU in the packet group) 132225216.

As shown in FIG. 18, with regard to the stream object entry (SOBU_ENT) 13223622 corresponding to one program, three cases are considered: a case where there is data of video, a case where there is not any video data and there is audio data, and a case where there is another information only, and they are classified as 00, 01, 02.

According to the above-described classification, there are three types of SOBU entry information.

When there is video data, the information comprises last address information (LB unit) (1st_ef_PIC_SZ) 132236221 from SOBU head of a first reference picture (I picture) in the entry, playback time (field number) of SOBU (SOBU_PB_TM) 132236222, a SOBU size (SOBU_SZ) 132236224 (packet group number, the number of the packet groups belonging to the SOBU), SOBU_S_PKT_POS 132236225 (packet number from the head of the packet group including the head of the SOBU), and PCR_POS 132236226 (indicating the position of the PCR in a position represented by PCR_POS_COUNT). The PCR_POS is the position of the PCR in the position indicated by PCR_POS_COUNT by an address number from the SOBU head. If the information does not exist, 0xffff is indicated. The LB number is indicated by PCR_POS x $2^{PCR\_POS\_SHIFT}$. Here, the PCR indicates a position before a position where there is a reference picture, and the position of the PCR several minutes before, indicated by a PCR interval.

Accordingly, in the case of time search, the SOBU of the target time is obtained by accumulation of PB_TM, and the playback start PTM is-converted by the field number from the head of the SOBU. Assuming that the target SOBU is K, and a target address is A, the address is represented by the following equation:

$$A = \sum_{N=1}^{k-1} SOBU\_SZ(N) \times 8 + 1$$

Furthermore, the packet of the head is a packet indicating a value of SOBU_S_PKT_POS, and this address is accessed.

When there is not any video data, and there is audio data, the information comprises last address information (the same as above) from the SOBU head of the first sound frame in the entry, the playback time (field number) of the SOBU, the size (the same as above) of the SOBU, and PCR_POS.

In the case of the other information only, since the entry information is not configured, the information is all filled with FF.

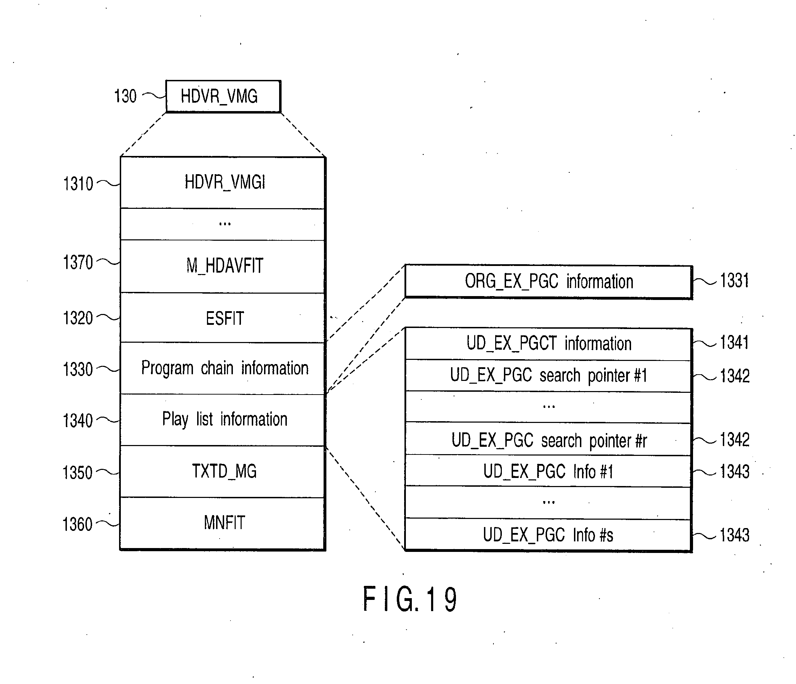

The playback information is EX_PGC information, the format is the same as a usual VR format, original program chain information ORG_EX_PGC is automatically prepared by the apparatus at the time of the recording, and the information is set in a recording order. User defined program chain information UD_EX_PGC is prepared following a playback order freely added by the user, and called a play list. These two formats have a common EX_PGC level, and the EX_PGC format is shown in FIG. 19. Program chain information 1330 comprises original program chain information (ORG_EX_PGC) 1331.. Play list information 1340 comprises program chain table information (UD_EX_PGCT) 1341, one or more program chain (UD_EX_PGC) search pointers 1342, and one or more pieces of program chain information (UD_EX_PGC Info) 1343.

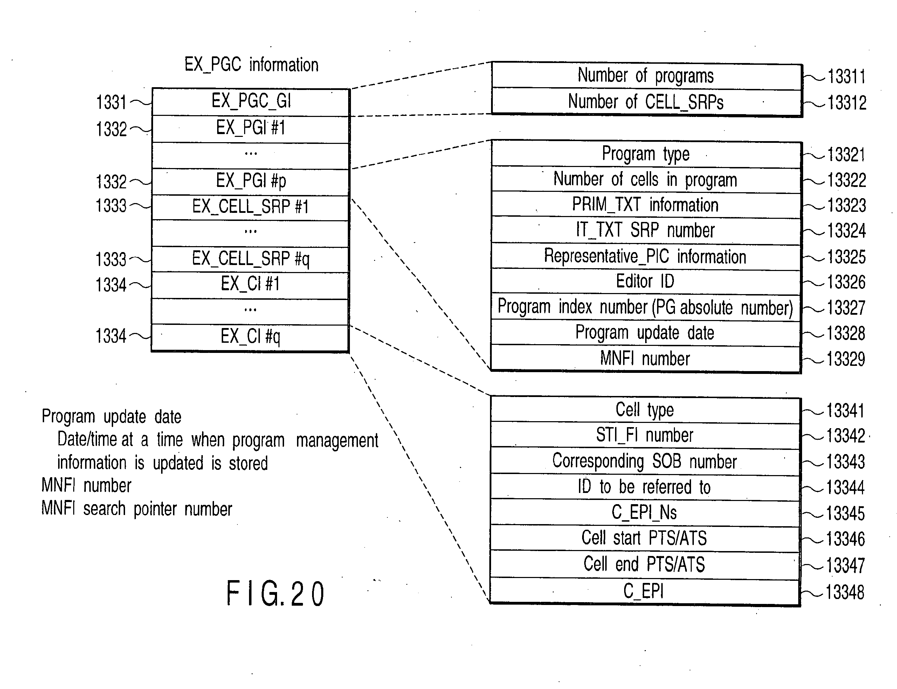

As shown in FIG. 20, the program chain information comprises program chain general information (EX_PGC_GI) 1331, one or more pieces of program information (EX_PGI) 1332, one or more cell search pointers (EX_CELL_SRP #1 to EX_CELL_SRP #q) 1333, and one or more pieces of cell information (EX_CI #1 to EX_CI #q) 1334.

The program chain general information (EX_PGC_GI) 1331 comprises a program number 13311, and cell search pointer number (CELL_SRP number) 13312.

The program information (EX_PGI) 1332 comprises a program type 13321, an in-program cell number 13322, PRIM_TXT information 13323, an IT_TXT_SRP number 13324, representative_PIC information 13325, an editor ID 13326, a program index number (PG absolute number) 11327, a program update date 13328, and a manufacturer's information (MNFI) number 13329. Information of date/time when the program has been updated is stored in the program update date. Accordingly, a time when the present program has been edited is seen. As text information, the PRIM_TXT information 13323 is used for a program name, another information (a director name, a leading actor name, ...) is stored in the IT_TXT area 1350 in order to store the other text information, the stored IT_TXT SRP number 13324 is set to the EX_PGI 1332, and the information is linked. Furthermore, the PG index number 13327 is also set to the IT_TXT data 1350. Here, the PG index number 13327 is an absolute number from when the recording is started with respect to an index, and is an index number which is unchanged even when the other PG is deleted. The SRP number 13329 of the MNFI is set to the EX_PGI 1332 in order to use the MNFI information arranged in order to realize a function unique to the manufacture. Furthermore, even in the MNFI information, the data in the MNFI information is linked by setting a PG number (not shown).

Furthermore, the update date information is also set to both the MNFI and IT_TXT, agreement of the time is checked at the time of menu display, and it is accordingly verified whether or not edition has been performed by another manufacture.

The cell information (EX_CI) 1334 comprises a cell type 13341, an STI_FI number 13342, a corresponding SOB number 13343, a referred ID 13344, C_EPI_Ns 13345, cell start PTS/ATS 13345, cell end PTS/ATS 13347, and CP_EPI 13348. The cell type 13341 indicates the type of the SOB, and designates the SOB number 13343, start time 13346, and end time 13347. Here, it is considered that the start time and end time are' represented by two types: a PTS unit (playback time), and an ATS unit (transfer time).

Here, when the playback time (actual time of the playback) is designated in-time designation, the same access method as that of the conventional VR is possible, the user designates the playback time, and therefore user's desire is completely reflected. Additionally, in the method, the designation is possible in a case where contents of the stream can be sufficiently analyzed. In a case where the contents are not sufficiently seen, the time has to be designated by a transfer time unit. When the time is designated by the playback time, the playback cannot be necessarily started at the head of the I picture. When the frame of the playback start is not the I picture, the decoding is started from the I picture immediately before the frame. When the decoding is performed to a target frame, the display is started, and it is displayed to the user as if the playback were started from the designated frame.

Moreover, as the ID to be referred to, a method of setting a packet identifier PID (or a value of the component tag) of a stream representing the stream to be played back, and a method of setting the ID of the component group in the case of multi-view TV or the like are considered. In the case of 0xffff, a method of performing multi-display in a sub-screen, and a method of preferentially displaying a group set in advance (or a main group of default) and switching the display later (during the playback) are considered. Peculiar ID numbers may be attached to PG and CELL, and the PG and CELL may be designated with numbers which do not change even if middle PG and CELL are deleted.

FIG. 21 is an explanatory view of one example of constitution of the data unit (SOBU) 134 for the stream object shown in FIG. 1F or 2.

One SOBU 134 comprises one or more packet groups 140, and each packet group 140 comprises, for example, eight packs.

Each packet group 140 comprises a packet group header (152 bytes) 161, one or more (85 herein) MPEG-TS packets (188 bytes) 162, and one or more (84 herein) incremental packet arrival times (IPAT, three or four bytes) 163.

The packet group header 161 comprises a synchronous pattern 151 (00FFA5A5), a packet arrival time (ATS) 152, and manufacturer's information (MNI) 153. It is to be noted that the packet group header 161 may further include presentation time stamp (PTS).

Moreover, each MPEG-TS packet 162 comprises a four-byte header 170, and an adaptation field and/or payload 180. The header 170 comprises a synchronous byte 171, transport error indicator 172, payload unit start indicator 173, transport priority 174, packet identifier (PID) 175, transport scramble control 176, adaptation field control 177, and continuity index 178.

Additionally, in a system for performing broadcasting (distribution) of a compressed moving image, such as digital TV broadcasting or broadcasting using a cable such as internet, a TS stream (FIG. 21) which is a common basic format is divided into the management data part (170) and the payload (180) of the packet.

In the payload, data of an object to be played back is included in a scrambled state. According to the digital broadcasting standard ARIB, additionally a program association table PMT or service information SI is not scrambled. It is possible to prepare various management information using the PMT or SI (service description table, event information table, bouquet association table).

As playback objects, there are MPEG video data, Dolby AC3(R) audio data, MPEG audio data, data broadcasting data and the like. As information which is not directly related to the playback objects but which is necessary in the playback, there are information (program information, etc.) such as PAT, PMT, and SI.

The PAT includes packet identification (PID) of the PMT for each program, and the PID of the video data or the audio data is further recorded.

Accordingly, the following is possible as a usual playback procedure of a set top box (STB). That is, when the user determines the program by electronic program guide (EPG) information, the PAT is read at the start of a target program, and the PID of the PMT belonging to the desired program is determined based on the data. Moreover, the target PMT is read in accordance with the PID, and the PID of the video or audio packet to be played back, included in the PMT, is determined. Moreover, an attribute of the video or audio is read by the PMT or SI, and set to each decoder, and the video or audio data is cut out in accordance with the PID, and played back. Here, since the PAT, PMT, SI and the like are used also during playback, they are transmitted every hundreds of milliseconds.

When these data are recorded in disk media such as DVD-RAM, it is more advantageous to record the broadcasted data as such as the digital data.

If a plurality of streams are simultaneously recorded, the stream number to be recorded in the SOBI is held, the PMT corresponding to each stream is stored, map information (map group information) for special playback is held in each stream, and the number of the stream (the channel number or the PID of the PMT) to be played back may be recorded in the cell information.

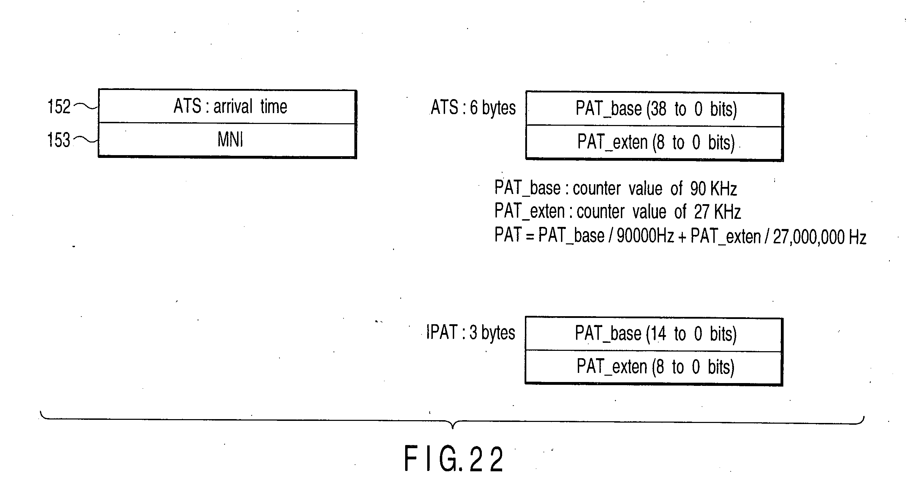

FIG. 22 is an explanatory view of an example of constitution of the arrival time (ATS) 152 of the packet included in the packet group header shown in FIG. 21. Here, for example, six bytes are assigned to the ATS 152, a PAT base (e.g., a counter value of 90 kHz) is represented by 38 to 0 bits, and the 8 to 0 bits represent a PAT extent (e.g., a counter value of 27 MHz).

An actual arrival time PAT is represented by PAT_base/90000 Hz + PAT_exten/27,000,000 Hz. Accordingly, the ATS 152 can be finely represented, for example, by a video frame unit.

FIG. 22 also shows one example of constitution of an increment (IPAT) 163 of the packet arrival time, which is included in the packet group header in the packet group shown in FIG. 21. Here, for example, three bytes are assigned to the IPAT 163, 14 to 0 bits represent the PAT_base (e.g., the counter value of 90 kHz), and 8 to 0 bits represent the PAT_exten (e.g., the counter value of 27 MHz). Since the IPAT-163 may represent the increment (change) from the ATS 152, not the absolute time, a data amount of the IPAT is smaller than that of the ATS.

The actual arrival time PAT in the IPAT 163 is represented by ATS + PAT_base/90000 Hz + PAT_exten/27,000,000 Hz. Accordingly, the IPAT 163 can be finely represented, for example, by the video frame unit. It is to be noted that as another mode, it is also possible to use a difference from the arrival time from the previous TS packet (to add PAT_base/90000 Hz + PAT_exten/27,000,000 Hz to the previous PAT to constitute a new PAT).

It is to be noted that the "PAT" in the above-described "PAT_base and PAT_exten" means the "packet arrival time", not the "program association table".

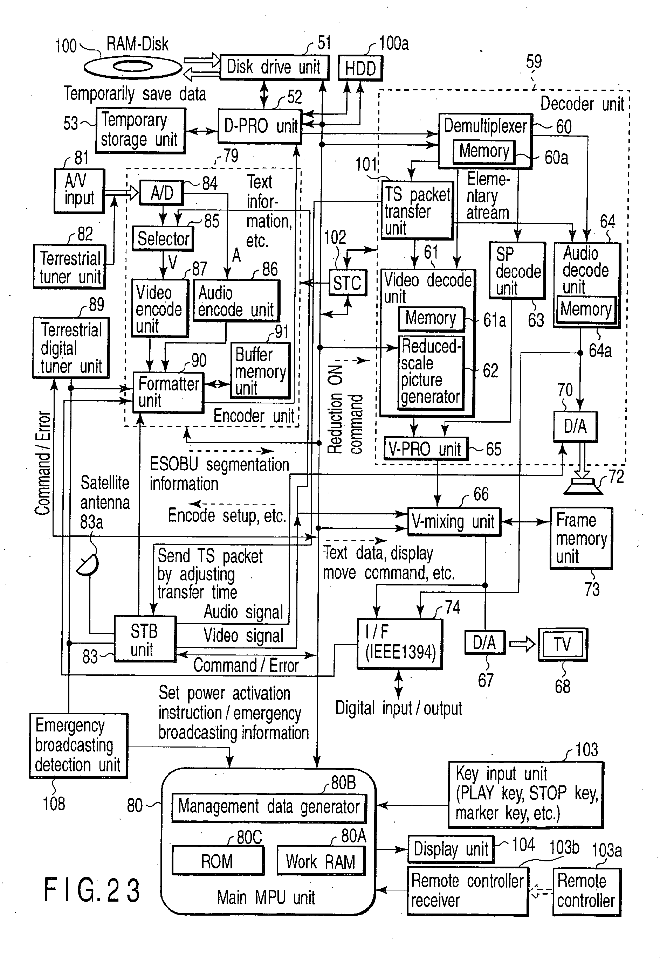

FIG. 23 is a block diagram showing an example of an apparatus which records/plays back audio/video (AV) information (digital TV broadcasting program, etc.) in an information recording medium (optical disk, hard disk, etc.) utilizing a data structure according to one embodiment of the present invention.

As shown in FIG. 23, the apparatus (digital video recorder/streamer) comprises a main MPU unit 80, key input unit 103, remote controller receiver 103b which receives user operation information from a remote controller 103a, display unit 104, decoder unit 59, encoder unit 79, system time counter (STC) unit 102, data processor (D-PRO) unit 52, temporary storage unit 53, disk drive unit 51 which records/plays back information with respect to a recordable optical disk 100 such as a DVD-RAM, hard disk drive (HDD) 100a, video mixing (V-mixing) unit 66, frame memory unit 73, D/A converter 67 for analog TV, analog TV tuner unit 82, terrestrial digital tuner unit 89, set top box (STB) unit 83 connected to a satellite antenna 83a, terrestrial tuner unit 82, and emergency broadcasting detection unit 108 which is connected to the STB unit 83 and which sets power activation instruction and emergency broadcasting information with respect to the MPU unit 80, on detecting the emergency broadcasting. Furthermore, since the apparatus corresponds to an digital input/output as a streamer, the apparatus comprises a digital I/F 74 such as IEEE 1394.

It is to be noted that the STC unit 102 is configured to count clocks on a 27 MHz base in accordance with the PAT_exten of FIG. 17.

The STB unit 83 decodes received digital broadcasting data to generate an AV signal (digital), and sends the AV signal to a TV monitor 68 via the encoder unit 79, decoder unit 59, and D/A converter 67 in the streamer, so that the contents of the received digital broadcasting can be displayed. Alternatively, the STB unit 83 is also configured to be capable of sending the decoded AV signal (digital) directly to the V-mixing unit 66 and sending an analog AV signal to the TV monitor 68 from the V-mixing unit 66 via the D/A converter 67.

Additionally, since the apparatus of FIG. 23 constitutes a recorder comprising functions of both video recording and stream recording, the apparatus comprises components (IEEE 1394 I/F, etc.) unnecessary in the video recording or components (an A/D converter 84 for AV input, audio encoder unit 86, video encoder unit 87, etc.) unnecessary in the stream recording.

The encoder unit 79 comprises the A/D converter 84, video encoder unit 87, input switch selector 85 to the video encoder unit 87, audio encoder unit 86, sub-picture encoder unit (not shown, but if necessary), formatter unit 90, and buffer memory unit 91.

Moreover, the decoder unit 59 comprises a demultiplexer 60 which contains a memory 60a, video decode unit 61 which contains a memory 61a and a generator 62 of a reduced-scale picture (thumbnail, etc.), sub-picture (SP) decode unit 63, audio decode unit 64 which contains a memory 64a, TS packet transfer unit 101, video processor (V-PRO) unit 65, and D/A converter 70 for audio. An analog output (monaural, stereo, or AAC 5.1CH surround) from the D/A converter 70 is input into an AV amplifier and the like (not shown), and the necessary number of speakers 72 are driven.

Additionally, to display the contents being recorded in the TV monitor 68, stream data to be recorded is sent to the D-PRO unit 52, simultaneously sent also to the decoder unit 59, and can be reproduced. In this case, the MPU unit 80 sets the decoder unit 59 at the time of playback, and thereafter the decoder unit 59 automatically performs a playback process.

The D-PRO unit 52 forms an ECC group, for example, every 16 packs, attaches an ECC, and sends the data to the drive unit 51. Additionally, when the drive unit 51 is not prepared for the recording into the disk 100, the data is transferred to the temporary storage unit 53. The apparatus waits until preparations for recording the data are made. In a stage in which'the preparations are made, the recording is started. Here, since the temporary storage unit 53 holds the recording data for several minutes or more at a high-speed access, a large-capacity memory is assumed. This temporary storage unit 53 can be configured utilizing a part of the HDD 100a.

It is to be noted that the MPU unit 80 is configured in such a manner as to be capable of reading/writing the data with respect to the D-PRO unit 52 through a microcomputer bus for exclusive use in order to read/write the data with respect to a management area of a file or the like.

In the apparatus of FIG. 23, first the optical disk 100, for example, DVD-RAM/-RW/-R/Blue media (recordable media using blue laser) or the like, is assumed as a recording medium, and the hard disk drive (HDD) 100a (and/or a large-capacity memory card (not shown), etc.) is assumed as an auxiliary storage device.

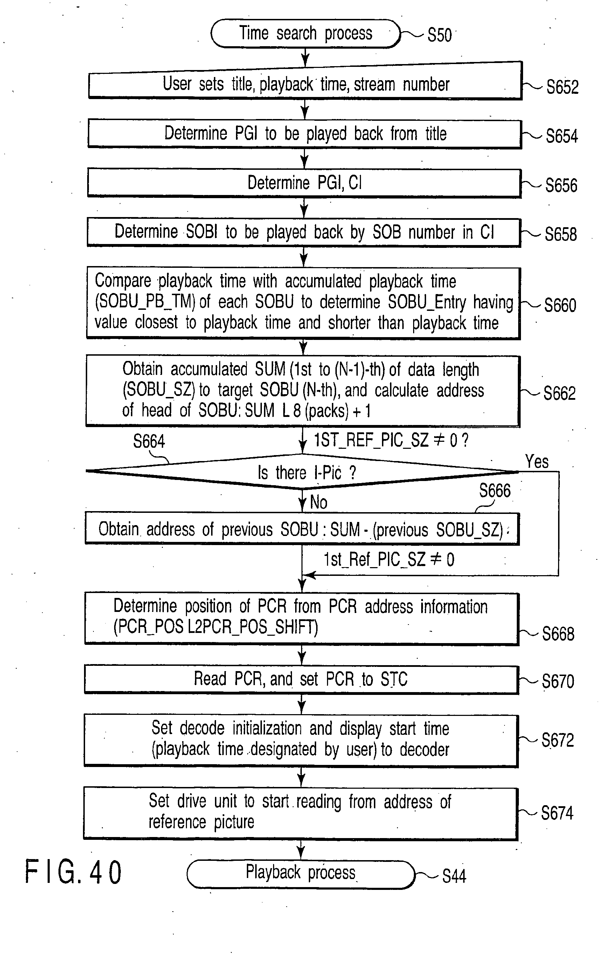

A way of using these plurality of mediums is, for example, as follows. That is, the stream recording is performed with respect to the HDD 100a utilizing the data structure (format) of FIGS. 1 to 22. Moreover, in the stream recording contents recorded in the HDD 100a, the program desired to be stored by the user is subjected to the stream recording (direct copying or digital dubbing) as such in the disk 100 (in a case where the copying is not prohibited by the copy control information CCI). In this case, only desired program having a quality equivalent to an original quality of the digital broadcasting can be recorded in the disk 100. Furthermore, since the data structure of the present embodiment is utilized in the stream recording contents copied to the disk 100, special playback such as time search (described later with reference to FIG. 40) is facilitated even in the stream recording.

A concrete example of a digital recorder (streamer/video recorder comprising a combination of DVD-RAM/ -RW/-R/Blue media with the HDD) having the above-described characteristics is the apparatus of FIG. 23. The digital recorder of FIG. 23 roughly comprises the tuner unit 82, 83, 89, disk unit 100, 100a, encoder unit 79, decoder unit 59, and control unit 80.

Satellite digital TV broadcasting is broadcasted from a broadcasting station through a communication satellite. The broadcasted digital data is received and reproduced by the STB unit 83. The STB unit 83 is a unit which extends and reproduces the scrambled data based on a key code supplied from the broadcasting station. At this time, the scrambling from the broadcasting station is descrambled. Here, the data is scrambled in order to prevent the broadcasted program from being illegally heard/seen by a user who does not contract reception with respect to the broadcasting station.

In the STB unit 83, the broadcasted digital data is received by a tuner system (not shown). When the received data is reproduced as such, the scrambling is descrambled by a digital extension unit, the received data is decoded by an MPEG decoder unit, the data is converted into a TV signal by a video encoder unit, and the TV signal is sent to the outside via the D/A converter 67. Accordingly, the digital broadcasting program received by the STB unit 83 can be displayed by the analog TV monitor 68.

Terrestrial digital broadcasting is received and processed in the same manner as in the satellite broadcasting except that the broadcasting does not go through the communication satellite (and the data is not be scrambled in free broadcasting). That is, the terrestrial digital broadcasting is received by the terrestrial digital tuner unit 89. When the broadcasting is reproduced as such, the decoded TV signal is sent to the outside via the D/A converter 67. Accordingly, the digital broadcasting'program received by the terrestrial digital tuner unit 89 can be displayed by the analog TV monitor 68.

The terrestrial digital tuner unit 89 and the STB unit 83 supplies command/error information to a system bus (MPU unit 80).

The terrestrial analog broadcasting is received by the terrestrial tuner unit 82. When the broadcasting is reproduced as such, the received analog TV signal is sent to the outside. Accordingly, the analog broadcasting program received by the terrestrial tuner unit 82 can be displayed by the TV monitor 68.

An analog video signal analog-input from an external AV input 81 can be sent straight to the TV monitor 68, but may be once A/D converted by the A/D converter 84, thereafter returned to the analog video signal by the D/A converter 67, and sent to an external TV monitor 68. In this constitution, even when an analog VCR playback signal having,many jitters is input from the external AV input 81, the (digital time base collected) analog video signal that does not have any jitter can be output on the side of the TV monitor 68.

The digital video signal digital-input from the digital I/F (IEEE 1394 interface) 74 is sent to the external TV monitor 68. Accordingly, the digital video signal input in the digital I/F 74 can be displayed in the TV monitor 68.

The satellite digital broadcasting, terrestrial digital broadcasting, or a bit stream (MPEG-TS) input from the digital I/F 74 can be stream-recorded as the stream object 132 of FIG. 1E in the stream object group recording area 131 (FIG. 1D) of the disk 100 (and/or the HDD 100a).

Moreover, the terrestrial analog broadcasting or the analog video signal from the AV input 81 can be video-recorded in the VR object group recording area 122 (FIG. 1D) of the disk 100 (and/or the HDD 100a).

It is to be noted that the apparatus can be configured in such a manner that the terrestrial analog broadcasting or the analog video signal from the AV input 81 is once A/D converted, and the stream recording is performed, not the video recording. Conversely, the apparatus may be configured in such a manner that the satellite digital broadcasting, the terrestrial digital broadcasting, or the bit stream (MPEG-TS) input from the digital I/F 74 is subjected to the video recording, not the stream recording (after necessary format conversion is performed).

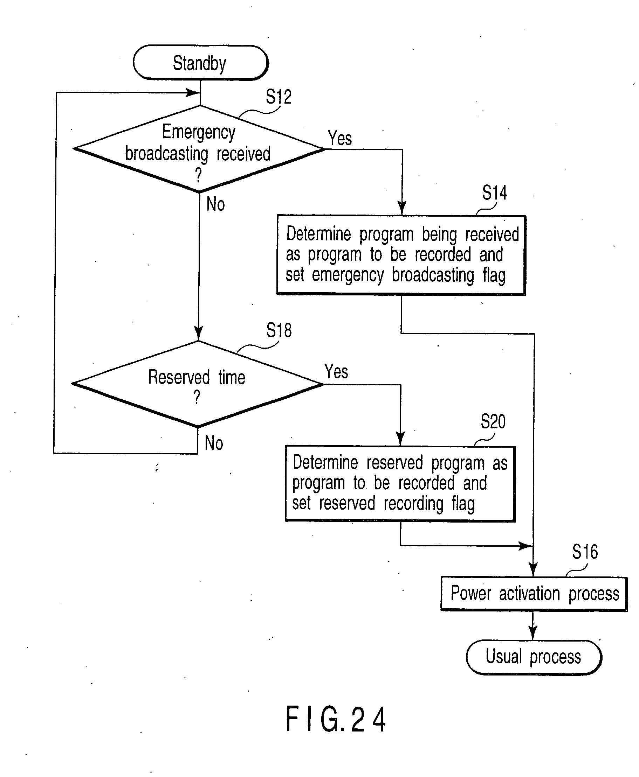

Recording/reproducing control of the stream recording or the video recording is performed by firmware (control program, etc. corresponding to an operation of FIGS. 24 to 43 described later) written in a ROM 80C of the MPU unit 80. The MPU unit 80 has a management data generator 80B of the stream recording and video recording, prepares various management information using a work RAM 80A as a work area, and appropriately records the prepared management information in the AV data management information recording area 130 of FIG. 1D. The MPU unit 80 reproduces the management information recorded in the AV data management information recording area 130, and performs various controls (FIGS. 24 to 43) based on the reproduced management information. It is to be noted that manufacture ID information or the like of the apparatus of FIG. 23 can be written beforehand in the ROM 80C of the MPU unit 80.

Characteristics of the medium 100 (100a) for use in the apparatus of FIG. 23 will be simply summarized as follows. That is, the medium comprises a management area 130 and a data area 131. The data is separated into a plurality of object data (stream objects (SQBs)) and recorded in the data area, and each object data comprises a set of data units (SOBUs). Moreover, one data unit (SOBU) comprises pack groups obtained by pack-grouping digital broadcasting signals for each TS packet, conforming to the MPEG-TS, by a plurality of packs (see FIGS. 1F, 21). On the other hand, the management area 130 comprises EX_PGC information (EX_PGCI) as information which manages the playback procedure, and the EX_PGC information (EX_PGCI) comprises cell information (CI). Furthermore, the management area 130 has information which manages the object data (stream object (SOB)).

The apparatus of FIG. 23 can perform the stream recording in addition to the video recording with respect to the medium 100 (100a) having the above-described data structure. In this case, to take the program map table PMT or the service information SI from the stream of the TS packet, the MPU unit 80 is configured in such a manner as to have a service information fetching section (not shown, firmware constituting a part of the management data generator 80B). The MPU unit 80 is also configured in such a manner as to have an attribute information generator (not shown, firmware constituting a part of the management data generator 80B) which prepares attribute information (PCR_LB number, etc.) based on the information taken by the service information fetching section.

In the apparatus of FIG. 23, the signals at the time of the recording flow, for example, as follows. The TS packet data received by the STB unit 83 (or the terrestrial digital tuner unit 89) is packet-grouped by the formatter unit 90, and stored into a work area (buffer memory unit 91). When a certain amount of data is stored (in a stage in which the data for one or integer times CDA is stored), the data is recorded in the disk 100. In the operation at this time, on received the TS packet, the packets are grouped every 85 packets, and a packet group header is prepared.

Moreover, the analog signal input via the terrestrial tuner unit 82 or a line input is digital-converted by the A/D converter 84. The digital signal is input into the respective encoder unit 86, 87. The video signal is input into the video encoder unit 87, the audio signal is input into the audio encoder unit 86, character data such as character broadcasting is input into an SP encoder unit (not shown), the video signal is MPEG-compressed, the audio signal is subjected to AC3 compression or MPEG audio compression, and the character data is subjected to run-length compression.

When the compressed data is formed into a block from each encoder unit, the block is formed in such a manner as to indicate 2,048 bytes, and the data is input into the formatter unit 90. In the formatter unit 90, each packet is formed into the block, further multiplexed, and sent to the D-PRO unit 52. The D-PRO unit 52 prepares an ECC block every 16 (or 32) blocks, attaches error correction data, and records the data in the disk-100 by the disk drive unit 51.

Here, in a case where the drive unit 51 is seeking the data or jumps to another track, the data is input into the HDD buffer unit 53 in a busy state, and the apparatus waits until the preparations of the RAM drive unit 51 are made. Furthermore, the drive unit 51 prepares each delimitation information during the recording, and periodically sends the information to the MPU unit 80 (GOP head interruption, etc.). As the delimitation information, there are the LB number of the VOBU (SOBU), end address of the I picture from the VOBU (SOBU) head, playback time of VOBU (SOBU) and the like.

Moreover, in the flow of the recording at the time of the reproducing, the data is read from the disk 100 by the drive unit 51, errors are corrected by the D-PRO unit 52, and the data is input into the decode units 61, 63, 64. The MPU unit 80 determines whether the type of the input data is VR data or ESR data (determined by Cell TYPE), and sets the type to the decoder unit before playback. In the case of the ESR data, the MPU unit 80 determines PMT_ID to be played back from cell information CI to be played back, determines the PID of each item (video, audio, etc.) to be played back from the corresponding PMT, and sets the PID to the decoder unit. The decoder unit sends each TS packet by the demultiplexer 60 to each decoder unit based on the PID. Furthermore, the data is sent to the TS packet transfer unit 101, and transmitted to the STB unit 83 (1394 I/F 74) in the form of the TS packet in accordance with the arrival time. Each decoder unit performs the decoding, and the data is converted into the analog signal by'the D/A converter 67, and displayed in the TV monitor 68.

In the case of the VR data, the demultiplexer 60 sends the data to each decoder unit in accordance with the fixed ID. Each decoder unit performs the decoding, and the data is converted into the analog signal by the D/A converter 67, and displayed in the TV monitor 68.

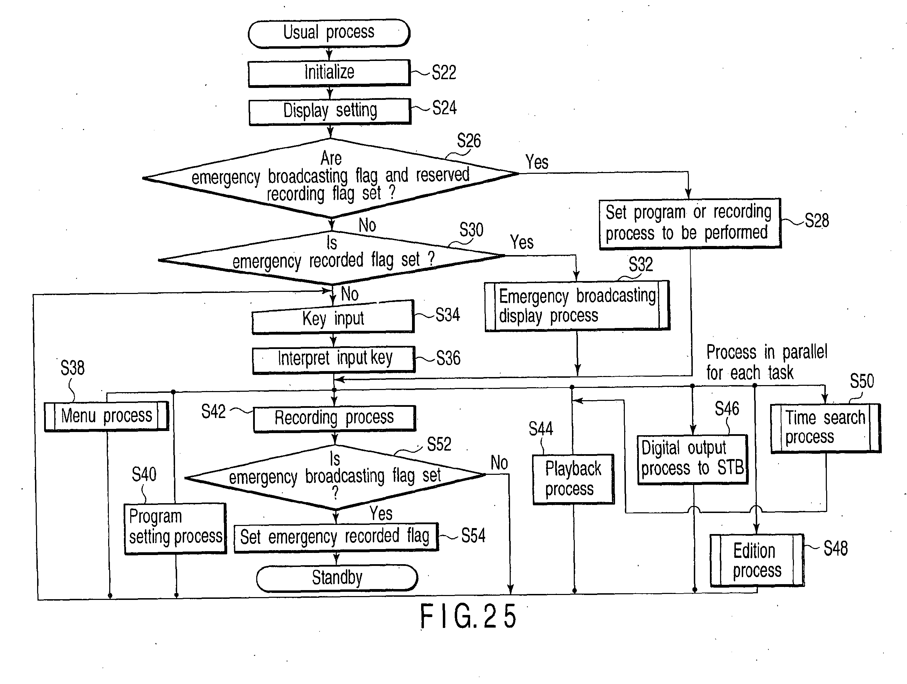

FIG. 24 is a flowchart showing an operation at a main power-off time (standby time). Even when a main power is off, power is supplied to the terrestrial digital tuner unit 89, MPU unit 80, timer unit, and display unit 104. On receiving the emergency broadcasting at step S12, the emergency broadcasting detection unit 108 gives a power activation instruction to the MPU unit 80, determines at step S14 the program (emergency broadcasting) being received as a program to be recorded, and sets an emergency broadcasting flag to the SOB_GI (FIG. 8). A power activation process is performed at step S16, and the process advances to a usual process (FIG. 25). At step S12, digital broadcasting data is taken in, an emergency information descriptor in the program map table PMT is found, and emergency information Start_End_Flag in the descriptor is checked. When the flag is 1, it is determined that the emergency broadcasting has been received. An emergency level is also found by service information Signal_Level.

When the emergency broadcasting is not received at step S12, it is determined at step S18 whether or not it is a reserved time. At the reserved time, the reserved program is determined as the program to be recorded at step S20. After setting a reserved recording flag, a power activation process is performed at step S16, and the process advances to a usual process (FIG. 25).

FIG. 25 is a flowchart showing an example of an operation of the usual process. For example, when the power supply of the whole apparatus is activated, theMPU unit 80 performs initial setting (at the time of factory shipping or after user's setting) (step S22), performs display setting (step S24), and determines whether or not the emergency broadcasting flag and reserved recording flag have been set (step S26). When the flag is set, a program setting process or recording process is set to be performed (step S28).

When the flag is not set, it is determined at step S30 whether or not the emergency recorded flag is set. When the emergency recorded flag is set, an emergency broadcasting display process is performed at step S32.

When the emergency recorded flag is not set, a user's key operation is waited for at step S34. When the user performs key input via the key input unit 103 or the remote controller 103a (step S34), the MPU unit 80 interprets contents of the key input (step S36). The following seven data processes are appropriately executed in accordance with results of the input key interpretation.

That is, for example, when the key input is a key operation associated with the menu, a menu process is performed at step S38. Thereafter, the process returns to step S34 in which the key input is waited for.

When the key input is a key operation associated with the program setting, the program setting process is performed at step S40. When the key input is the key operation for starting the recording, a recording process is performed at step S42. After the recording process, it is determined at step S52 whether or not the emergency broadcasting flag is set. When the flag is set, the emergency recorded flag is set at step S54, and the process returns to a standby process. When the flag is not set, the process returns to step S34 to wait for a next key input. When the key input is a key operation for starting the playback, a playback process is performed at step S44. Thereafter, the process returns to step S34 to wait for a next key input. When the key input is a key operation for digital output to the STB unit 83, a digital output process is performed at step S46, and thereafter the process returns to step S34 to wait for a next key input. When the key input is a key operation of an edition process, the edition process is performed at step S48, and thereafter the process returns to step S34 to wait for a next key input. When the key input is a key operation for a time search process, the time search process is performed at step S50, and thereafter the process advances to a playback process (step S44).

Seven processes of steps S38, S40, S42, S44, S46, S48, S50 are appropriately processed in parallel for each task. For example, a process (S46) of the digital output to the STB unit 83 is executed in parallel during the playback process (S44). Alternatively, ,a new program setting process (S40) can be configured to be carried out in parallel during the recording process (S42) which is not timer reserved recording. Alternatively, the playback process (S44) and digital output process (S46) can be configured to be processed in parallel during the recording process (S42) utilizing characteristics of the recording of the disk accessible at a high speed. It is also possible to perform an edition process (S48) of the disk during the recording into the HDD 100a.

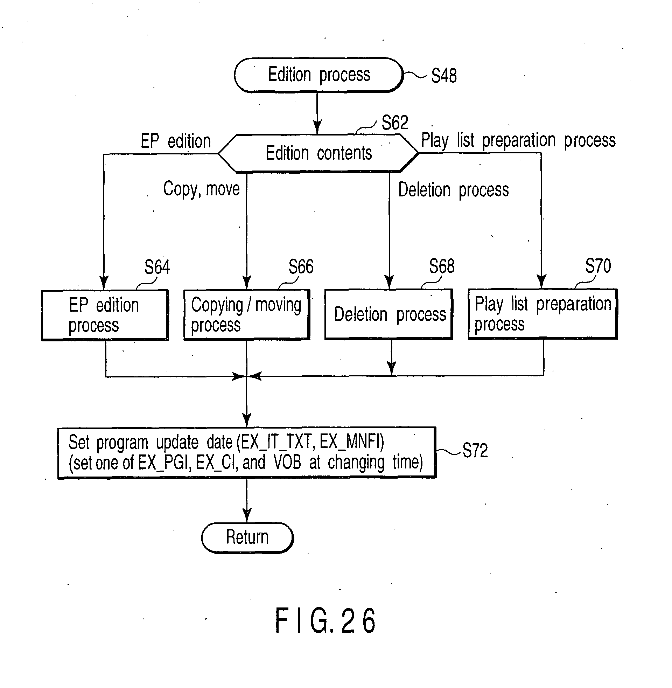

FIG. 26 is a flowchart (edition operation process flow) showing one example of contents of the edition process (S48) shown in FIG. 25. When entering the edition process, the flow can enter one of four processes (S64, S66, S68, S70) in accordance with edition contents (step S62). When an entry point edition process (step S64), copying/moving process (step S66), deletion process (step S68), or play list preparation process (step S70) ends, a program update date (EX_PGI, EX_IT_TXT, EX_MNFI) is set. It is to be noted that one of EX_PGI, EX_CI, and VOB is set at a changing time.

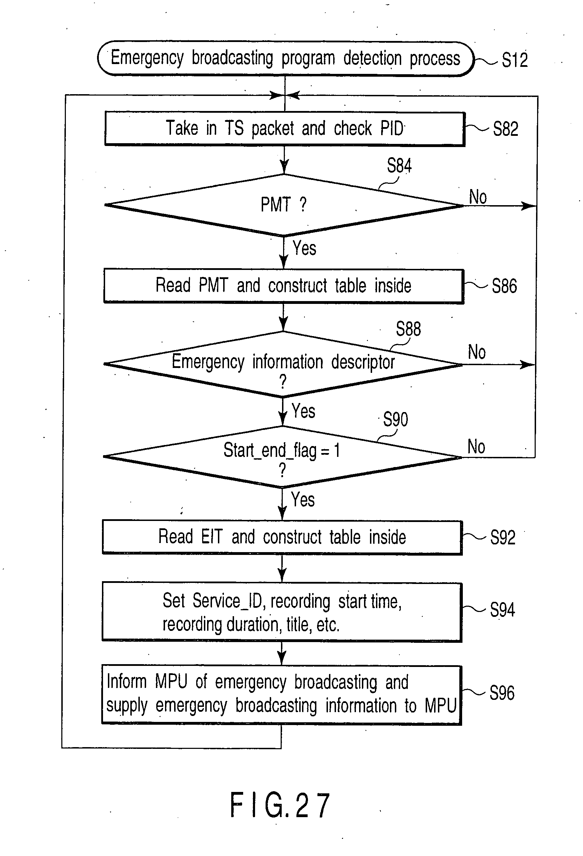

FIG. 27 is a flowchart showing details of the emergency broadcasting program detection process (S12) of FIG. 24. At step S82, the TS packet is taken in, and the PID is checked. It is determined at step S84 whether or not there is a program map table (PMT). When there is the PMT, the PMT is read at step S86, and a table is constructed inside. It is determined at step S88 whether or not there is an emergency information descriptor. When there is the descriptor, it is determined at step S90 whether or not an emergency information Start_End_Flag is 1. When the flag is 1, an event information table (EIT) is read at step S92, and a table is constructed inside. At step S94, service_ID, recording start time, recording time, title and the like are set. At step S96, it is informed that the emergency broadcasting has entered the MPU unit 80, and the emergency broadcasting information is sent to the MPU unit 80.

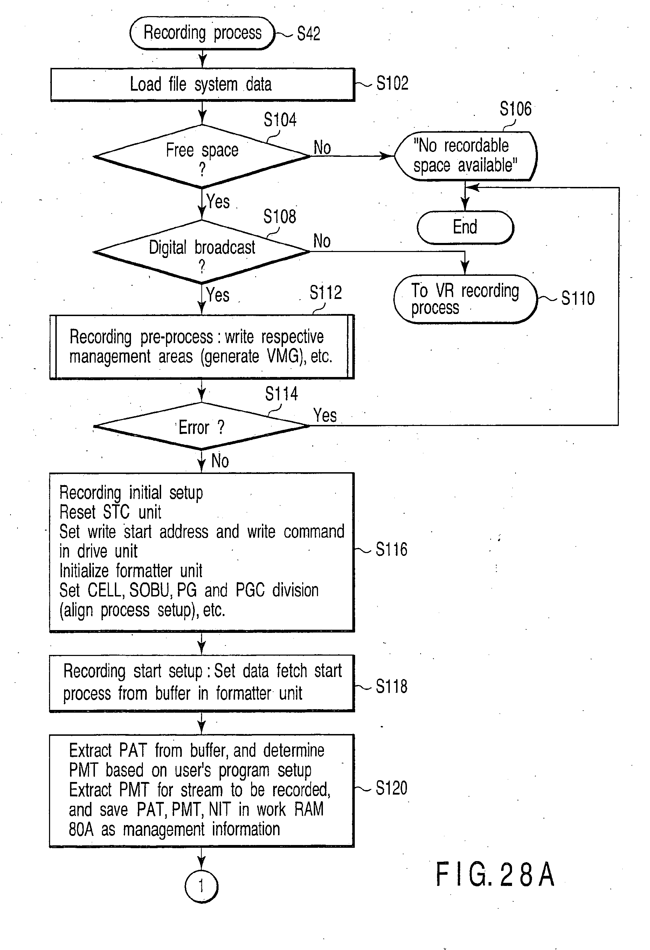

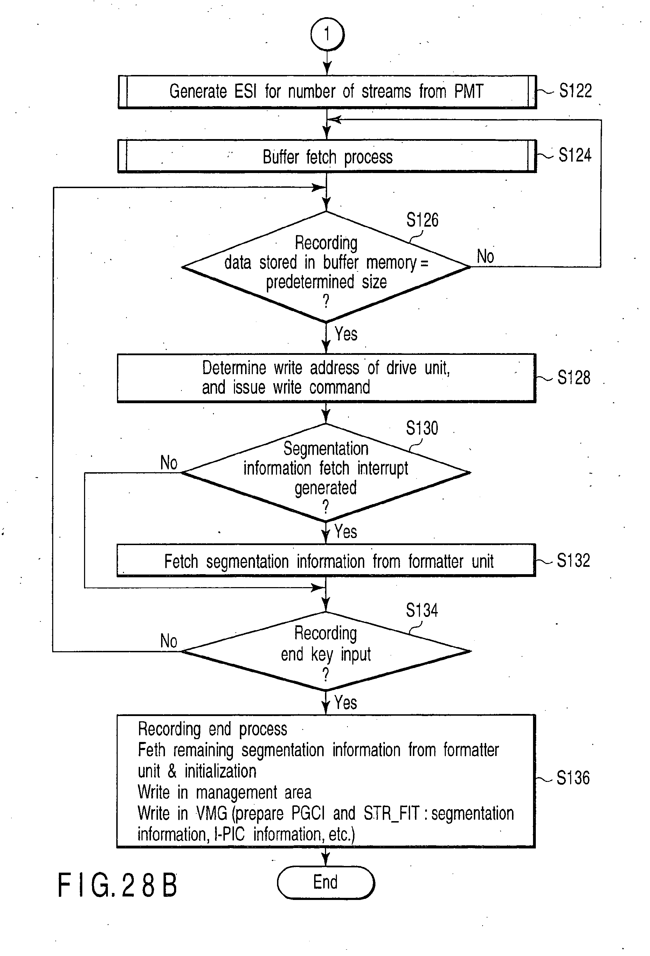

FIGS. 28A and 28B show a flowchart (recording flow) showing one example of a recording operation of the apparatus of FIG. 23. The program to be recorded is determined beforehand using an electronic program guide (EPG) in the program setting process (S40) of FIG. 25, the receiving is started, and the determined program is recorded.

<01> On receiving a recording command from the key input unit 103, the MPU unit 80 reads management data from the drive unit 51 (step S102), and determines a write area. At this time, a file system is checked to determine whether or not the recording is possible (whether or not a recordable capacity is left in the disk 100 or the HDD 100a). When the recording is not possible (No at step S104), the unit informs the user to the effect ("there is not any recording space") (step S106), and the recording process is discontinued.

When the recording is possible (YES in step S104), it is determined whether to perform the stream recording of the digital broadcasting or the video recording of the analog broadcasting (or the video recording of the analog signal obtained by D/A converting the digital broadcasting signal). When the stream recording of the digital broadcasting is not performed (NO at step S108), the process shifts to a recording process (S110) based on video recording specifications. In the case of the stream recording of the digital broadcasting (YES in step S108), a recording start position is determined based on the management data read at step S102.

<02> A management area is set in such a manner as to write the data in the determined area, and a write start address of video data is set to the drive unit 51 to prepare for the recording of the data (step S112).

When an error is generated in preparing the management information (VMG) (YES at step S114), the process ends. When the preparation of the management information (VMG) ends without any error (NO in step S114), the process shifts to initialization (step S116) for the next recording.

<03> As part of the initialization for the recording, time is reset with respect to the STC unit 102 (step S116). Here, the STC unit 102 is a system timer, and the recording/reproducing is performed on the basis of the count value of the timer (with fineness of a frame unit).

<04> The PAT (included in the MPEG-TS from the STB unit 83) of the program to be recorded is read, the PID for taking in the PMT of the target program is determined, the target PMT is read, and the PID of each data (video, audio) to be decoded (recorded) is determined. At this time, the PAT and PMT at the start of the recording are stored in the work RAM 80A of the MPU unit 80, and written into the management information (step S120). In the file system, the data of a VMG file is written, and information (FIG. 4) necessary for the VMGI is written.

Here, the PAT can include information such as TS_ID, NETWORK_PID, PMT_ID and the like, the PMT can include information such as SERVICE_ID, value of Registration_Descriptor (REG_DES_VALUE), PCR_PID, SOB_ES_Ns and the like, and the NIT can include SERVICE_TYPE.

<05> As part of the initialization for the recording, the recording is set to each unit (step S116). In this case, in the formatter unit 90, segmentation of each data is set (cell, SOBU, program, packet group division setting), or receiving/taking of the TS packet is set. In this case, the PID of the data to be recorded is.set, and the only target video stream is recorded. The buffer memory unit 91 is set in such a manner as to start holding the TS packet.

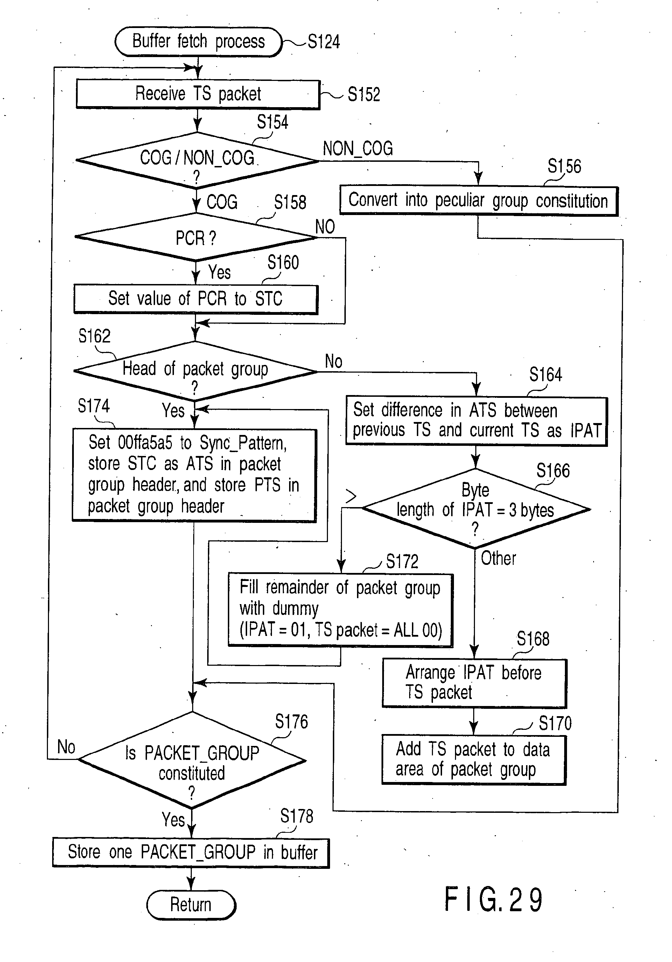

As part of recording start setup, a buffer data fetch start process from the buffer memory unit 91 is set in the formatter unit 90 (step S118). Then, the formatter unit 90 starts a buffer fetch process (described later with reference to FIG. 29).

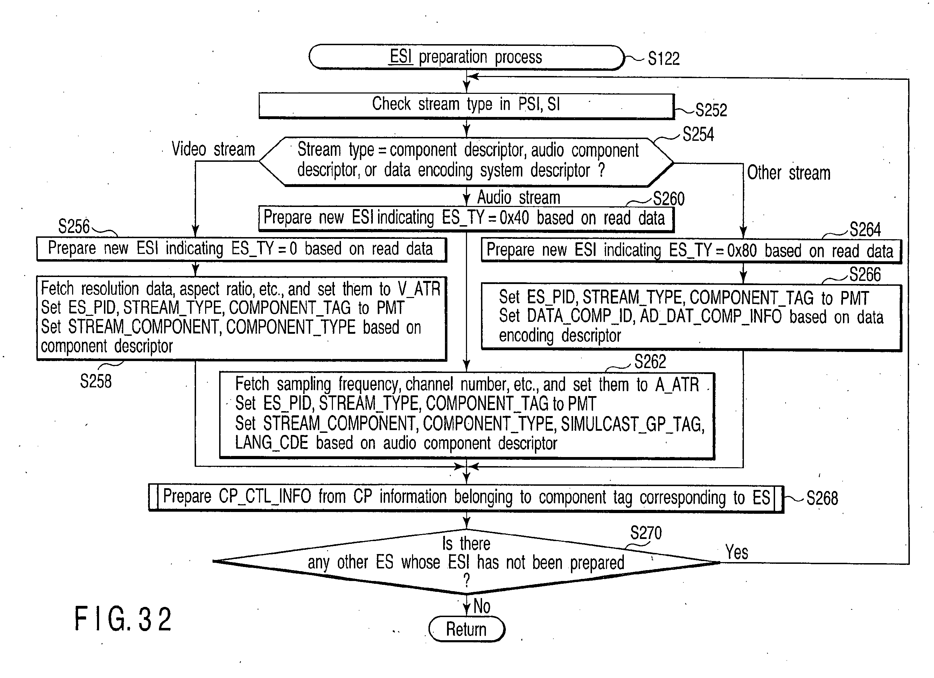

<06> The ESIs are prepared as many as the video/audio streams from the PMT (S122, the details are shown in FIG. 32). Next, a fetch process into the buffer memory unit 91 is started (step S124, the details are shown in FIG. 29).

<07> When a predetermined size of data (for one continuous data area CDA) in the buffer memory unit 91 is stored (YES at step S126), a predetermined ECC process (e.g., preparation of an ECC block by a unit of 8 sectors (16 Kbytes) to 32 sectors (64 Kbytes)) is performed through the D-PRO unit 52 to record the data in the disk (step S128).

<08> The delimitation information is stored in the work RAM 80A of the MPU unit 80 periodically (before the buffer RAM 91 of the formatter unit 90 becomes full, YES at step S130) during the recording (step S132). Here, the delimitation information includes division of one stream or GOP, the size, and start address and end address of the I picture (error start, end PTM, address, etc.).

<09> A remaining amount in the disk 100 (or the HDD 100a) during the recording is checked. When the remaining amount is not more than a certain value (e.g., 150 Mbytes), a remaining capacity process can be performed, although not shown. In the remaining capacity process, erasable non-erased data (tentatively erased file discarded in a dust box file) on the disk is erased, if any, to increase the remaining capacity. In another remaining capacity process, a recording rate is reduced (or MPEG-2 recording is switched to MPEG-1 recording) to increase a recordable time, even when a physical remaining capacity is equal. Alternatively, when a dummy pack for use in dubbing or the like is recorded on the disk 100, a process to discontinue the recording of the dummy pack may be performed as a part of the remaining capacity process. Alternatively, when the remaining capacity of the disk 100 decreases, a process to continue relay recording into a non-recorded area of the HDD 100a may be performed as part of the remaining capacity process.

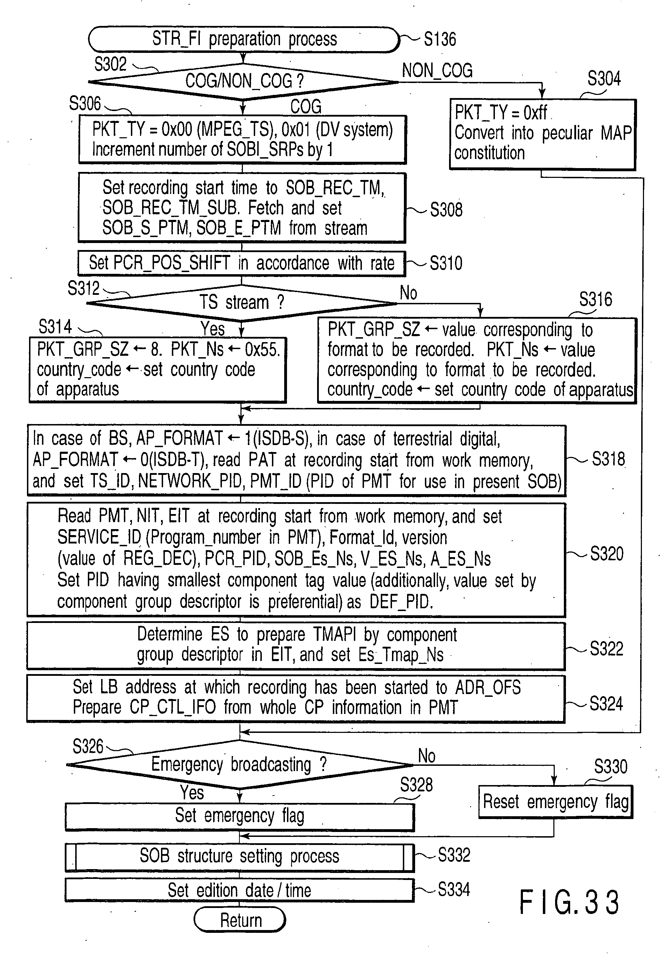

<10> It is determined whether or not the recording ends (whether or not a recording end key has been input or whether or not the remaining capacity has been eliminated). At the end (YES in step S134), the remaining delimitation information is fetched from the formatter unit 90, and added to the work RAM 80A. These data are recorded in management data (VMGI), and the remaining information is further recorded in the file system (step S136). In step S136, stream file information (STR_FI) is also prepared as described later with reference to FIG. 33.

<11> When the recording does not end (NO in step S134), the process returns to step S126 to continue performing the fetching (step S124) and the writing (step S128) of the data.

To display the data on the TV monitor 68, the data is simultaneously sent to the decoder unit 59 and the D-PRO unit 52, and played back. Additionally, in this case, the MPU unit 80 performs the setting at the playback time with respect to the decoder unit 59, and thereafter the decoder unit 59 automatically plays back the data.

The D-PRO unit 52 constitutes an ECC group every 16 packs, attaches the ECC, and sends the data to the drive unit 51. Additionally, when the drive unit 51 is not prepared for the recording into the disk, the drive unit 51 transfers the data to the temporary storage unit 53, waits until preparations for recording the data are completed, and starts the recording in a stage in which the preparations are made. Here, since the temporary storage unit 53 holds the recording data for several minutes or more by a high-speed access, a large-capacity memory is preferably used. Additionally, the MPU unit 80 is capable of reading/writing the data with respect to the D-PRO unit 52 through an MPU bus in order to read/write the data with respect to the management area of the file.

FIG. 29 is a flowchart (buffer fetch process flow) showing one example of contents of the buffer fetch process (S124) shown in FIGS. 28A and 28B. Here, since the temporary storage unit 53 holds the recording data for several minutes or more by the high-speed access, a large-capacity memory is preferably used. Additionally, the MPU unit 80 is capable of reading/writing the data with respect to the D-PRO unit 52 through the MPU bus in order to read/write the data with respect to the management area of the file or the like.

FIG. 29 is a flowchart (buffer fetch process flow) showing one example of the contents of the buffer fetch process (S124) shown in FIG. 28B.

<01> The STB unit 83 (or the terrestrial digital tuner unit 89) receives the TS packet (step S152). COG (analyzable) or NON_COG (analysis is impossible) is determined at step S154. In the case of the NON_COG, the packet is converted into a peculiar group constitution at step S156, and the process advances to step S176.

<02> In the case of the COG, it is determined whether or not there is PCR in the fetched TS packet (step S158). When the PCR exists, the STC unit 102 is corrected (step S160).

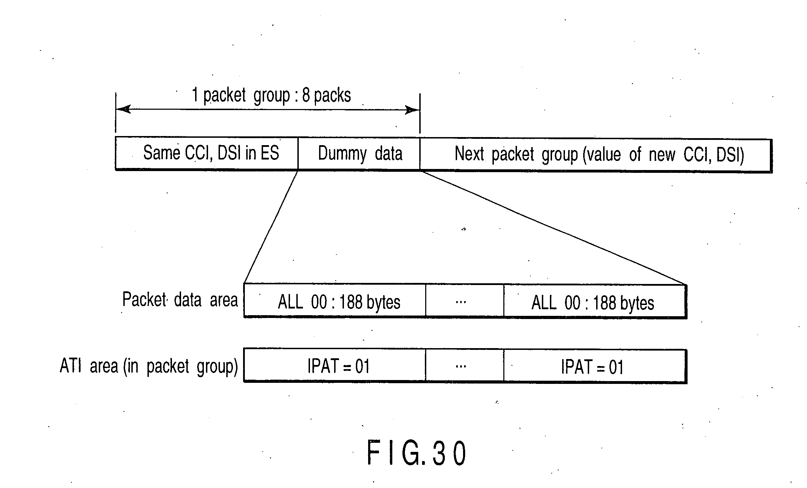

<03> In the case of the head of the packet group (YES at step S162), 00ffa5a5 is set to a synchronous pattern, the arrival time is fetched as the ATS from the STC unit 102 and stored in the packet group header, and the PTS is also stored in the packet group header (step S174). When the packet is not in the header (NO in step S162), a difference between the value of the ATS of the head and the arrival time (or the difference from the arrival time of the TS packet which has arrived previously) is set as IPAT. It is determined at step S166 whether or not the byte length of the PAT is three bytes or more. When the length is not three bytes or more, the IPAT is arranged before the corresponding TS packet (i.e., after the previous TS packet) at step S168, and the TS packet is added to the data area of the packet group at step S170. Thereafter, the process advances to step S176. When the length is three bytes or more, at step S172, as shown in FIG. 30, the remaining packet groups are filled with dummies (188 byte TS packets are all 0 in a packet data area, and IPAT = 01 in an ATI area (in the packet group)). Thereafter, the process advances to step S174.

<04> Next, it is determined whether or not the packet group ends (concretely, it is determined whether or not 85 TS packets have been grouped). When the group does not end (NO in step S176), the process shifts to the head (S152) of the buffer fetch process (S124). When the group ends (YES in step S176), the one packet group data is temporarily stored in the buffer RAM 91 (step S178).

Here, when the picture head is included in the group, the inside of the TS packet is checked, and the PTS is stored. When there is not any video data, and there is audio data only, the CCI is prepared in accordance with copy information for audio. Furthermore, presence of each information is detected, the information is stored in the work RAM 80A, and the information is recorded as the management information in the management, information recording area 130 at the end of the recording (S136 of FIG. 28B).

The packet data read from the disk 100 (or the HDD 100a) is analyzed by the demultiplexer 60 at the time of the playback, and the packet including the TS packet is sent to the TS packet transfer unit 101. Furthermore, thereafter, the read packet data is sent to each decoder 61, 63, 64, and corresponding playback (video playback, sub-picture playback, audio playback) is performed.

When the TS packet is transferred to the STB unit 83 (or when the packet is transmitted to external digital TV or the like via the IEEE 1394 I/F 74), the TS packet transfer unit 101 transfers the only TS packet in the data at a time interval equal to that at an arrival time.

The process of FIG. 29 will be briefly described in another way as follows.

<01> That is, a flow of a signal at a recording time will be described. The TS packet data recorded by the STB unit 83 (or the terrestrial digital tuner unit 89) is packet-grouped by the formatter unit 90, and stored in a work memory (buffer memory unit 91). When a certain amount of the data is stored (the data for one or integer times CDA is stored), the data is recorded in the disk 100. In this case, on receiving the TS packet, the packets are grouped every 85 packets, and the packet group header is prepared.

<02> When there is the PCR in the fetched TS packet, the STC unit 102 is corrected.

<03> In the head of the packet group, the arrival time is fetched as the ATS from the STC unit 102. When the position is not the head, a difference between the value of the ATS of the head and the arrival time (or a difference from the ATS of the previous TS packet) is arranged as the IPAT before the TS packet.

<04> It is determined whether or not the packet group has ended (it is determined whether or not 85 TS packets have been grouped). When the group does not end, the process shifts to <01>. When the grouping ends, group data is temporarily stored in the buffer RAM (buffer memory unit 91).

. Here, when the picture head is included in the group, the TS packet is checked, and the PTS is stored. When there is not any video data, and there is the audio data only, the copy control information CCI is prepared in accordance with the copy information for the audio.

Moreover, at the playback time, <11> the packet data read from the disk 100 is analyzed by the demultiplexer 60, and <12> the packet including the TS packet is sent to the TS packet transfer unit 101. <13> Thereafter, the packet data is sent to each decoder, and reproduced. <14> When the data is transferred to the STB unit 83 (or when the data is transmitted to external apparatuses such as a digital TV and the like), the TS packet transfer unit 101 transfers the only TS packet in the data at the time interval equal to that at the arrival time. Moreover, <15> the STB unit 83 performs the decoding, generates an AV signal, and displays the AV signal in the TV monitor 68 through the video encoder unit in the streamer.

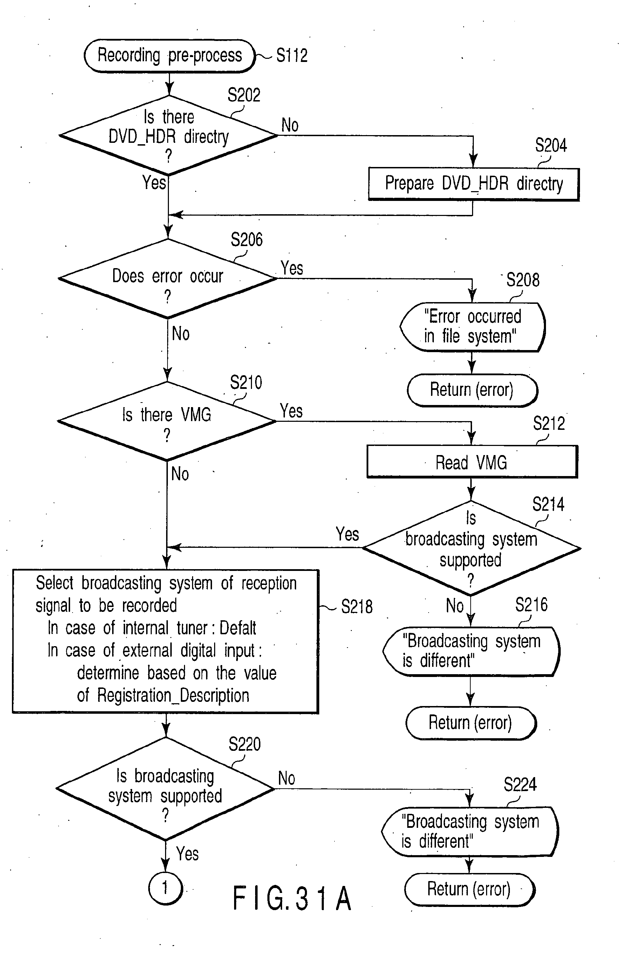

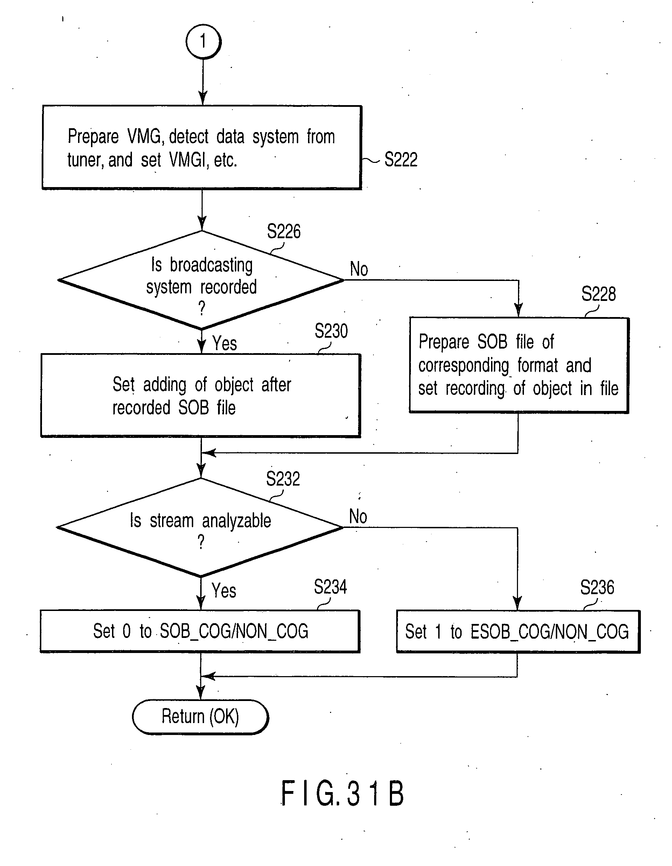

FIGS. 31A and 31B show a flowchart (recording preprocess flow) showing the recording process S42 shown in FIG. 25 (process before starting the recording with respect to the disc-shaped information storage medium shown in FIG. 1A). One example of the pre-process of the recording will be described hereinafter.

(A) A directory (directory into which video recording adaptable to new HD is input and which new VR (adaptable to new HD) and ESR enter) of DVD_HDVR is searched (step S202). When there is not any directory, the directory is prepared (step S204). When there is the directory, the process shifts to the next step.

(B) It is determined whether or not the data has been recorded in the directory. When an error occurs in this case (YES at step S206), this ("error has occurred in the file system") is displayed (step S208), the process ends by the error. When there is not any error (NO in step S206), the presence of the management information (VMGI) of the recording data is checked (step S210). When the data is recorded, and there is the VMGI (YES in step S219), the VMGI is read into the work RAM 80A (step S212), and it is determined (step S214) whether or not the broadcasting system recorded in the information is supported by the present apparatus (apparatus of FIG. 23) (step S214). When the system is not supported (NO in step S214), this ("the broadcasting system is different") is displayed (step S216), and the process ends by the error.

(C) When there is not any management information VMGI of the recording data (NO of step S210), the VMGI is prepared in the work RAM 80A.

(D) The broadcasting system of the data to be recorded is checked (step S218). In the check, when the signal to be recorded is input via an internal tuner, a default system is confirmed in the apparatus. When the signal to be recorded is an external digital input, a value of descriptor Registration_Descriptor sent via the digital input is checked to determine the recording system (step S218).

(E) It is determined whether or not the broadcasting system of the data to be recorded is supported by the present apparatus (apparatus of FIG. 23). When the system is not supported (NO at step S220), this ("the broadcasting system is different") is displayed (step S224), and the process ends by the error.

(F) When the system is supported (YES in step S220), the data system is detected from the tuner and the VMGI is set at step S222. The presence of an SOB file in which a broadcasting system of the data to be recorded matches that recorded in the disk is determined at step S226.

When the file exists, an object is added after the recorded SOB file at step S230, and the process advances to step S232. When the file does not exist, the SOB file of the corresponding format is prepared anew at step S228, the object is recorded in the file, and the process advances to step S232.

It is determined at step S232 whether or not the stream can be analyzed. When the stream can be analyzed, 0 is set to SOB_COG/NON-COG at step S234 to .end the process. When the stream cannot be analyzed, 1 is set to SOB_COG/NON-COG at step S236 to end the process.

FIG. 32 is a flowchart (ESI preparation process flow) showing one example of contents of the stream information (ESI) preparation process (S122) shown in FIG. 28B.

First, a stream type in PSI or SI is checked (step S252). In the stream recording to record the MPEG-TS, the PMT is included in the stream to be recorded, and the stream type is described in the PMT.

Then, the process for each of three stream types is performed from the thus checked stream type (step S254).

That is, when the stream type is a video stream, an ESI indicating ES_TY = 0 is prepared based on the read data at step S256, and attributes (resolution, aspect ratio, etc.) of the video corresponding to the PID are fetched from a component descriptor, and set to V_ATR at step S258. The ES_PID, STREAM_TYPE, and COMPONENT_TAG are set to the PMT, and STREAM_COMPONENT, COMPONENT_TYPE are set from the component descriptor. Thereafter, the process advances to step S268.

When the stream type is an audio stream, an ESI indicating ES_TY = 0x40 is prepared based on the read data at step S260. At step S262, attributes (sampling frequency, quantization bit number, channel number, etc.) of the audio corresponding to the PID are fetched from an audio component descriptor, the ES_PID, STREAM_TYPE, and COMPONENT_TAG are set to the PMT, and STREAM_COMPONENT, COMPONENT_TYPE, SIMULCAST_GP_TAG, LANG_CDE are set to the audio component descriptor. Thereafter, the process advances to step S268.

When the stream type is another stream, an ESI indicating ES_TY = 0x80 is prepared based on the read data at step S264. At step S266, the ES_PID, STREAM_TYPE, and COMPONENT_TAG are set to the PMT, and DATA_COMP_ID, AD_DAT_COMP_INFO are set to a data encoding descriptor. Thereafter, the process advances to step S268.

At step S268, CP_CTRL_INFO (copy control information in SOB_ESI) is prepared from the CP information belonging to a component tag corresponding to the ES.

The above-described process is repeated, when there is another elementary stream that has not prepared the ESI (YES at step S270).

When there is not any more stream that has not prepared the ESI (NO in S270), the process of FIG. 32 ends, and the process returns to S124 of FIG. 28B.

FIG. 33 is a flowchart (stream file information preparation process flow) showing one example of contents of the stream file information (STR_FI) preparation process in the recording end process (S136) shown in FIG. 28B.

(a) COG or NON-COG is determined at step S302. In the case of the NON-COG, at step S304, PKT_TY = 0xff is set, the constitution is converted into a peculiar MAP constitution, and the process advances to step S326.

In the COG, at step S306, PKT_TY = 0x00 (MPEG_TM) 0x01 (DV system) is set, search pointers SOBI_SRPs are increased to increase the SOBI by one, and a recording area of the increased management information (SOBI, SOBI_SRP) is secured in the disk (step S306).

(b) A recording start time is set to SOB_REC_TM, SOB_REC_TM_SUB, and start PTM (SOB_S_PTM) and end PTM (SOB_E_PTM) are fetched from the stream and set (step S308). Here, a clock (the STC unit 102 of FIG. 23) inside the apparatus is set/corrected by a time data table (TDT), and a correct time is constantly obtained.

(c) PCR_POS_SHIFT is set in accordance with a recording rate (step S310).

(d) When the type of the stream is a transport stream (TS stream, ARIB or DVB in a broadcasting system) (YES at step S314), "8" is set to PKT_GRP_SZ, "0x55" is set to PKT_Ns, and a country code of the apparatus is set to the country code (step S314). When the type is not the transport stream (NO in step S312), a value corresponding to the format to be recorded in the PKT_GRP_SZ is set, a value corresponding to the format to be recorded in the PKT_Ns is set, and the country code of the apparatus is set to the country code (step S316).

(e) At step S318, 1 (ISDB-S) is set to AP_FORMAT in the case of BS, 0 (ISDB-T) is set in the case of terrestrial digital broadcasting, the PAT at the recording start is read from a work memory, and TS_ID, NETWORK_PID, PMT_ID (PID of the PMT for use in the present SOB) are set.

At step S320, the PMT, NIT, EIT at the recording start are read from.the work memory, and SERVICE_ID (Program_number in the PMT), Format_Id, version (value of REG_DES), and PCR_PID are set. With regard to FORMAT_ID, and VERSION, a system of default is set in the apparatus in the case of an internal tuner. In the case of an external digital input, the value of Registration_Descriptor sent via the digital input is set. Furthermore, the number of recorded ESs, SOB_Es_Ns, V_ES_Ns, A_ES_Ns are set, and the PID having a smallest component tag value (additionally, the value set by the component group descriptor is preferential) is set to DEF_PID.

At step S322, ES to prepare TMAPI is determined by the component group descriptor in the EIT, and Es_TMAP_Ns is set.

At step S324, an LB address at which the recording is started is set to ADR_OFS, and the TMAPI is prepared for each stream based on each delimitation information. CP_CTRL_INFO (copy control information in SOBI_GI) is prepared from the whole CP information in the PMT. A packet identifier PID of the default is set. The packet identifier PID of the video of the default corresponds to an identifier having a component tag value of 00, or corresponds to a packet identifier PID of the stream corresponding to the component tag described in a main component group in the case of multi-view TV.

It is determined at step S326 whether or not the broadcasting is emergency broadcasting. In the case of the emergency broadcasting, an emergency flag is set at step S328. If not, the emergency flag is cleared at step S330.

At step S332, a process (described later) of setting the structure of the SOB is performed, and at step S334, an edition date/time is set.

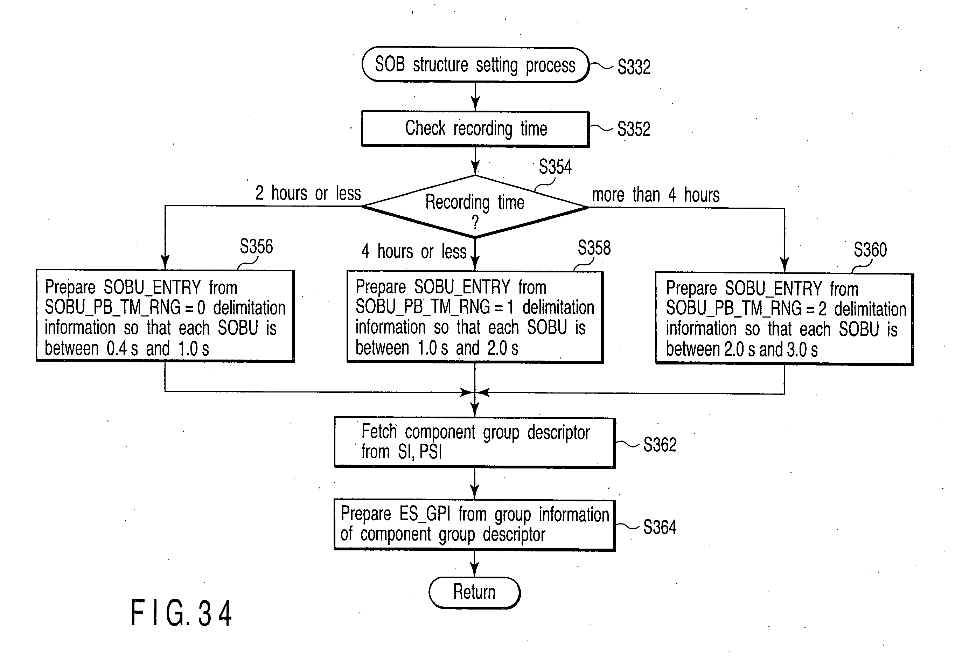

FIG. 34 is a flowchart showing details of the SOB structure setting process (S332) of FIG. 33.

At step S352, a recording time for which the recording has been performed is checked. When the recording time is two hours or less, the process shifts to step S356. When the time is two to four hours, the process shifts to step S358. When the time is four hours or more, the process shifts to step S360.

In step S356, 0 is set to SOB_PB_TM_RNG, SOBU_ENTRY is prepared from delimitation information (information of 0.4 seconds to 1 second) in such a manner that SOBU is 0.4 seconds to 1 second, and the process shifts to step S362.

In step S358, 1 is set to the SOB_PB_TM_RNG, SOBU_ENTRY is prepared from the delimitation information (information of 0.4 seconds to 1.0 second) in such a manner that the SOBU is 1 second to 2 seconds, and the process shifts to step S362.

In step S360, 2 is set to the SOB_PB_TM_RNG, SOBU_ENTRY is prepared from the delimitation information (information of 0.4 second to 1.0 second) in such a manner that the SOBU is 2 to 3 seconds, and the process shifts to step S362.

In step S362, the component group descriptor is fetched from the SI, PSI, the component tag is read for each group, and the value is converted into the packet identifier PID by the value of the stream descriptor. At step S364, 1 is set to the GR_TY in a case where a component group type is 0, and 0 is set in other cases. In each group element, the previously checked packet identifier PID is set for each group to prepare the ES_GPI.

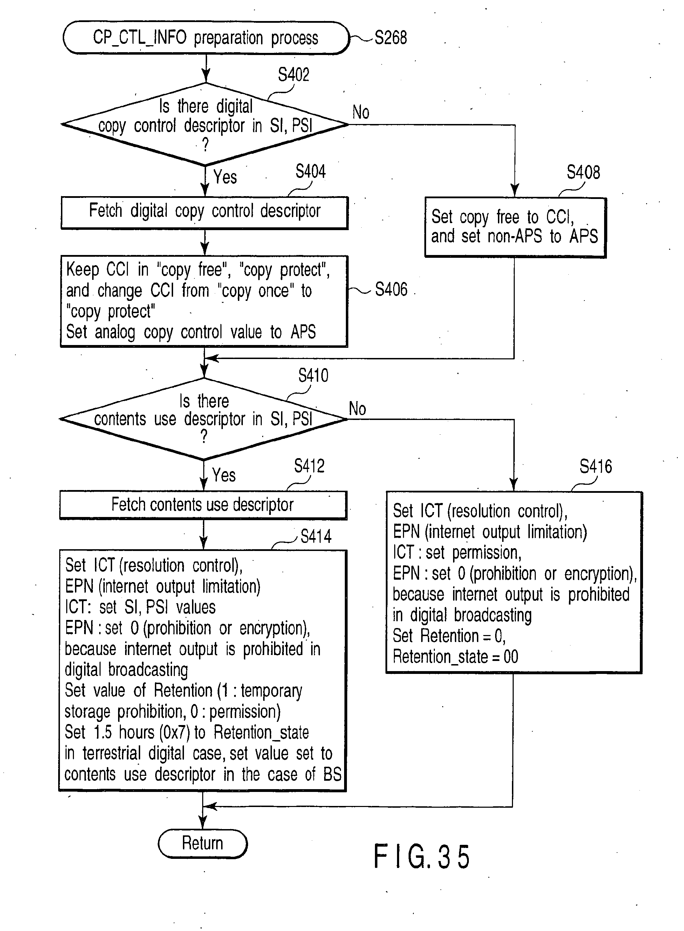

FIG. 35 is a flowchart showing a setting process of CP_CTRL_INFO of step S268 of FIG. 32 and step S324 of FIG. 33. It is determined whether or not there is a digital copy control descriptor in latest program map tables PMT, EIT (SI, PSI). When there is the descriptor, the copy control descriptor is fetched at step S404, copy control information is prepared at step S406, and the process shifts to step S410. In step S406, copy free, copy protect in CCI are set as such, the copy protect is set in a case where one copying operation is permitted, and an analog copy control value is set to APS. When there is not any copy descriptor, at step S408, the copy free is set to CCI, and non-APS is set to the APS.

It is determined at step S410 whether or not there is a contents use descriptor in the latest program map tables PMT, EIT (SI, PSI). When the contents use descriptor is present, the descriptor is fetched at step S412, and ICT (resolution limitation) and EPN (internet output limitation) are set at step S414. The value in the SI, PSI is set to the ICT, 0 (prohibition or encryption) is set to the EPN because an internet output is prohibited in the digital broadcasting, and a value of Retention (1: temporary storage prohibited, 0: permitted) is set. With respect to Retention_State, 1.5 hours (0x7) is set in the case of the terrestrial digital broadcasting, and the value set to the contents use descriptor is set in the case of the BS. The process returns to an original routine.

When there is not any contents use descriptor, at step S416, the ICT (resolution limitation) and EPN (internet output limitation) are set. Permission is set to the ICT, 0 (prohibition or encryption) is set to the EPN because the internet output is prohibited in the digital broadcasting, 0 is set to the value of Retention, 00 is set to Retention_State, and the process returns to the original routine.

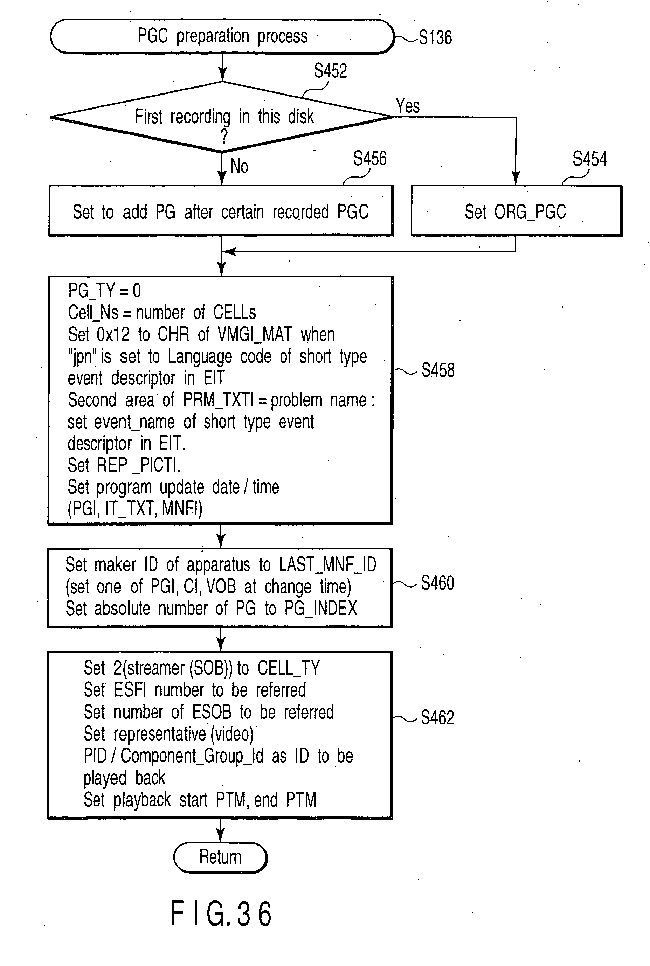

FIG. 36 is a flowchart of an EX_PGC preparation process which is a part of the step S136 during the recording process of FIG. 28B.

It is determined at step S452 whether or not the recording is first recording with respect to the disk. In the first recording, ORG_EX_PGC is prepared anew at step S454. When the recording is not the first recording, EX_PGC is added after a certain recorded ORG_EX_PGC at step S456.

At step S458 after steps S454, S456, erase permission: 0 is set to PG_TY, and the number of the CELLs is set to Cell_Ns. In the ARIB system, when "jpn" is set to language_code of a short type event descriptor in the EIT, 0x12 is set to CHR of VMG_MAT, EVENT_NAME is set in a second area of PRM_TXTI, and information of a representative picture is set to REP_PICTI.

At step S460, manufacture ID of the present apparatus is set to LAST_MNF_ID. When there is a change in PGC, CI, VOB, the manufacture ID of the changed apparatus is set to the value, the value is set to indicate a manufacture which has performed editing/recording at last, and accordingly the change by the different manufacture is easily handled. Furthermore, an absolute number of PG is set to PG_INDEX, and reference by a PG unit is enabled in a case where reference is made from another application software or the like. Furthermore, the present PG update date/time information is recorded. In this case, when there is the corresponding (manufacture's code is matched) MNFI or IT_TXT in the present apparatus, the update date/time information of the corresponding data is also set. Information peculiar to each manufacture is set to the MNFI.

At step S462, information for identifying the streamer (SOB) is set to CELL_TY. An STI_FI number to be referred to, and the number of the SOB to be referred to are set. As the ID to be played back, a representative (video) packet identifier PID, or Component_Group_Id is set, and the number of EPIs, playback start PTM, end PTM, and EP are set, respectively.

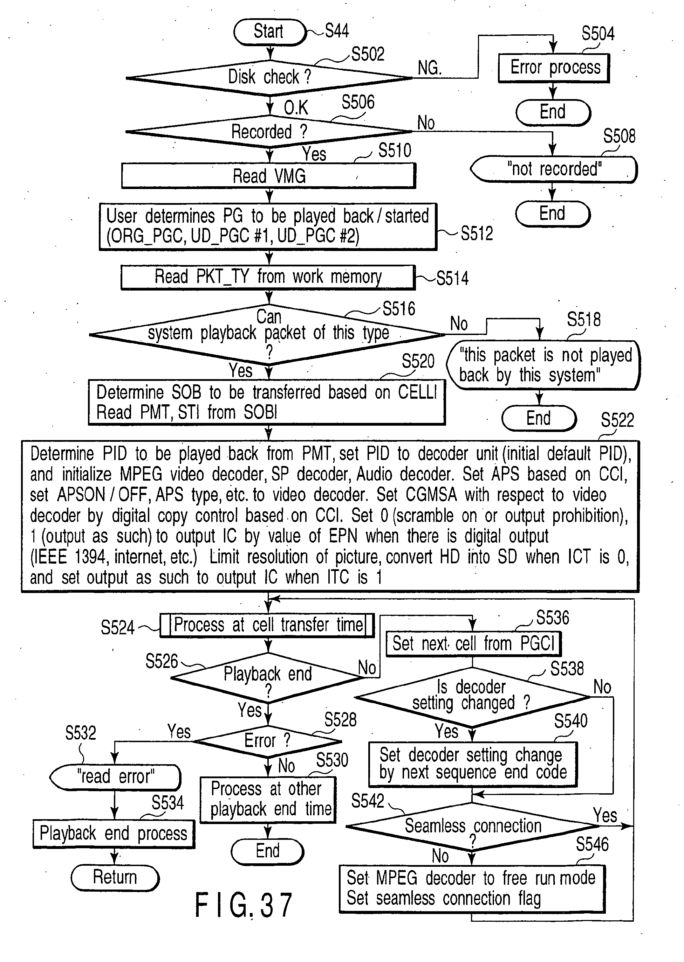

FIG. 37 is a flowchart of the playback process of step S44 of FIG. 25.

It is determined at step S502 whether or not the disk is a rewritable disc (DVD-R, DVD-RW, DVD-RAM). When the disk is not the rewritable disc, this is informed and the process ends at step S504.

At step S506, the file system of the disk is read, and it is determined whether or not there is recorded data. When there is not any recorded data, "not recorded" is displayed, and the process ends at step S508.

A VMG file is read at step S510, and the program, cell to be played back is determined (selected by the user) at step S512. Here, when the playback in a recording order is selected, the playback is performed in accordance with ORG_EX_PGCI. When the playback for each program is selected, the playback is performed in accordance with UD_EX_PGC of the number corresponding to the program to be played back.

The value of the PKT_TY is read from the work memory at step S514, and it is determined at step S516 whether or not the broadcasting system can be handled. When the system cannot be handled, this is displayed and the process ends at step S518 (or the process shifts to the next CELL).

When the system can be handled, at step S520, SOB/VOB to be played back is determined from CELLI to be played back, and PMT, STI are read from the SOBI. At step S522, the PID to be played back is determined from the PMT, each decoder unit is set (initial default PID), and preparations are made for the playback. From the CCI in the packet group header of the head, a video decoder is set to APS, and ON/OFF of the APS, and the type of the APS and the like are set. By the digital copy control, CGMSA is set to the video decoder. Furthermore, when there is a digital output (IEEE 1394, internet, etc.), by the value of the EPN, 0: scramble on or output prohibition, 1: output IC is set as such to the output. When the ICT indicates 0, the resolution of the image is limited, and HD is converted into SD. A value of 1 is set as an output to output IC. In this case, in a case where a frame to start the playback is not the I picture, the previous I picture is read, the decoding is started from the read picture, the display is started at a target frame, and usual reproduction is started.

At step S524, a playback process (described later) of the cell is performed, and it is determined at step S526 whether or not the playback ends. When the playback ends, the error is determined at step S528. In the case of the error, this is displayed at step S532, a playback end process is performed at step S534, and the present operation is ended. When there is not any error, at step S530, the other playback end process is performed, and the present operation ends.

When the playback does not end, at step S536, the next cell is determined from EX_PGCI, and it is determined at step S538 whether or not the setting of the decoder has been changed. When the setting is changed, a changed attribute is set to the decoder in such a manner as to change the setting of the decoder to the next sequence end code at step S540. It is determined at step S542 whether or not there is seamless connection. When there is not any seamless connection, at step S546, an MPEG decoder is set to a free run mode, and a seamless connection flag is set.

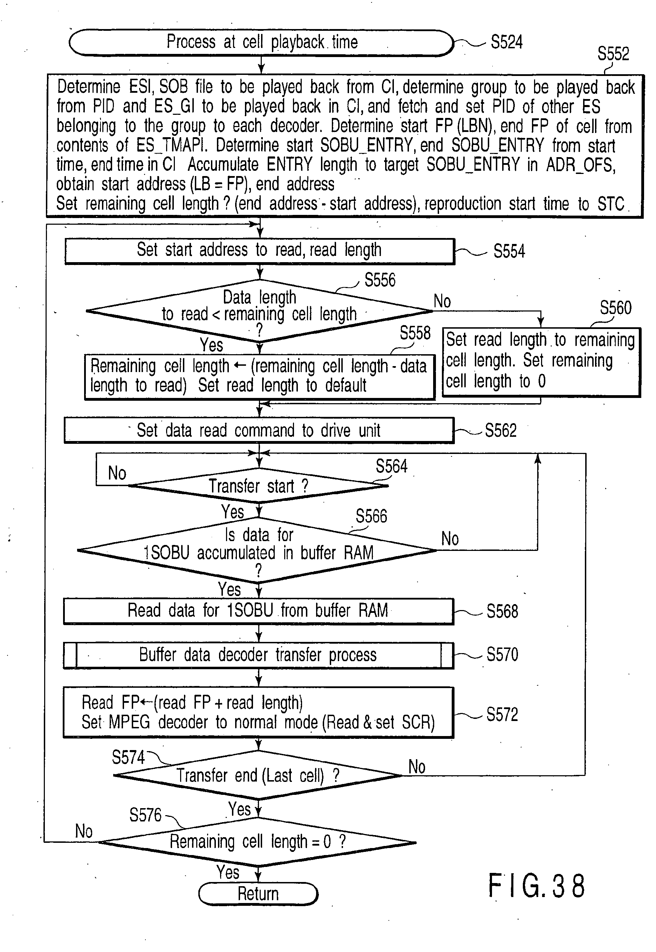

FIG. 38 is a flowchart showing of the cell playback process of step S524 in the playback process of FIG. 37.

At step S552, elementary stream information ESI to be played back, and stream object (SOB) file are determined from cell information CELLI (CI), a group to be played back is determined from the program ID (PID) to be played back in the cell information CI and elementary stream general information ES_GI, and the PID of another ES belonging to the group is fetched and set to each decoder. Furthermore, a start file pointer FP (LBN) of the cell, and end FP are determined from the contents of the ES_TMAPI. Start SOBU_ENTRY, and end SOBU_ENTRY are determined from start time and end time in the CI. A data length of ENTRY to the target SOBU_ENTRY is accumulated in ADR_OFS to obtain a start address (LB = FP), and an end address. A remaining CELL length is a value obtained by subtracting the start address from the end address, and a playback start time is set to the STC. That is, the PID to be played back is fetched from the CI, and collated with SOB_GPI, the GPI to be played back is determined, each PID of the GP is set to the demultiplexer, and each ES is input into the decoder (STB, digital tuner).

Setting is performed in such a manner as to perform a decoding process inside the decoder unit.

At step S554, a read process during the playback is executed, and a start address, and read length (read size), read from the start file pointer are determined.

At step S556, a read unit size to be read is compared with a remaining cell length. When the remaining cell length is larger, at step S558, a value obtained by subtracting the read unit size to be read . from the remaining cell length is set to the remaining cell length, and a read length is set to the default. When the remaining cell length is smaller, at step S560, the read length is set to the remaining cell length, and the remaining cell length is set to 0.

At step S562, the read length is set to the length of the read unit, and read address, read length, and read command are set to the drive unit.

After the transfer starts (YES at step S564), at step S566, the process waits until data for one SOBU is accumulated in the buffer RAM. When the data for one SOBU is accumulated, the data is read from the buffer RAM at step S568, a buffer decoder transfer process is performed at step S570, and the process shifts to the next step.

At step S572, read FP is increased by the read length and updated, and the MPEG decoder is set to a normal mode (reading & setting of a system clock reference SCR).

It is determined at step S574 whether or not the transfer has ended. When the transfer ends, the remaining cell length is determined at step S576. When the flag is not "00", the process returns to step S554. In the case of "00", the present process ends.

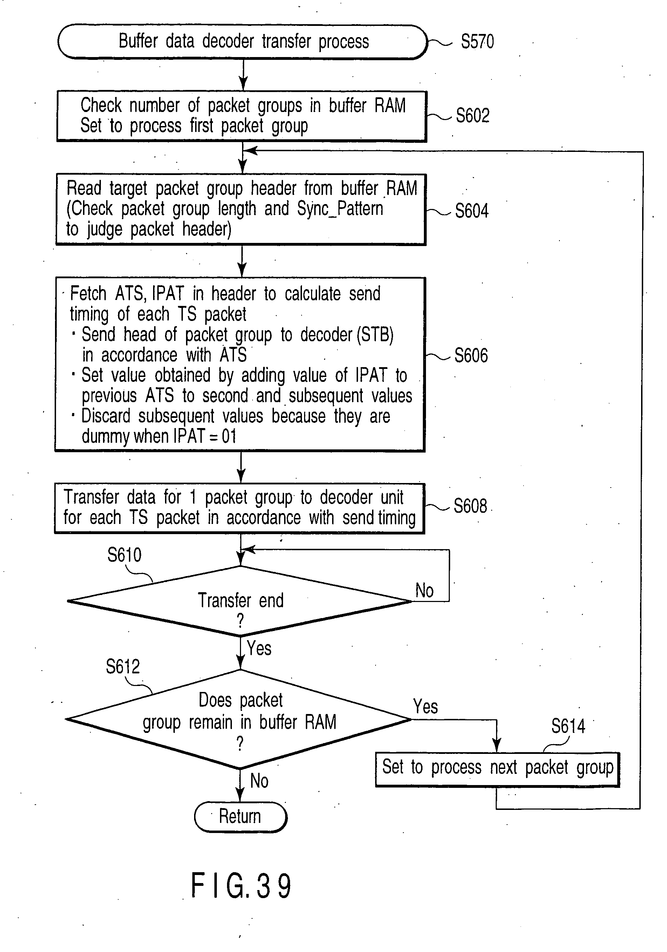

Details of the buffer decoder transfer process (S570) of FIG. 38 are shown in FIG. 39.

At step S602, the number of the packet groups in the buffer RAM is checked. When there is not one packet group, the present process ends. When there are one or more groups, the setting is performed in such a manner as to process the first packet group.

At step S604, the target packet group header is read from the buffer RAM. The head of the packet group (packet group header) is detected from a pattern group length and Sync_Pattern.

At step S606, an arrival time ATS in the packet group header, and the increment IPAT are read, and it is determined whether or not the ATS exists. When the ATS does not exist, one packet group is immediately sent to the decoder unit (STB, digital tuner) (regardless of time). The ATS (six bytes) is set as such to the head of the packet, and subsequently a value obtained by adding up the previous ATS and IPAT is set as a transfer time of each TS packet. When the IPAT indicates "01", the subsequent value is dummy, and is therefore discarded.

At step S608, each packet is sent to the decoder unit (STB unit) at a transfer time of each TS packet.

At step S610, the process waits till the end of the transfer. It is determined at step S612 whether or not the pack group is left in the buffer RAM. When the group is not left, the present process ends. When the pack group is left, the setting is performed in such a manner as to process the next packet group at step S614, and the process returns to step S604.

Details of the time search process (S50) of FIG. 25 are shown in FIG. 40.

At step S652, the user is allowed to select and determine a title to be played back, playback time, and stream number.

At step S654, a program PG to be played back, and cell (CELL) are'determined from the title, and at step S656, the PGI and CELLI are read.

At step S658, the SOB to be played back is determined by the SOB number in the CI, and the SOBI is read.

At step S660, the playback time is compared with the accumulated playback time (SOBU_PB_TM) of each SOBU, and SOBU_Entry having a value closest to the playback time and smaller than the playback time is determined.

At step S662, accumulated SUM (first to N-1-th) of the data length (SOBU_SZ) to the target SOBU (N-th) is obtained, and the address of the head of the SOBU is calculated (SUM x 8(packs) + 1).

It is determined at step S664 whether or not I-PIC of the target SOBU exists (1st_Ref_PIC_SZ $\neq$ 0?). When there is not any I-PIC, at step S666, the information (address) of the previous SOBU is further read, and the same process is repeated (SUM - previous SOBU_SZ).

At step S668, a position of PCR is determined from PCR address information (PCR_POS x $2^{PCR\_POS\_SHIFT}$), and at step S670, the determined PCR is read, and set to the STC.

At step S672, the decoding is initialized, and a display start time (playback time designated by the user) is set with respect to the decoder, and the setting is performed in such a manner as to prevent the displaying from being performed till the playback time. At step S674, the drive unit is set to start the reading from the address of a reference picture.

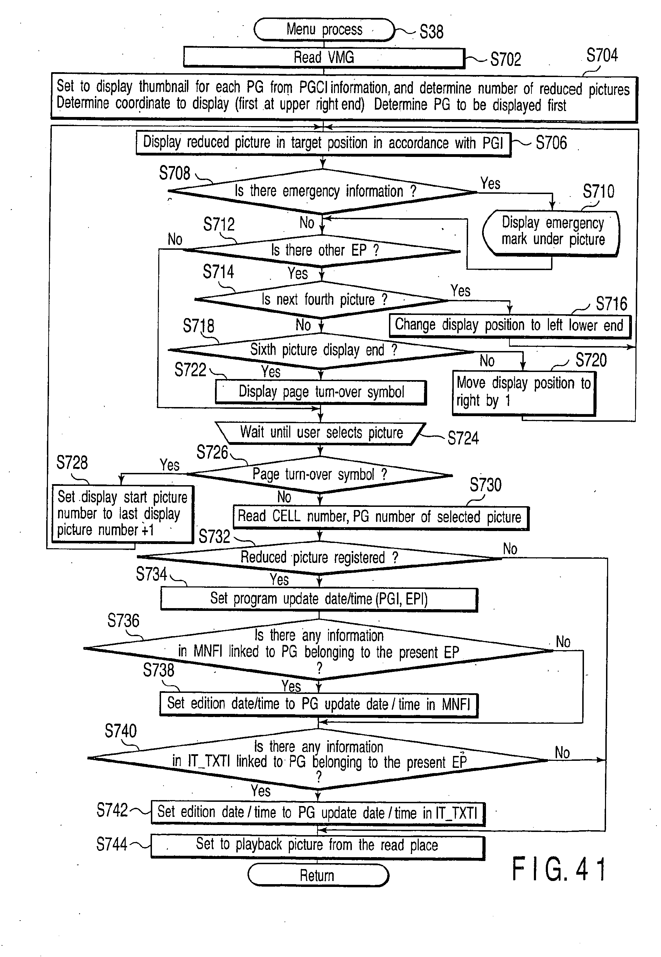

Details of the menu process (S38) of FIG. 25 are shown in FIG. 41.

The VMG is read at step S702, the thumbnail is set to be displayed for each program from the PGCI information at step S704, the number of reduced-scale pictures is determined, a coordinate to be displayed is determined (display position is set to a left end), and the PG to be displayed first is determined.

At step S706, the data of the first PGI is read, and a thumbnail file is opened. It is determined whether or not the reduced picture is registered in the PG by checking whether or not there is a PG index number in the thumbnail file. When there is the number, the reduced picture data is read, and displayed on a target coordinate. A.frame of a place of the PTM of the REP_PIC in the PGI is played back, and the picture is reduced to a predetermined size, and displayed in a target place. The reduced video is compressed to JPEG, and the data is read and additionally recorded in the thumbnail file. In this case, an EP index number is additionally recorded.

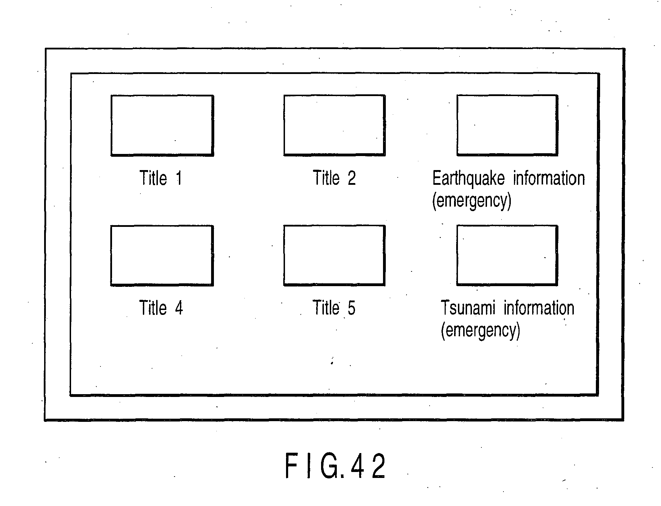

It is determined at step S708 whether or not there is emergency broadcasting information in the SOBI corresponding to the target PG. In the emergency broadcasting, as shown in FIG. 42, the emergency broadcasting is displayed under the reduced picture at step S710.

It is determined at step S712 whether or not there is another EP. When there is the EP, it is determined at step S714 whether or not the next EP is fourth. In the case of the fourth EP, at step S716, the display position is changed to a left lower stage, and the process returns to step S706. When the EP is not the fourth, it is determined at step S718 whether or not the display of a sixth picture ends. When the display of the sixth picture does not end, the display position is moved to the right by one stage at step S720, and the process returns to step S706.

When the display of the sixth picture ends, a page turn-over symbol is displayed at step S722. At step S724, the process waits until the user selects the picture. When it is detected at step S726 that the page turn-over symbol has been selected, at step S728 the display start picture number is set at the picture number displayed last + 1, and the process returns to step S706.

When the picture number is selected, not the page turn-over symbol, the cell number and program number of the selected picture are read at step S730. It is determined at step S732 whether or not the reduced pictures have been registered. When the pictures are not registered, the process advances to step S744. When the pictures are registered, the program update date/time (PGI, EPI) is set at step S734, and it is determined at step S736 whether or not there is an item of information in EX_MNFI linked to the program belonging to the present EP. When there is not any link, step S738 is skipped. When there is the link, at step S738, edition date/time is set to the program update date/time in the EX_MNFI. It is determined at step S740 whether or not there is a text in IT_TXT linked to the program belonging to the present EP. When there is not any link, step S742 is slipped. When there is the link, at step S742, the edition date/time is set to the program update date/time in the IT_TXT. At step S744, a read place is set to be played back, and the present process ends.

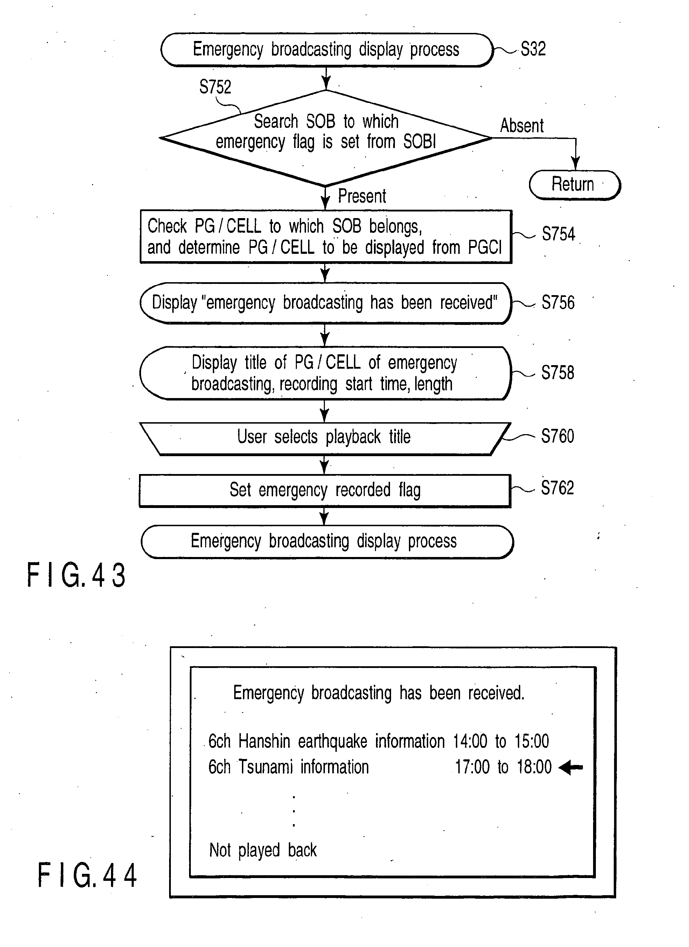

FIG. 43 is a flowchart showing details of the emergency broadcasting display process (S32) of FIG. 25.

It is determined at step S752 whether or not there is a SOB having the emergency broadcasting flag set therein from the SOBI. When there is not the SOB, the process ends. When there is the SOB, at step S754, PG/CELL of ORG_EX_PGC to which the corresponding SOB belongs is checked from the PGCI, and the PG/CELL to be displayed is determined.

At step S756, "the emergency broadcasting has been received" is displayed. At step S758, the title of the PG/CELL of the emergency broadcasting, recording start time, and length are displayed, and at step S760, the user is allowed to select the title to be played back. At step S762, the emergency recorded flag is reset, and the present process ends.

As described above, according to the present embodiment, the received emergency information and the management information can be recorded in the information recording medium substantially without changing the existing recording format. Moreover, the user can be notified that the emergency information has been recorded substantially without requiring the user's operation.

It is to be noted that the present invention is not limited as such to the above-described embodiment, and constituting elements can be modified and embodied without departing from the scope in an implementation stage. Various inventions can be formed by an appropriate combination of a plurality of constituting elements described in the above-described embodiment. For example, several constituting elements may be deleted from all constituting elements described in the embodiment. Furthermore, constituting elements over different embodiments may be appropriately combined.

**Claims**

1. An information recording medium which records a digital stream signal of a digital broadcasting system capable of broadcasting an emergency broadcasting program, the medium **characterized by** comprising:

   a data area (30, 134, 140) for recording the emergency broadcasting program; and
   a management area (20, 21) for recording management information of the emergency broadcasting program.

2. The information recording medium according to claim 1, **characterized in that** the management area (21) comprises an object management information recording area (SOBI_GI) of the digital stream signal, and the management information (Emergency_Flag) of the emergency broadcasting program is recorded in the object management information recording area (SOBI_GI).

3. An information recording apparatus which records information in an information recording medium in which a digital stream signal of a digital broadcasting system capable of broadcasting an emergency broadcasting program is recorded, the medium comprising a data area (30, 134, 140) for recording the emergency broadcasting program, and a management area (20, 21) for recording management information of the emergency broadcasting program, the apparatus **characterized by** comprising:

   means for detecting the emergency broadcasting program in the digital broadcasting; and
   means for recording the emergency broadcasting program in the data area, and recording the management information indicating that the emergency broadcasting program has been recorded in the management area, when the detecting means detects the emergency broadcasting program.

4. The information recording apparatus according to claim 3, **characterized by** further comprising:

   a first power supply of a broadcasting receiving unit;
   a second power supply of the whole apparatus;

means for activating the detecting means, when the first power supply is on even when the second power supply is off; and

means for turning on the second power supply in accordance with a detection result of the detecting means.

5. An information recording method which records information in an information recording medium in which a digital stream signal of a digital broadcasting system capable of broadcasting an emergency broadcasting program is recorded, the medium comprising a data area (30, 134, 140) for recording the emergency broadcasting program, and a management area (20, 21) for recording management information of the emergency broadcasting program, the method **characterized by** comprising the steps of:

detecting the emergency broadcasting program in the digital broadcasting; and

recording the emergency broadcasting program in the data area, and recording the management information indicating that the emergency broadcasting program has been recorded in the management area, when the detecting step detects the emergency broadcasting program.

6. The information recording method according to claim 5, **characterized by** further comprising the steps of:

activating the detecting step, when a first power supply of a broadcasting receiving unit is on even when a second power supply of the whole apparatus is off; and

turning on the second power supply in accordance with a detection result of the detecting step.

7. An information reproducing apparatus which reproduces information from an information recording medium in which a digital stream signal of a digital broadcasting system capable of broadcasting an emergency broadcasting program is recorded, the medium comprising a data area (30, 134, 140) for recording the emergency broadcasting program, and a management area (20, 21) for recording management information of the emergency broadcasting program, the apparatus **characterized by** comprising:

means for determining whether or not the management information of the emergency broadcasting program has been recorded in the management area, when a power supply of the whole apparatus is turned on;

means for searching the emergency broadcasting program recorded in the data area when it is determined that the management information of the emergency broadcasting program is recorded in the management area; and

means for displaying a search result of the searching means.

8. The information reproducing apparatus according to claim 7, **characterized in that** the displaying means displays a list of title names of the search results, and a cursor which selects a title to be played back.

9. The information reproducing apparatus according to claim 7, **characterized in that** the determining means determines whether or not the management information of the emergency broadcasting program has been recorded in the management area even at a menu display time, and information of the emergency broadcasting program is displayed in a menu display screen.

10. An information reproducing method which reproduces information from an information recording medium in which a digital stream signal of a digital broadcasting system capable of broadcasting an emergency broadcasting program is recorded, the medium comprising a data area (30, 134, 140) for recording the emergency broadcasting program, and a management area (20, 21) for recording management information of the emergency broadcasting program, the method **characterized by** comprising the steps of:

determining whether or not the management information of the emergency broadcasting program has been recorded in the management area, when a power supply of the whole apparatus is turned on;

searching the emergency broadcasting program recorded in the data area when it is determined that the management information of the emergency broadcasting program is recorded in the management area; and

displaying a search result of the searching steps.

11. The information reproducing method according to claim 10, **characterized in that** the displaying step displays a list of title names of the search results, and a cursor which selects a title to be played back.

12. The information reproducing method according to claim 10, **characterized in that** the determining step determines whether or not the management information of the emergency broadcasting program has been recorded in the management area even at a menu display time, and information of the emergency broadcasting program is displayed in a menu display screen.

FIG. 1A

100 Disk-shaped information storage medium

FIG. 1B

| ~110 | ~111 | ~112 | ~113 |
|---|---|---|---|
| Read-in aea | Volume/file atructure information area | Data area | Lead-out area |

FIG. 1C

| ~120 | ~121 | ~120 |
|---|---|---|
| General computer information recording area | AV data recording area | General computer information recording area |

FIG. 1D

| ~130 | ~122 | ~131 |
|---|---|---|
| AV data management information recording area | VR object group recording area | Stream object group recording area |

FIG. 1E

| ~132 | ~132 | | ~132 |
|---|---|---|---|
| Stream object | Stream object | · · · | Stream object |

FIG. 1F

| ~134 | ~134 | | ~134 |
|---|---|---|---|
| SOBU | SOBU | · · · · · · · · · · · · | SOBU |

FIG. 1G

| ~140 | ~140 | | ~140 |
|---|---|---|---|
| Packet_Group | Packet_Group | · · · · · · · · · · · · | Packet_Group |

Packet_Group length = 8 Packs

FIG. 1H

| ~160 |
|---|
| DVD-TS packet recording area |

FIG. 1I

| ~161 | ~162 | ~163 | ~162 | | ~162 |
|---|---|---|---|---|---|
| Packet_Group Header | MPEG-TS packet | IPAT | MPEG-TS packet | · · · | MPEG-TS packet |

EP 1 519 383 A1

| Program chain (EX_PGC) | | | | | | | ~11 |

| Program | | | | Program | ...... | Program | ~12* |

| 13 | 13 | 13 | 12 | 13 | 12 | | 13* | | ~13* |

| Cell | Cell | Cell | Cell | ...... | Cell | Cell | |

Playback time : designate playback place of cell by PTS — 10 Presentation control information layer

21

~20 Stream object control information layer — 23 VOB control information layer

| SOBI | SOBI | .... |
| SOBUI_ENT | ... SOBUI_ENT | SOBUI_ENT | ....... | 21 |

| VOBI | .... | ~24 |
| VOBUI_ENT | .... VOBUI_ENT | ~25 |

25

132    ~22 Global information    ~30 Stream object layer

| SOB | SOB | ... | ~132 |

| SOBU | SOBU | SOBU | ... | SOBU | ... |
~134
134

| VOB | ~36 |
... 

| VOBU | ... | ~37 |

16384Bytes

| Packet_Group | Packet_Group | .......... | Packet_Group |
~140           ~140                    140

For playback time of 1 second

| Pack | Pack | ... | ~38 ~38 |

~35 VOB layer

152Bytes  161    188Bytes  162    3Bytes  163    162

| Packet_Group Header | TS Packet_1 | IPAT | ... | TS Packet_85 |

# FIG.2

Root

DVD_HDVR

| HR_MANGER.IFO | HDVMG file |
| HR_MOVIEO.VRO | VR object file |
| HR_STRMx.SRO | SR object file |
| HR_MANGER.BUP | HDVMG backup file |
| HR_STILL.VRO | Still video object file |
| HR_AUDIO.VRO | Audio object file |

# F I G. 3

130 ⌐ HDVR_VMG

| 1310 | HDVR_VMGI |
| 1320 | ... |
| | STR_FIT |
| 1330 | Program chain information (ORG_EX_PGCI) |
| 1340 | Play list information (UD_EX_PGCIT/PL_SRPT) |
| 1350 | EX_TXTD_MG |
| 1360 | EX_MNFIT |

| | |
|---|---|
| Disk management identification information (VMG_ID/ESMG_ID) | 1311 |
| ... | |
| Version number of DVD video specifications (VERN) | 1312 |
| ... | |
| Start address of stream object control information (SFIT_SA) | 1313 |
| ... | |
| Start address of program chain information (ORG_EX_PGCI_SA) | 1315 |
| Start address of play list information (UD_EX_PGCI_SA) | 1316 |

FIG. 4

EP 1 519 383 A1

EP 1 519 383 A1

130 — HDVR_VMG

| |
|---|
| HDVR_VMGI 1310 |
| ... |
| STR_FIT 1320 |
| Program chain information (ORG_EX_PGCI) 1330 |
| Play list information (UD_EX_PGCIT/PL_SRPT) 1340 |
| EX_TXTD_MG 1350 |
| EX_MNFIT 1360 |

| |
|---|
| Stream file information table information (STR_FITI) 1321 |
| Stream file information #1 (STR_FI #1) 1322 |
| ... |
| Stream file information #n (STR_FI #n) 1322 |

FIG. 5

1321 — | Stream file information table information (STR_FITI) |
1322 — | Stream file information #1 (STR_FI #1) |
| ... |
1322 — | Stream file information #n (STR_FI #n) |

| Number of STR_FIs | ~13211 |
| End address of STR_FIT | ~13212 |

| General information of stream file information (STR_FI_GI) | ~13221 |
| Search pointer #1 of SOBI (SOBI_SRP #1) | ~13222 |
| ... | |
| Search pointer #K of SOBI (SOBI_SRP #K) | ~13222 |
| SOBI #1 | ~13223 |
| ... | |
| SOBI #K | ~13223 |

FIG. 6

| | |
|---|---|
| 13221 — General information of stream file information (STR_FI_GI) | File name (FILE_NAME) — 132211 |
| | Number of SOBI_SRPs — 132212 |
| 13222 — Search pointer #1 of SOBI (SOBI_SRP #1) | |
| ... | |
| 13222 — Search pointer #K of SOBI (SOBI_SRP #K) | SOB general i nformation (SOBI_GI) — 132231 |
| 13223 — SOBI #1 | SOB elementary stream information #1 — 132232 |
| ... | ... |
| 13223 — SOBI #K | SOB elementary stream information #n — 132232 |
| | SOB seamless information — 132233 |
| | SOB time map information (SOB_TMAPI) — 132236 |
| | SOB elementary stream grouping information (SOB_ES_GPI) — 132337 |

# FIG. 7

## FIG. 8

| | |
|---|---|
| 132231 | SOBI general information (SOBI_GI) |
| 132232 | SOB elementary stream information #1 |
| | ... |
| 132232 | SOB elementary stream information #n |
| 132233 | SOB seamless information |
| 132236 | SOB time map information (SOB_TMAPI) |
| 132337 | SOB elementary stream grouping information (SOB_ES_GPI) |

| | |
|---|---|
| SOB type (SOB_TY) | 13222101 |
| Packet type (PKT_TY) | 13222102 |
| Packet size (PKT_SZ) | 13222103 |
| Packet group size (PKT_GRP_SZ) | 13222104 |
| Number of packets (PKT_Ns) | 13222105 |
| Country code (COUNTRY_CODE) | 13222106 |
| Aplication format name (AP_FORMAT) | 13222107 |
| Service ID (SERVICE_ID) | 13243108 |
| Service type (SERVICE_TYPE) | 13243109 |
| PID of PMT packet (PMT_PID) | 13243110 |
| Original network ID (NETWORK_ID) | 13243111 |
| Transport stream ID (TS_ID) | 13243112 |
| PID of PCR packet (PCR_PID) | 13243113 |
| Default PID of this SOB (SOB_DEF_PID) | 13243114 |
| ID of registered descriptor (Format_ID) | 13243115 |
| Copy control information (CP_CTL_INFO) | 13243116 |
| Recording time of this SOB (SOB_REC_TM) | 13243117 |
| Sub-information of SOB_REC_TM (SOB_REC_TM_SUB) | 13243118 |
| Duration of this SOB (SOB_DURATION) | 13243119 |
| Start PTM of this SOB (SOB_S_PTM) | 13243120 |
| End PTM of this SOB (SOB_E_PTM) | 13243121 |
| Local time zone (LOCAL_TM_ZONE) | 13243122 |
| Number of preceding PCR packets represented by PCR_POS (PCR_POS_SHIFT) | 13243123 |
| PCR_POS bit shift of designated PCR packet (PCR_POS_SHIFT) | 13243124 |
| Number of elementary streams of this SOB (SOB_ES_Ns) | 13243125 |
| Number of video elementary streams of this SOB (SOB_V_ES_Ns) | 13243126 |
| Number of audio elementary streams of this SOB (SOB_A_ES_Ns) | 13243127 |
| Emergency flag (Emergency Flag) | 13243128 |

34

EP 1 519 383 A1

EP 1 519 383 A1

| SOBI general information (SOBI_GI) |
| SOB elementary stream information #1 |
| ... |
| SOB elementary stream information #n |
| SOB seamless information |
| SOB time map information (SOB_TMAPI) |
| SOB elementary stream grouping information (SOB_ES_GPI) |

132231

132232

132232

132233

132236

132337

| Elementary stream type (ES_TY) |
| Elementary stream PID (ES_PID) |
| Stream type in PMT (STREAM_TYPE) |
| Component tag of stream ID descriptor (COMPONENT_TAG) |
| Stream content of component descriptor (STREAM_CONTENT) |
| Component type of component descriptor (COMPONENT_TYPE) |
| Vide attribute (V_ATR) |
| Copy control information (CP_CTRL_INFO) |

13223201V

13223202V

13223203V

13223204V

13223205V

13223206V

13223207V

13223208V

FIG. 9

| SOB I general information (SOBI_GI) | 132231 |
| SOB elementary stream information #1 | 132232 |
| ... | |
| SOB elementary stream information #n | 132232 |
| SOB seamless information | 132233 |
| SOB time map information (SOB_TMAPI) | 132236 |
| SOB elementary stream grouping information (SOB_ES_GPI) | 132337 |

| Elementary stream type (ES_TY) | 13223201V |
| Elementary stream PID (ES_PID) | 13223202V |
| Stream type in PMT (STREAM_TYPE) | 13223203V |
| Component tagin stream ID descriptor (COMPONENT_TAG) | 13223204V |
| Stream content of component descriptor/audio component descriptor (STREAM_CONTENT) | 13223205V |
| Component type of component descriptor/audio component descriptor (COMPONENT_TYPE) | 13223206V |
| Simulcast group tag of audio component descriptor (SIMULCAST_GP_TAG) | 13223207V |
| Audio elementary stream attribute (A_ATR) | 13223208V |
| Audio language code (LANG_CODE) | 13223209A |
| Audio language code-2 (LANG_CODE2) | 13223210A |
| Copy control information (CP_CTRL_INFO) | 13223211A |

FIG. 10

| SOB I general information (SOBI_GI) |
|---|
| SOB elementary stream information #1 |
| ... |
| SOB elementary stream information #n |
| SOB seamless information |
| SOB time map information (SOB_TMAPI) |
| SOB elementary stream grouping information (SOB_ES_GPI) |

132231
132232
132232
132233
132236
132337

| Elementary stream type (ES_TY) |
|---|
| Elementary stream PID (ES_PID) |
| Stream type in PMT (STREAM_TYPE) |
| Component tag in stream ID descriptor (COMPONENT_TAG) |
| Stream content of component descriptor (STREAM_CONTENT) |
| Component type of component descriptor (COMPONENT_TYPE) |
| Copy control information (CP_CTRL_INFO) |

13223201D
13223202D
13223203D
13223204D
13223205D
13223206D
13223207D

# FIG.11

EP 1 519 383 A1

| | |
|---|---|
| 132231 | SOB I general information<br>(SOBI_GI) |
| 132232 | SOB elementary stream information #1 |
| | ... |
| 132232 | SOB elementary stream information #n |
| 132233 | SOB seamless information |
| 132236 | SOB time map information<br>(SOB_TMAPI) |
| 132337 | SOB elementary stream grouping information<br>(SOB_ES_GPI) |

| | |
|---|---|
| SOB time map general information<br>(SOB_TMAP_GI) | 1322361 |
| Elementary stream time map information #1<br>(ES_TMAPI #1) | 1322362 |
| ... | |
| Elementary stream time map information #q<br>(ES_TMAPI #q) | 1322362 |

FIG. 1 2

EP 1 519 383 A1

132231 — | SOB I general information (SOBI_GI) |

132232 — | SOB elementary stream information #1 |

| ... |

132232 — | SOB elementary stream information #n |

132233 — | SOB seamless information |

132236 — | SOB time map information (SOB_TMAPI) |

132337 — | SOB elementary stream grouping information (SOB_ES_GPI) |

| SOB_ES_GPI general information (SOB_ES_GPI_GI) | — 1323371

| ES_GPI search pointer #1 (ES_GPI_SRP #1) | — 1323372

| ... |

| ES_GPI search pointer #n (ES_GPI_SRP #n) | — 1323372

| ES grouping information #1 (ES_GPI #1) | — 1323373

| ... |

| ES grouping information #n (ES_GPI #n) | — 1323373

# FIG. 13

| 1323371 | SOB_ES_GPI general information (SOB_ES_GPI_GI) |
|---|---|
| 1323372 | ES_GPI search pointer #1 (ES_GPI_SRP #1) |
| | ... |
| 1323372 | ES_GPI search pointer #n (ES_GPI_SRP #n) |
| 1323373 | ES grouping information #1 (ES_GPI #1) |
| | ... |
| 1323373 | ES grouping information #n (ES_GPI #n) |

| | |
|---|---|
| ES_GPI general information (ES_GPI_GI) | 13233731 |
| ES_PID #1 | 13233732 |
| ... | |
| ES_PID #n | 13233732 |

# FIG.14

| b15 | b14 | b13 | b12 | b11 | b10 | b9 | b8 | b7 | b6 | b5 | b4 | b3 | b2 | b1 | b0 |
|---|---|---|---|---|---|---|---|---|---|---|---|---|---|---|---|
| Reserved | | Reserved | | Reserved | | Aplication Flag | | line21_switch_1 | line21_switch_2 | Horizontal resolution | | | | Reserved | |

## FIG. 15 A

| b7 | b6 | b5 | b4 | b3 | b2 | b1 | b0 |
|---|---|---|---|---|---|---|---|
| Multi_ling | Main_comp | Quality_indicator | | Sampling_rate | | | Reserved |

## FIG. 15 B

| b15 | b14 | b13 | b12 | b11 | b10 | b9 | b8 | b7 | b6 | b5 | b4 | b3 | b2 | b1 | b0 |
|---|---|---|---|---|---|---|---|---|---|---|---|---|---|---|---|
| CCI | | APS | | EPN | ICT | Reserved | | Retention | Retention_state | | | Reserved | | | |

## FIG. 15 C

EP 1 519 383 A1

SOB time map general information
(SOB_TMAP_GI) — 1322361

Elementary stream time map information #1
(ES_TMAPI #1) — 1322362

...

Elementary stream time map information #q
(ES_TMAPI #q) — 1322362

| | |
|---|---|
| ADR_OFS | 13223611 |
| SOBU_PB_TM_RNG | 13223612 |
| SOB_S_PKT_POS | 13223613 |
| SOB_E_PKT_POS | 13223614 |
| ES_TMAP_Ns | 13223615 |

| | |
|---|---|
| ES_TMAPI_GI | 13223621 |
| SOBU_ENT #1 | 13223622 |
| ... | |
| SOBU_ENT #j | 13223622 |

ADR_OFS
  Packet Group number (LB address) from file head to SOB head
SOBU_PB_TM_RNG
  Range of playback time of SOBU
  1 = 0.4s to 1.2s, 2 = 1s to 2s, 3 = 2s to 3s
SOB_S_PKT_POS
  Start Packet Group of head of SOB
  $1 \leqq SOB\_S\_PKT\_POS \leqq 85$
SOB_E_PKT_POS
  End Packet Group of head of SOB
  $1 \leqq SOB\_E\_PKT\_POS \geqq 85$

F I G. 1 6

| | |
|---|---|
| 13223621 | ES_TMAPI_GI |
| 13223622 | SOBU_ENT #1 |
| | ... |
| 13223622 | SOBU_ENT #j |

| | |
|---|---|
| ES_PID | 132225211 |
| ADR_OFS | 132225212 |
| ES_S_PTM | 132225213 |
| ES_S_PTM | 132225214 |
| SOBU_ENT NUMs | 132225215 |
| LAST_SOBU_E_PKT_POS | 132225216 |

ES_S_PTM : PTM at start time of the present ES

ES_E_PTM : PTM at end time of the present ES

LAST_SOBU_E_PKT_POS : Last TS packet group number of last ESOBU in packet group

FIG. 17

EP 1 519 383 A1

| | | |
|---|---|---|
| 13223621 | ES_TMAPI_GI | |
| 13223622 | SOBU_ENT #1 | |
| | ... | |
| 13223622 | SOBU_ENT #j | |

| | |
|---|---|
| 1st_Ref_PIC_SZ | 132236221 |
| SOBU_PB_TM (number of fields) | 132236222 |
| SOBU_SZ (number of PacketGPs) | 132236224 |
| SOBU_S_PKT_POS | 132236225 |
| PCR_POS | 132236226 |

(1) When video data is available

SOBU : (a) delimited at randomly accessible positions

(b) delimited at minimum of 0.4s (minimum VOBU / ESOBU_PB_TM_RNG = 0), 1s (minimum VOBU / ESOBU_PB_TM_RNG = 1), 2s(minimum VOBU / ESOBU_PB_TM_RNG = 2) except for last SOBU

(c) delimited at maximum of 1s (minimum VOBU / ESOBU_PB_TM_RNG = 0), 2s (minimum VOBU / ESOBU_PB_TM_RNG = 1), 3s (minimum VOBU / ESOBU_PB_TM_RNG = 2)

SOBU_SZ : the number of packet groups belonging to ESOBU
(fraction of head is counted ; rear fraction is not counted)

SOBU_S_PKT_POS : packet number (1 to 85) of head in packet group of ESOBU to start

Example   78PK-th   ESOBU_SZ = 3, ESOBU_START = 78

| ... | PKTGP | PKTGP | PKTGP | PKTGP | ... |
|---|---|---|---|---|---|

1st_Ref_PIC_SZ : LB count from head of ESOBU to end of Ref_PIC, 0xffffffff indicates that no Ref_PIC is included in SOBU

PCR_POS : PCR position indicated by PCR interval using address count from head of ESOBU, 0x0000 indicates that no PCR is available, LB count is given by PCR_POSx2 PCR_POS_SHIFT

(2) When video data is not available and audio data is available
  SOBU : delimited at the maximum interval of case (1)
  1st_Ref_PIC_SZ : number of last TS packets in audio frame at head of ESOBU
  PCR_POS : the same as case (1)

(3) When video data and audio data are not available and data broadcast is available
  SOBU : delimited at the maximum interval of case (1)
  1st_Ref_PIC_SZ : 0xffffffff (fixed)
  PCR_POS : 0xffffffff (fixed)

F I G. 1 8

EP 1 519 383 A1

EP 1 519 383 A1

130 ~ HDVR_VMG

| |
|---|
| 1310 ~ HDVR_VMGI |
| ... |
| 1370 ~ M_HDAVFIT |
| 1320 ~ ESFIT |
| 1330 ~ Program chain information |
| 1340 ~ Play list information |
| 1350 ~ TXTD_MG |
| 1360 ~ MNFIT |

| |
|---|
| ORG_EX_PGC information ~ 1331 |

| |
|---|
| UD_EX_PGCT information ~ 1341 |
| UD_EX_PGC search pointer #1 ~ 1342 |
| ... |
| UD_EX_PGC search pointer #r ~ 1342 |
| UD_EX_PGC Info #1 ~ 1343 |
| ... |
| UD_EX_PGC Info #s ~ 1343 |

FIG.19

EX_PGC information

| | |
|---|---|
| Number of programs | ~13311 |
| Number of CELL_SRPs | ~13312 |

| | |
|---|---|
| 1331~ | EX_PGC_GI |
| 1332~ | EX_PGI #1 |
| | ... |
| 1332~ | EX_PGI #p |
| 1333~ | EX_CELL_SRP #1 |
| | ... |
| 1333~ | EX_CELL_SRP #q |
| 1334~ | EX_CI #1 |
| | ... |
| 1334~ | EX_CI #q |

| | |
|---|---|
| Program type | ~13321 |
| Number of cells in program | ~13322 |
| PRIM_TXT information | ~13323 |
| IT_TXT SRP number | ~13324 |
| Representative_PIC information | ~13325 |
| Editor ID | ~13326 |
| Program index number (PG absolute number) | ~13327 |
| Program update date | ~13328 |
| MNFI number | ~13329 |

Program update date
  Date/time at a time when program management
  information is updated is stored
MNFI number
MNFI search pointer number

| | |
|---|---|
| Cell type | ~13341 |
| STI_FI number | ~13342 |
| Corresponding SOB number | ~13343 |
| ID to be referred to | ~13344 |
| C_EPI_Ns | ~13345 |
| Cell start PTS/ATS | ~13346 |
| Cell end PTS/ATS | ~13347 |
| C_EPI | ~13348 |

FIG.20

EP 1 519 383 A1

134 — SOBU | SOBU : 1Gop or 1s data (or more)

8 Packs

140 — 140

140 — | Packet_Group | Packet_Group | ...... | Packet_Group |

161 — 162 — 163 — 162 —

| Packet_Group_Header | MPEG-TS 1 packet | IPAT | MPEG-TS 2 packet | ...... | MPEG-TS 85 packet |

152 bytes | 188 bytes | 3 or 4 bytes

162

| Sync Pattern : synchronous pattern = 00FFA5A5 | — 151 |
| ATS : arrival time | — 152 |
| MNI | — 153 |

— 172 — 173 — 174 — 175 — 176 — 177 — 178 — 180

171 — | Sync byte | Transport error indicator | Payload unit start indicator | Transport priority | PID (packet identifier) | Transport scramble control | Adaptation field control | Continuity index | Adaptation field and / or payload |

Header 170 (4 bytes)

MPEG-TS packet 162 (188 bytes)

FIG.21

EP 1 519 383 A1

| 152 ⌐ | ATS : arrival time |
| 153 ⌐ | MNI |

ATS : 6 bytes

| PAT_base (38 to 0 bits) |
| PAT_exten (8 to 0 bits) |

PAT_base : counter value of 90 KHz
PAT_exten : counter value of 27 KHz
PAT = PAT_base / 90000Hz + PAT_exten / 27,000,000 Hz

IPAT : 3 bytes

| PAT_base (14 to 0 bits) |
| PAT_exten (8 to 0 bits) |

FIG.22

FIG.23

Standby

S12

Emergency
broadcasting received
?

Yes

No

S14

Determine program being received
as program to be recorded and
set emergency broadcasting flag

S18

Reserved time
?

Yes

No

S20

Determine reserved program as
program to be recorded and
set reserved recording flag

S16

Power activation process

Usual process

FIG.24

# FIG.25

- Usual process
- S22 Initialize
- S24 Display setting
- S26 Are emergency broadcasting flag and reserved recording flag set ?
  - Yes → S28 Set program or recording process to be performed
  - No → S30 Is emergency recorded flag set ?
    - Yes → S32 Emergency broadcasting display process
    - No → S34 Key input
- S36 Interpret input key
- S38 Menu process
- S40 Program setting process
- S42 Recording process
- S44 Playback process
- S46 Digital output process to STB
- S48 Edition process
- S50 Time search process
- Process in parallel for each task
- S52 Is emergency broadcasting flag set ?
  - Yes → S54 Set emergency recorded flag
  - No
- Standby

51

EP 1 519 383 A1

Edition process — S48

S62

EP edition | Edition contents | Play list preparation process

Copy, move

Deletion process

S64
EP edition process

S66
Copying / moving process

S68
Deletion process

S70
Play list preparation process

Set program update date (EX_IT_TXT, EX_MNFI)
(set one of EX_PGI, EX_CI, and VOB at changing time) — S72

Return

F I G. 2 6

Emergency broadcasting program detection process — S12

Take in TS packet and check PID — S82

S84

PMT ? — No

Yes

Read PMT and construct table inside — S86

S88

Emergency information descriptor ? — No

Yes

S90

Start_end_flag = 1 ? — No

Yes

Read EIT and construct table inside — S92

Set Service_ID, recording start time, recording duration, title, etc. — S94

Inform MPU of emergency broadcasting and supply emergency broadcasting information to MPU — S96

FIG.27

Recording process ◯ S42

Load file system data ～ S102

S104
Free space ? — No → "No recordable space available" S106

| Yes

S108
Digital broadcast ? — No → End

Yes | S112

To VR recording process ～ S110

Recording pre-process : write respective management areas (generate VMG), etc.

S114
Error ? — Yes

| No

Recording initial setup
Reset STC unit
Set write start address and write command in drive unit
Initialize formatter unit
Set CELL, SOBU, PG and PGC division (align process setup), etc.
～ S116

Recording start setup : Set data fetch start process from buffer in formatter unit
～ S118

Extract PAT from buffer, and determine PMT based on user's program setup
Extract PMT for stream to be recorded, and save PAT, PMT, NIT in work RAM 80A as management information
～ S120

◯ 1

FIG.28A

① 1

Generate ESI for number of streams from PMT —— S122

Buffer fetch process —— S124

S126
Recording
data stored in buffer memory =
predetermined size
?
No

Yes

Determine write address of drive unit,
and issue write command —— S128

S130
Segmentation
information fetch interrupt
generated
?
No

Yes

Fetch segmentation information from formatter unit —— S132

S134
Recording
end key input
?
No

Yes

Recording end process
Feth remaining segmentation information from formatter
unit & initialization
Write in management area
Write in VMG (prepare PGCI and STR_FIT : segmentation
information, I-PIC information, etc.) —— S136

FIG. 28 B

End

Buffer fetch process — S124

Receive TS packet — S152

S154
COG / NON_COG ?
— NON_COG → S156 Convert into peculiar group constitution

COG

S158 PCR ? — NO

Yes — S160
Set value of PCR to STC

S162
Head of packet group ? — No → S164
Set difference in ATS between previous TS and current TS as IPAT

Yes

S174
Set 00ffa5a5 to Sync_Pattern, store STC as ATS in packet group header, and store PTS in packet group header

S166
Byte length of IPAT = 3 bytes ?
> — Other

S172
Fill remainder of packet group with dummy
(IPAT = 01, TS packet = ALL 00)

S168
Arrange IPAT before TS packet

S170
Add TS packet to data area of packet group

S176
Is PACKET_GROUP constituted ? — No

Yes
S178
Store one PACKET_GROUP in buffer

Return

F I G. 29

1 packet group : 8 packs

| Same CCI, DSI in ES | Dummy data | Next packet group (value of new CCI, DSI) |

Packet data area

| ALL 00 : 188 bytes | ... | ALL 00 : 188 bytes |

ATI area (in packet group)

| IPAT = 01 | ... | IPAT = 01 |

F I G. 3 0

Recording pre-process ~ S112

S202
Is there
DVD_HDR directy
?
No → S204 Prepare DVD_HDR directy

Yes

S206
Does error occur
?
Yes → S208 "Error occurred in file system"
Return (error)

No

S210
Is there VMG
?
Yes → S212 Read VMG

No

S214
Is broadcasting system supported
?
Yes →
No → S216 "Broadcasting system is different"
Return (error)

Select broadcasting system of reception signal to be recorded
In case of internal tuner : Defalt
In case of external digital input :
   determine based on the value
   of Registration_Description
~ S218

S220
Is broadcasting system supported
?
No → S224 "Broadcasting system is different"
Return (error)

Yes

(1)

FIG. 31 A

①

Prepare VMG, detect data system from tuner, and set VMGI, etc. — S222

S226

Is broadcasting system recorded ? — No → Prepare SOB file of corresponding format and set recording of object in file — S228

Yes

Set adding of object after recorded SOB file — S230

S232

Is stream analyzable ? — No

Yes

Set 0 to SOB_COG/NON_COG — S234

Set 1 to ESOB_COG/NON_COG — S236

Return (OK)

FIG. 31B

ESI preparation process — S122

Check stream type in PSI, SI — S252

S254

Video stream / Stream type = component descriptor, audio component descriptor, or data encoding system descriptor ? \ Other stream

Audio stream — S260

Prepare new ESI indicating ES_TY = 0x40 based on read data

S256 — Prepare new ESI indicating ES_TY = 0 based on read data

S264 — Prepare new ESI indicating ES_TY = 0x80 based on read data

Fetch resolution data, aspect ratio, etc., and set them to V_ATR
Set ES_PID, STREAM_TYPE, COMPONENT_TAG to PMT
Set STREAM_COMPONENT, COMPONENT_TYPE based on component descriptor

S258

S266 — Set ES_PID, STREAM_TYPE, COMPONENT_TAG to PMT
Set DATA_COMP_ID, AD_DAT_COMP_INFO based on data encoding descriptor

S262 — Fetch sampling frequency, channel number, etc., and set them to A_ATR
Set ES_PID, STREAM_TYPE, COMPONENT_TAG to PMT
Set STREAM_COMPONENT, COMPONENT_TYPE, SIMULCAST_GP_TAG, LANG_CDE based on audio component descriptor

Prepare CP_CTL_INFO from CP information belonging to component tag corresponding to ES — S268

S270
Is there any other ES whose ESI has not been prepared ? — Yes

No
Return

FIG. 32

```
           ┌─────────────────────────────────────┐
           ( STR_FI preparation process          )──S136
           └─────────────────────────────────────┘
                              │
    S302 ╲            ╱───────┴───────╲        NON_COG              S304
          ╲─────────<  COG/NON_COG ?   >──────────────────┐         ╲
                     ╲───────┬───────╱                     ▼
    S306 ╲                   │ COG                 ┌──────────────────────┐
    ┌──────────────────────────────────────┐      │ PKT_TY = 0xff        │
    │ PKT_TY = 0x00 (MPEG_TS), 0x01 (DV     │      │ Convert into peculiar│
    │ system) Increment number of SOBI_SRPs │      │ MAP constitution     │
    │ by 1                                  │      └──────────────────────┘
    └──────────────────────────────────────┘                 │
                   │                                          │
    ┌──────────────────────────────────────┐                 │
    │ Set recording start time to          │                 │
    │ SOB_REC_TM, SOB_REC_TM_SUB. Fetch     │──S308           │
    │ and set SOB_S_PTM, SOB_E_PTM from     │                 │
    │ stream                                │                 │
    └──────────────────────────────────────┘                 │
                   │                                          │
    ┌──────────────────────────────────────┐                 │
    │ Set PCR_POS_SHIFT in accordance with  │──S310           │
    │ rate                                  │                 │
    └──────────────────────────────────────┘                 │
                   │                                          │
    S312 ╲         ╱───────┴───────╲           No             S316
          ╲───────<    TS stream ?  >──────────────┐           ╲
                  ╲───────┬───────╱                ▼
    S314 ╲              Yes │          ┌────────────────────────────────┐
    ┌──────────────────────────┐      │ PKT_GRP_SZ ← value corresponding │
    │ PKT_GRP_SZ ← 8. PKT_Ns ← │      │ to format to be recorded.        │
    │ 0x55. country_code ← set │      │ PKT_Ns ← value corresponding to  │
    │ country code of apparatus│      │ format to be recorded.           │
    │                          │      │ country_code ← set country code  │
    └──────────────────────────┘      │ of apparatus                     │
                   │                  └────────────────────────────────┘
                   │◄─────────────────────────┘
                   │
    ┌──────────────────────────────────────────────────────────────┐
    │ In case of BS, AP_FORMAT ← 1(ISDB-S), in case of terrestrial  │
    │ digital, AP_FORMAT ← 0(ISDB-T), read PAT at recording start   │──S318
    │ from work memory, and set TS_ID, NETWORK_PID, PMT_ID (PID of  │
    │ PMT for use in present SOB)                                   │
    └──────────────────────────────────────────────────────────────┘
                   │
    ┌──────────────────────────────────────────────────────────────┐
    │ Read PMT, NIT, EIT at recording start from work memory, and   │
    │ set SERVICE_ID (Program_number in PMT), Format_Id, version    │
    │ (value of REG_DEC), PCR_PID, SOB_Es_Ns, V_ES_Ns, A_ES_Ns      │──S320
    │ Set PID having smallest component tag value (additionally,    │
    │ value set by component group descriptor is preferential) as   │
    │ DEF_PID.                                                      │
    └──────────────────────────────────────────────────────────────┘
                   │
    ┌──────────────────────────────────────────────────────────────┐
    │ Determine ES to prepare TMAPI by component group descriptor   │──S322
    │ in EIT, and set Es_Tmap_Ns                                    │
    └──────────────────────────────────────────────────────────────┘
                   │
    ┌──────────────────────────────────────────────────────────────┐
    │ Set LB address at which recording has been started to ADR_OFS │──S324
    │ Prepare CP_CTL_IFO from whole CP information in PMT           │
    └──────────────────────────────────────────────────────────────┘
                   │◄─────────────────────────────────────────────────┘
    S326 ╲         ╱───────┴───────╲              No             S330
          ╲───────< Emergency        >──────────────┐            ╲
                  ╲ broadcasting ?  ╱                ▼
                   ╲───────┬───────╱          ┌──────────────────────┐
                     Yes │    S328            │ Reset emergency flag │
    ┌──────────────────────────┐              └──────────────────────┘
    │ Set emergency flag       │                         │
    └──────────────────────────┘◄────────────────────────┘
                   │
    ┌──────────────────────────────────────┐
    │ SOB structure setting process        │──S332
    └──────────────────────────────────────┘
                   │
    ┌──────────────────────────────────────┐
    │ Set edition date / time              │──S334
    └──────────────────────────────────────┘
                   │
           ┌───────────────┐
           (    Return     )
           └───────────────┘
```

F I G. 3 3

S332 — SOB structure setting process

S352 — Check recording time

S354 — Recording time ?

2 hours or less

4 hours or less

more than 4 hours

S356 — Prepare SOBU_ENTRY from SOBU_PB_TM_RNG = 0 delimitation information so that each SOBU is between 0.4 s and 1.0 s

S358 — Prepare SOBU_ENTRY from SOBU_PB_TM_RNG = 1 delimitation information so that each SOBU is between 1.0 s and 2.0 s

S360 — Prepare SOBU_ENTRY from SOBU_PB_TM_RNG = 2 delimitation information so that each SOBU is between 2.0 s and 3.0 s

S362 — Fetch component group descriptor from SI, PSI

S364 — Prepare ES_GPI from group information of component group descriptor

Return

F I G. 3 4

EP 1 519 383 A1

( CP_CTL_INFO preparation process )  ～S268

S402
Is there digital
copy control descriptor in SI, PSI
?
— No

S404
Yes
Fetch digital copy control descriptor

S406
Keep CCI in "copy free", "copy protect",
and change CCI from "copy once" to
"copy protect"
Set analog copy control value to APS

S408
Set copy free to CCI,
and set non-APS to APS

S410
Is there
contents use descriptor in SI, PSI
?
— No

S412
Yes
Fetch contents use descriptor

S414
Set ICT (resolution control),
EPN (internet output limitation)
ICT: set SI, PSI values
EPN : set 0 (prohibition or encryption),
because internet output is prohibited in
digital broadcasting
Set value of Retention (1 : temporary
storage prohibition, 0 : permission)
Set 1.5 hours (0x7) to Retention_state
in terrestrial digital case, set value set to
contents use descriptor in the case of BS

S416
Set ICT (resolution control),
EPN (internet output limitation)
ICT : set permission,
EPN : set 0 (prohibition or encryption),
because internet output is prohibited
in digital broadcasting
Set Retention = 0,
Retention_state = 00

( Return )

FIG.35

63

```
            ╭─────────────────────────────────────╮
            │    PGC preparation process          │⟋─S136
            ╰─────────────────────────────────────╯
                             │
                             ▼        S452
                    ╱─────────────────────╲         Yes
                   ╱   First recording in   ╲─────────────┐
                   ╲     this disk ?        ╱              │
                    ╲─────────────────────╱               │
                             │ No                         │
                             │         S456               │      S454
            ┌────────────────▼────────────────┐   ┌───────▼─────────┐
            │ Set to add PG after certain     │   │  Set ORG_PGC    │
            │ recorded PGC                    │   │                 │
            └────────────────┬────────────────┘   └───────┬─────────┘
                             │◄───────────────────────────┘
                             ▼
```

```
┌──────────────────────────────────────────────┐
│ PG_TY = 0                                      │
│ Cell_Ns = number of CELLs                      │
│ Set 0x12 to CHR of VMGI_MAT when               │
│ "jpn" is set to Language code of short type    │⟋─S458
│ event descriptor in EIT                        │
│ Second area of PRM_TXTI = problem name :       │
│ set event_name of short type event             │
│ descriptor in EIT.                             │
│ Set REP _PICTI.                                │
│ Set program update date / time                 │
│ (PGI, IT_TXT, MNFI)                            │
└───────────────────────┬────────────────────────┘
                        ▼
┌──────────────────────────────────────────────┐
│ Set maker ID of apparatus to LAST_MNF_ID       │
│ (set one of PGI, CI, VOB at change time)       │⟋─S460
│ Set absolute number of PG to PG_INDEX          │
└───────────────────────┬────────────────────────┘
                        ▼
┌──────────────────────────────────────────────┐
│ Set 2(streamer (SOB)) to CELL_TY               │
│ Set ESFI number to be referred                 │
│ Set number of ESOB to be referred              │
│ Set representative (video)                      │⟋─S462
│ PID / Component_Group_Id as ID to be           │
│ played back                                    │
│ Set playback start PTM, end PTM                │
└───────────────────────┬────────────────────────┘
                        ▼
              ╭───────────────────╮
              │     Return        │
              ╰───────────────────╯
```

# FIG.36

Start ~S44

S502
Disk check ? — NG.

S504
Error process

End

O.K S506
Recorded ? — No

S508
"not recorded"

End

Yes S510
Read VMG

User determines PG to be played back / started
(ORG_PGC, UD_PGC #1, UD_PGC #2) ~S512

Read PKT_TY from work memory ~S514

S516
Can system playback packet of this type ? — No

S518
"this packet is not played back by this system"

Yes S520
Determine SOB to be transferred based on CELLI
Read PMT, STI from SOBI

End S522

Determine PID to be played back from PMT, set PID to decoder unit (initial default PID), and initialize MPEG video decoder, SP decoder, Audio decoder. Set APS based on CCI, set APSON / OFF, APS type, etc. to video decoder. Set CGMSA with respect to video decoder by digital copy control based on CCI. Set 0 (scramble on or output prohibition), 1 (output as such) to output IC by value of EPN when there is digital output (IEEE 1394, internet, etc.) Limit resolution of picture, convert HD into SD when ICT is 0, and set output as such to output IC when ITC is 1

S524 ~ Process at cell transfer time

S536
Set next cell from PGCI

S526
Playback end ? — No

S538
Is decoder setting changed ? — No

Yes

S528
Error ? — Yes

S532
"read error"

S534
Playback end process

Return

Yes S540
Set decoder setting change by next sequence end code

No S530
Process at other playback end time

End

S542
Seamless connection ? — Yes

No S546
Set MPEG decoder to free run mode
Set seamless connection flag

F I G. 37

Process at cell playback time ———— S524

S552

Determine ESI, SOB file to be played back from CI, determine group to be played back from PID and ES_GI to be played back in CI, and fetch and set PID of other ES belonging to the group to each decoder. Determine start FP (LBN), end FP of cell from contents of ES_TMAPI. Determine start SOBU_ENTRY, end SOBU_ENTRY from start time, end time in CI Accumulate ENTRY length to target SOBU_ENTRY in ADR_OFS, obtain start address (LB = FP), end address
Set remaining cell length ? (end address - start address), reproduction start time to STC

Set start address to read, read length ———— S554

S556

Data length to read < remaining cell length ? —— No —— S560

Yes

S558

Remaining cell length ← (remaining cell length - data length to read) Set read length to default

S560 Set read length to remaining cell length. Set remaining cell length to 0

Set data read command to drive unit ————S562

No —— Transfer start ? —— S564

Yes

Is data for 1SOBU accumulated in buffer RAM ? —— No —— S566

Yes

Read data for 1SOBU from buffer RAM ———— S568

Buffer data decoder transfer process ———— S570

Read FP←(read FP + read length)
Set MPEG decoder to normal mode (Read & set SCR) ———— S572

S574 —— Transfer end (Last cell) ? —— No

Yes

No —— S576 —— Remaining cell length = 0 ? 

Yes

Return

F I G. 3 8

Buffer data decoder transfer process ⟩∽ S570

Check number of packet groups in buffer RAM
Set to process first packet group ∽ S602

Read target packet group header from buffer RAM
(Check packet group length and Sync_Pattern
to judge packet header) ∽ S604

· Fetch ATS, IPAT in header to calculate send
timing of each TS packet
· Send head of packet group to decoder (STB)
in accordance with ATS
· Set value obtained by adding value of IPAT to
previous ATS to second and subsequent values
· Discard subsequent values because they are
dummy when IPAT = 01 ∽ S606

Transfer data for 1 packet group to decoder unit
for each TS packet in accordance with send timing ∽ S608

S610

Transfer end
? — No

↓Yes

S612

Does packet
group remain in buffer RAM
? — Yes

S614

Set to process next packet group

↓No

Return

FIG. 39

```
                    ( Time search process )~ S50

         User sets title, playback time, stream number      ~ S652

         Determine PGI to be played back from title          ~ S654

                    Determine PGI, CI                         ~ S656

         Determine SOBI to be played back by SOB number in CI ~ S658

  Compare playback time with accumulated playback time
  (SOBU_PB_TM) of each SOBU to determine SOBU_Entry having    ~ S660
  value closest to playback time and shorter than playback time

  Obtain accumulated SUM (1st to (N-1)-th) of data length
  (SOBU_SZ) to target SOBU (N-th), and calculate address      ~ S662
  of head of SOBU: SUM L 8 (packs) + 1

  S664                      1ST_REF_PIC_SZ ≠ 0 ?

              < Is there I-Pic ? >                    Yes

                         No          S666

  Obtain address of previous SOBU : SUM - (previous SOBU_SZ)

                    1st_Ref_PIC_SZ ≠ 0

  Determine position of PCR from PCR address information
  (PCR_POS L2PCR_POS_SHIFT)                                    ~ S668

              Read PCR, and set PCR to STC                     ~ S670

  Set decode initialization and display start time
  (playback time designated by user) to decoder               ~ S672

  Set drive unit to start reading from address of
  reference picture                                            ~ S674
```

# FIG. 40

( Playback process )~ S44

Menu process — S38

Read VMG — S702   S704

Set to display thumbnail for each PG from PGCI information, and determine number of reduced pictures
Determine coordinate to display (first at upper right end)  Determine PG to be displayed first

Display reduced picture in target position in accordance with PGI — S706

S708
Is there emergency information ? — Yes → S710

No ↓   Display emergency mark under picture

S712
Is there other EP ? — No

S714  Yes ↓
Is next fourth picture ? — Yes → S716
Change display position to left lower end

S718  No ↓
Sixth picture display end ? — No → S720
Move display position to right by 1

S722  Yes ↓
Display page turn-over symbol

Wait until user selects picture — S724

S726
S728  Yes ← Page turn-over symbol ?

Set display start picture number to last display picture number +1

No ↓   S730
Read CELL number, PG number of selected picture

S732
Reduced picture registered ? — No

S734  Yes ↓
Set program update date/time (PGI, EPI)

S736
Is there any information in MNFI linked to PG belonging to the present EP ? — No

S738  Yes ↓
Set edition date/time to PG update date / time in MNFI

S740
Is there any information in IT_TXTI linked to PG belonging to the present EP ? — No

Yes ↓
S742 — Set edition date / time to PG update date / time in IT_TXTI

S744 — Set to playback picture from the read place

Return

F I G. 4 1

| | | |
|---|---|---|
| Title 1 | Title 2 | Earthquake information (emergency) |
| Title 4 | Title 5 | Tsunami information (emergency) |

# FIG.42

Emergency broadcasting display process ── S32

S752

Search SOB to which emergency flag is set from SOBI ──── Absent

Return

Present

Check PG / CELL to which SOB belongs, and determine PG / CELL to be displayed from PGCI ── S754

Display "emergency broadcasting has been received" ── S756

Display title of PG / CELL of emergency broadcasting, recording start time, length ── S758

User selects playback title ── S760

Set emergency recorded flag ── S762

Emergency broadcasting display process

F I G. 4 3

Emergency broadcasting has been received.

6ch Hanshin earthquake information 14:00 to 15:00
6ch Tsunami information 17:00 to 18:00 ◄

Not played back

F I G. 4 4

## EUROPEAN SEARCH REPORT

European Patent Office

**Application Number**

EP 04 02 2331

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 2003, no. 01, 14 January 2003 (2003-01-14) & JP 2002 262192 A (MATSUSHITA ELECTRIC IND CO LTD), 13 September 2002 (2002-09-13) | 1-3,5, 7-12 | G11B27/10 H04N5/76 H04N7/24 |
| Y | * paragraphs [0006], [0038] - [0047], [0054], [0059], [0060], [0069] - [0076] * | 4,6 | |
| Y | PATENT ABSTRACTS OF JAPAN vol. 2003, no. 12, 5 December 2003 (2003-12-05) & JP 2003 250112 A (SANYO ELECTRIC CO LTD), 5 September 2003 (2003-09-05) * paragraphs [0003], [0004], [0007] - [0010], [0023], [0027] - [0030] * | 4,6 | |
| A | | 1-3,5, 7-12 | |
| A | PATENT ABSTRACTS OF JAPAN vol. 2003, no. 12, 5 December 2003 (2003-12-05) & JP 2003 244600 A (MITSUBISHI ELECTRIC CORP), 29 August 2003 (2003-08-29) * abstract * | 1-12 | TECHNICAL FIELDS SEARCHED (Int.Cl.7) H04N G11B |
| A | EP 1 021 048 A (TOKYO SHIBAURA ELECTRIC CO) 19 July 2000 (2000-07-19) * the whole document * | 1-12 | |

The present search report has been drawn up for all claims

| Place of search | Date of completion of the search | Examiner |
|---|---|---|
| The Hague | 1 December 2004 | Maetz, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 04 02 2331

This annex lists the patent family members relating to the patent documents cited in the above-mentioned European search report.
The members are as contained in the European Patent Office EDP file on
The European Patent Office is in no way liable for these particulars which are merely given for the purpose of information.

01-12-2004

| Patent document cited in search report | Publication date | Patent family member(s) | Publication date |
|---|---|---|---|
| JP 2002262192 A | 13-09-2002 | NONE | |
| JP 2003250112 A | 05-09-2003 | NONE | |
| JP 2003244600 A | 29-08-2003 | NONE | |
| EP 1021048 A | 19-07-2000 | EP 1021048 A2 | 19-07-2000 |
| | | JP 2000268537 A | 29-09-2000 |
| | | JP 2002191024 A | 05-07-2002 |
| | | JP 2002175670 A | 21-06-2002 |
| | | JP 3559541 B2 | 02-09-2004 |
| | | JP 2002165187 A | 07-06-2002 |
| | | JP 2002157840 A | 31-05-2002 |
| | | JP 2002175671 A | 21-06-2002 |
| | | US 2003059196 A1 | 27-03-2003 |
| | | US 2003059206 A1 | 27-03-2003 |
| | | US 2003059207 A1 | 27-03-2003 |
| | | US 2003059208 A1 | 27-03-2003 |
| | | US 2003133699 A1 | 17-07-2003 |
| | | US 2001009604 A1 | 26-07-2001 |
| | | US 2001010755 A1 | 02-08-2001 |
| | | US 2001009605 A1 | 26-07-2001 |
| | | US 2001012443 A1 | 09-08-2001 |
| | | US 2001014201 A1 | 16-08-2001 |

EPO FORM P0459

For more details about this annex : see Official Journal of the European Patent Office, No. 12/82